# EUROPÄISCHE PATENTANMELDUNG

(11) **EP 4 358 490 A1**
(43) Veröffentlichungstag der Anmeldung: **24.04.2024**
(21) Anmeldenummer: 22202870.6
(22) Anmeldetag: 20.10.2022
(51) Int. Cl.: H04L 51/10, H04L 51/18

(54) **BILDGESTEUERTES INITIIEREN VON BEFEHLEN AUF EINEM SERVER IN EINEM KOMMUNIKATIONSNETZWERK MITHILFE EINES MOBILEN KOMMUNIKATIONSGERÄTES UND EINES KÜNSTLICHEN INTELLIGENZMODULS**

(71) Anmelder: Brandt, Alexander, 51149 Köln (DE); Korth, Manuel, 22941 Bargteheide (DE)
(72) Erfinder: Brandt, Alexander, 51149 Köln (DE); Korth, Manuel, 22941 Bargteheide (DE)
(74) Vertreter: Borrmann, Eric

(57) **Zusammenfassung**

Die Erfindung betrifft ein Verfahren zur Kommunikation in einem Kommunikationsnetzwerk, wobei eine Bilddatei von einer auf einer Fläche dargestellten Notiz mit sprachlichen Elemente mithilfe des mobilen Kommunikationsgerätes erstellt wird und die sprachlichen Elemente der Notiz mithilfe eines Texterkennungsmoduls erkannt werden und ein Teil von sprachlichen Elementen eines Zentralservers des Kommunikationsnetzwerkes in Abhängigkeit von einer jeweiligen Ähnlichkeit zwischen den jeweiligen sprachlichen Elementen des Zentralservers und den sprachlichen Elementen der Notiz mithilfe eines künstlichen Intelligenzmoduls (KI-Modul) des Kommunikationssystems ausgewählt wird und zumindest ein Server der Server in Abhängigkeit des ausgewählten Teils der sprachlichen Elemente des Zentralservers ausgewählt wird und eine Ausführung eines Befehls in Abhängigkeit des ausgewählten Teils der sprachlichen Elemente des Zentralservers initiiert wird, wobei der Befehl auf dem ausgewählten Server ausgeführt wird.

## Beschreibung

Die Erfindung betrifft ein Kommunikationsnetzwerk, das ein mobiles Kommunikationsgerät, einen Zentralserver und Server umfasst. Die Erfindung betrifft weiterhin ein Verfahren zur Kommunikation in dem Kommunikationsnetzwerk und ein Computerprogrammprodukt zur Durchführung des Verfahrens.

Es ist bekannt, Mobilgeräte in Kommunikationsnetzwerken zur Kommunikation zwischen den Mobilgeräten und Servern zu verwenden. Beispielsweise können mithilfe von Mobilgeräten Transaktionen auf Servern eines Kommunikationsnetzwerkes ausgelöst werden. Üblicherweise können die Mobilgeräte per Touchscreen bedient werden, um Befehle auszulösen, die die Transaktionen auf den Servern auslösen.

Im Folgenden wird ein Verfahren zur Kommunikation in einem Kommunikationsnetzwerk vorgeschlagen. Das Kommunikationsnetzwerk umfasst ein mobiles Kommunikationsgerät, einen Zentralserver und Server. Auf dem Zentralserver sind jeweilige sprachliche Elemente gespeichert, die jeweils zumindest einem jeweiligen Server der Server zugeordnet sind. Des Weiteren sind die jeweiligen sprachlichen Elemente jeweils jeweiligen numerischen Werten zugeordnet. Das Kommunikationsnetzwerk ist derart eingerichtet, dass auf dem jeweiligen Server jeweilige Befehle jeweils in Abhängigkeit der jeweiligen sprachlichen Elemente, die dem jeweiligen Server zugeordnet sind, ausführbar sind. Vorzugsweise ist auf dem jeweiligen Server ein jeweiliger Satz von Befehlen ausführbar. Der jeweilige Satz von Befehlen weist die jeweiligen Befehle auf, die jeweils in Abhängigkeit der jeweiligen sprachlichen Elemente, die dem jeweiligen Server zugeordnet sind, ausführbar sind.

Das vorgeschlagene Verfahren weist die folgenden Schritte auf.

In einem ersten Schritt wird eine Bilddatei von einer auf einer Fläche dargestellten Notiz mithilfe des mobilen Kommunikationsgerätes erstellt. Die Notiz weist sprachliche Elemente auf. In einem zweiten Schritt werden die sprachlichen Elemente der Notiz in Abhängigkeit von der Bilddatei und mithilfe eines Texterkennungsmoduls des Kommunikationsnetzwerkes erkannt. In einem dritten Schritt werden Informationen über die sprachlichen Elemente der Notiz von dem mobilen Kommunikationsgerät zu dem Zentralserver über eine erste Kommunikationsverbindung zwischen dem mobilen Kommunikationsgerät und dem Zentralserver übertragen. In einem vierten Schritt wird ein Teil der sprachlichen Elemente des Zentralservers in Abhängigkeit von einer jeweiligen Ähnlichkeit zwischen den jeweiligen sprachlichen Elementen des Zentralservers und den sprachlichen Elementen der Notiz mithilfe eines künstlichen Intelligenzmoduls (KI-Modul) des Kommunikationsnetzwerks unter Verwendung der jeweiligen numerischen Werte ausgewählt. Der ausgewählte Teil der sprachlichen Elemente weist eine größere Ähnlichkeit zu den sprachlichen Elementen der Notiz als die übrigen sprachlichen Elemente des Zentralservers auf. Die übrigen sprachlichen Elemente sind diejenigen sprachlichen Elemente des Zentralservers, die nicht den ausgewählten Teil der sprachlichen Elemente aufweisen.

In einem fünften Schritt wird zumindest ein Server der Server ausgewählt, wobei dem ausgewählten Server zumindest der ausgewählte Teil der sprachlichen Elemente des Zentralservers zugeordnet ist.

In einem sechsten Schritt wird eine Ausführung zumindest eines Befehls der Befehle, die auf dem ausgewählten Server ausführbar sind, über eine zweite Kommunikationsverbindung zwischen dem zumindest einen ausgewählten Server und dem Zentralserver in Abhängigkeit des ausgewählten Teils der sprachlichen Elemente initiiert, wobei der Befehl auf dem ausgewählten Server ausgeführt wird.

Der Ausdruck "Modul", wie er hierin benutzt wird, beschreibt eine beliebige bekannte oder später entwickelte Hardware, Software, Firmware, Künstliche Intelligenz, Fuzzy-Logik oder Kombination aus einer Hardware, Software, Firmware, Künstliche Intelligenz und/oder Fuzzy-Logik, die in der Lage ist, die mit dem jeweiligen "Modul" assoziierte Funktionalität auszuführen. So kann das KI-Modul beispielsweise ein ausführbares Computerprogramm mit Anweisungen umfassen. Eine Ausführung der Anweisungen auf einem Prozessor des Zentralservers kann insbesondere ein Auswählen des Teils der sprachlichen Elemente des Zentralservers unter Verwendung der jeweiligen numerischen Werte bewirken. Insbesondere kann durch die Ausführung der Anweisungen der unten genannte Vergleichsvektor, insbesondere nach einer der unten beschriebenen Varianten, erzeugt werden.

Die jeweiligen sprachlichen Elemente, die auf dem Zentralserver gespeichert sind, werden in dieser Offenbarung auch als jeweilige sprachliche Elemente des Zentralservers oder verkürzt als jeweilige sprachliche Elemente bezeichnet. Die jeweiligen sprachlichen Elemente des Zentralservers umfassen bevorzugt jeweilige Schriftzeichen, wie Buchstaben, Ziffern und/oder Sonderzeichen. Analog umfassen die sprachlichen Elemente der Notiz bevorzugt Schriftzeichen, wie Buchstaben, Ziffern und/oder Sonderzeichen. Insbesondere umfassen die jeweiligen sprachlichen Elemente des Zentralservers jeweils eine Silbe, zwei oder mehrere Silben und/oder ein Wort, zwei oder mehrere Wörter. Analog umfassen die sprachlichen Elemente der Notiz bevorzugt eine Silbe, zwei oder mehrere Silben und/oder ein Wort, zwei oder mehrere Wörter.

Die jeweiligen sprachlichen Elemente des Zentralservers bilden in den meisten Fällen eine jeweilige Gruppe von Schriftzeichen aus. Im Folgenden werden die jeweiligen sprachlichen Elemente des Zentralservers auch als jeweilige Gruppe von Schriftzeichen des Zentralservers, oder abgekürzt als jeweilige Gruppe von Schriftzeichen, bezeichnet, da in der Regel die jeweiligen sprachlichen Elemente jeweils mehr als ein Schriftzeichen aufweisen. Die jeweilige Gruppe von Schriftzeichen ist demnach gleichbedeutend zu den jeweiligen sprachlichen Elementen. Entsprechend bildet der ausgewählte Teil der sprachlichen Elemente eine ausgewählte Gruppe von Schriftzeichen von den Gruppen von Schriftzeichen. Analog werden die sprachlichen Elemente der Notiz im Folgenden auch als Gruppe von Schriftzeichen der Notiz bezeichnet. Im Folgenden werden das vorgeschlagene Verfahren und Varianten hiervon der Einfachheit halber anhand der Gruppe von Schriftzeichen der Notiz als alleinige Gruppe von Schriftzeichen der Notiz beschrieben. Es versteht sich von selbst, dass die Notiz derart viele sprachliche Elemente aufweisen kann, dass die sprachlichen Elemente der Notiz prinzipiell auch in zwei oder mehrere Gruppen von Schriftzeichen eingeteilt werden können. Für jede Gruppe von Schriftzeichen der Notiz kann das vorgeschlagene Verfahren oder eine Variante hiervon analog wie es für die Gruppe von Schriftzeichen der Notiz beschrieben ist angewendet werden.

Auf dem Zentralserver sind die Gruppen von Schriftzeichen bevorzugt derart gespeichert, dass mithilfe eines jeweiligen Datenverarbeitungsbefehls die Gruppen von Schriftzeichen bevorzugt jeweils einzeln auslesbar sind und bevorzugt jeweils einzeln, bevorzugt mithilfe des Prozessors des Zentralservers, verarbeitbar sind.

Die Bilddatei von der Notiz wird bevorzugt mithilfe einer Kamera des mobilen Kommunikationsgerätes, im Folgenden auch als Mobilgerät bezeichnet, erstellt. Die sprachlichen Elemente der Notiz sind auf der Fläche bevorzugt handschriftlich oder in maschineller Schrift dargestellt. Prinzipiell können die sprachlichen Elemente der Notiz auch in Form einer Mischform aus handschriftlichen Zeichen und maschinell verfassten Zeichen ausgebildet sein. Die Fläche ist in den meisten Anwendungsfällen eine Oberfläche eines Papiers. Prinzipiell können die sprachlichen Elemente der Notiz auf jeder denkbaren Oberfläche abgebildet sein. Demnach kann die Fläche jede mögliche Oberfläche sein, auf der die sprachlichen Elemente der Notiz in Schriftform erstellt werden können. Beispielsweise kann die Fläche auch ein Bildschirm sein.

Vorteilhafterweise weist die Fläche einen ebenen Verlauf auf. Dies stellt jedoch keine notwendige Bedingung zur Ausführung des vorgeschlagenen Verfahrens dar. Jedoch kann der ebene Verlauf unter Umständen das Erkennen der sprachlichen Elemente der Notiz in Abhängigkeit von der Bilddatei mithilfe des Texterkennungsmoduls erleichtern.

Die Bilddatei weist die Informationen über die sprachlichen Elemente der Notiz bevorzugt in Form einer Rastergrafik auf. Die Rastergrafik enthält Helligkeits- oder Farbwerte, sogenannte Pixel, und bevorzugt Informationen über eine jeweilige relative Position der Helligkeits- beziehungsweise Farbwerte zueinander. Die Bilddatei enthält in den meisten Fällen genügend Informationen über die sprachlichen Elemente der Notiz, um beispielsweise die Schriftzeichen der sprachlichen Elemente zu reproduzieren. Mit anderen Worten können die sprachlichen Elemente mithilfe der Bilddatei erneut auf einer weiteren Fläche reproduziert, insbesondere dargestellt, werden.

Das Texterkennungsmodul kann in Form einer Texterkennungssoftware in dem Mobilgerät integriert sein. In diesem Fall werden die Informationen über die sprachlichen Elemente der Notiz bevorzugt in Form eines Textes, insbesondere in Form einer Textdatei, von dem Mobilgerät zu dem Zentralserver über die erste Kommunikationsverbindung übertragen.

Gemäß einer weiteren Variante kann das Texterkennungsmodul in dem Zentralserver integriert sein, beispielsweise in Form der Texterkennungssoftware auf einem Speicher des Zentralservers abgespeichert sein. In diesem Fall können die Informationen über die sprachlichen Elemente der Notiz in Form der Bilddatei von dem Mobilgerät zu dem Zentralserver übertragen werden. Bei dieser Variante wird der dritte Schritt des Verfahrens vor dem zweiten Schritt des Verfahrens ausgeführt. Generell schränkt die Nummerierung der Schritte des Verfahrens eine Reihenfolge bei einer Ausführung der Schritte des Verfahrens nicht ein.

Das Texterkennungsmodul ist bevorzugt ausgebildet und eingerichtet, ein Format der Bilddatei in ein Textformat, insbesondere in die Textdatei, umzuwandeln. Hierbei bleiben die Informationen über die sprachlichen Elemente der Notiz weitestgehend, insbesondere vollständig, erhalten. Mit anderen Worten werden mithilfe des Texterkennungsmoduls die sprachlichen Elemente der Notiz in dem Textformat bereitgestellt. Dies ermöglicht es, dass die sprachlichen Elemente der Notiz, insbesondere für Vergleiche mit den sprachlichen Elementen des Zentralservers, verarbeitet werden können.

So kann beispielsweise das Texterkennungsmodul ausgebildet und eingerichtet sein, die Rastergrafik in die Textdatei umzuwandeln, die im ASCII-Code verfasst ist. Insbesondere ist das Texterkennungsmodul ausgebildet und eingerichtet, die Schriftzeichen der sprachlichen Elemente der Notiz anhand der Pixel der Bilddatei zu erkennen und den Schriftzeichen ein jeweiliges Zeichen zuzuordnen. Die Textdatei umfasst die Zeichen. Das jeweilige Zeichen ist bevorzugt ein jeweiliges Zeichen einer Bit-Zeichenkodierung, wie zum Beispiel der ASCII-Kodierung. Ein Erkennen der Schriftzeichen erfolgt bevorzugt mithilfe eines oder mehrerer neuronaler Netze des Texterkennungsmoduls.

Die erste Kommunikationsverbindung weist bevorzugt zumindest eine Mobilfunkverbindung von dem Mobilgerät zu einem Mobilfunkmast auf. Die erste Kommunikationsverbindung kann weiterhin eine Datenverbindung zwischen dem Mobilfunkmast und dem Zentralserver umfassen. Die zweite Kommunikationsverbindung kann beispielsweise durch das Internet oder ein LAN bereitgestellt sein.

Praktischerweise wird der ausgewählte Teil der sprachlichen Elemente mithilfe des KI-Moduls bestimmt. Der ausgewählte Teil der sprachlichen Elemente ist insbesondere eine ausgewählte Gruppe von Schriftzeichen der Gruppen von Schriftzeichen des Zentralservers. Die größere Ähnlichkeit der sprachlichen Elemente des ausgewählten Teils zu den sprachlichen Elementen der Notiz im Vergleich zu den übrigen sprachlichen Elementen des Zentralservers kann insbesondere derart verstanden werden, dass die übrigen sprachlichen Elemente, das heißt die übrigen Gruppen von Schriftzeichen, des Zentralservers im Durchschnitt eine geringere Ähnlichkeit zu den sprachlichen Elementen der Notiz aufweisen als der ausgewählte Teil der sprachlichen Elemente des Zentralservers zu den sprachlichen Elementen der Notiz aufweist. Prinzipiell ist es also möglich, dass es neben dem ausgewählten Teil der sprachlichen Elemente auch noch weitere sprachliche Elemente, das heißt weitere Gruppen von Schriftzeichen, des Zentralservers gibt, die ähnlicher zu den sprachlichen Elementen der Notiz als der ausgewählte Teil der sprachlichen Elemente sind. Dies wäre jedoch einer Ungenauigkeit des KI-Moduls geschuldet.

Vorteilhafterweise ist das KI-Modul ausgebildet und eingerichtet, den ausgewählten Teil der sprachlichen Elemente des Zentralservers derart zu bestimmen, dass die übrigen sprachlichen Elemente des Zentralservers im Durchschnitt eine geringere Ähnlichkeit zu den sprachlichen Elementen der Notiz aufweisen als der ausgewählte Teil der sprachlichen Elemente des Zentralservers zu den sprachlichen Elementen der Notiz aufweist.

Insbesondere ist das KI-Modul ausgebildet und eingerichtet, den ausgewählten Teil der sprachlichen Elemente derart zu bestimmen, dass zumindest der ausgewählte Teil der sprachlichen Elemente, die dem ausgewählten Server zugeordnet sind, ähnlicher zu den sprachlichen Elementen der Notiz ist als es die übrigen sprachlichen Elemente des Zentralservers im Durchschnitt zu den sprachlichen Elementen der Notiz sind.

Bevorzugt wird der ausgewählte Server derart unter den Servern ausgewählt, dass der ausgewählte Teil der sprachlichen Elemente, die dem ausgewählten Server zugeordnet sind, am ähnlichsten von allen sprachlichen Elementen des Zentralservers zu den sprachlichen Elementen der Notiz ist.

Gemäß einer möglichen Ausführungsform kann ein Ähnlichkeitsmaß jeweils für die jeweiligen sprachlichen Elemente, das heißt für die jeweilige Gruppe von Schriftzeichen, des Zentralservers bestimmt werden. Das jeweilige Ähnlichkeitsmaß kann eine jeweilige Ähnlichkeit zwischen der jeweiligen Gruppe von Schriftzeichen des Zentralservers und den sprachlichen Elementen der Notiz angeben. Vorteilhafterweise wird das jeweilige Ähnlichkeitsmaß durch eine Ausführung der Anweisungen des Computerprogrammes des KI-Moduls auf dem Prozessor des Zentralservers ermittelt.

Insbesondere kann der ausgewählte Server beispielsweise derart unter den Servern ausgewählt werden, dass das Ähnlichkeitsmaß, dass die Ähnlichkeit zwischen zumindest dem ausgewählten Teil der sprachlichen Elemente, die dem ausgewählten Server zugeordnet sind, und den sprachlichen Elementen der Notiz angibt, ein vorgegebenes Ähnlichkeitsmaß überschreitet oder, je nach Ausgestaltung des Ähnlichkeitsmaßes, unterschreitet.

Alternativ oder zusätzlich kann der ausgewählte Server beispielsweise derart unter den Servern ausgewählt werden, dass das Ähnlichkeitsmaß, dass die Ähnlichkeit zwischen zumindest dem ausgewählten Teil der sprachlichen Elemente, die dem ausgewählten Server zugeordnet sind, und den sprachlichen Elementen der Notiz angibt, den größten oder, je nach Ausgestaltung des Ähnlichkeitsmaßes, kleinsten Wert unter allen Ähnlichkeitsmaßen aufweist.

Bei einer Durchführung eines Algorithmus des KI-Moduls zur Bestimmung des ausgewählten Teils der sprachlichen Elemente beeinflusst die jeweilige Ähnlichkeit zwischen den jeweiligen sprachlichen Elementen des Zentralservers und den sprachlichen Elementen der Notiz bevorzugt zumindest ein Ergebnis des Algorithmus des KI-Moduls. Daher erfolgt das Auswählen des zumindest einen Servers der Server in Abhängigkeit von der jeweiligen Ähnlichkeit zwischen den jeweiligen sprachlichen Elementen des Zentralservers und den sprachlichen Elementen der Notiz mithilfe des KI-moduls.

Bevorzugt stellt der Zentralserver eine jeweilige Zuordnung bereit, die dem jeweiligen Server die jeweiligen sprachlichen Elemente zuordnet. Hierbei können die Server jeweils mithilfe eines jeweiligen Identifizierungsmerkmals spezifiziert sein. Gemäß einer beispielhaften Ausgestaltung können die Identifizierungsmerkmale Zahlen sein, wobei bevorzugt jeweils eine Zahl der Zahlen jeweils nur einen der Server spezifiziert. Die jeweilige Zuordnung ordnet bei dieser Ausgestaltung der jeweiligen Gruppe von Schriftzeichen, das heißt den jeweiligen sprachlichen Elementen, bevorzugt zumindest eines der Identifizierungsmerkmale zu. Beispielsweise kann die jeweilige Gruppe von Schriftzeichen in einem jeweiligen ersten Datenobjekt in dem Zentralserver gespeichert sein, wobei das jeweilige erste Datenobjekt das jeweilige Identifizierungsmerkmal aufweist, insbesondere speichert, das denjenigen Server spezifiziert, welcher der jeweiligen Gruppe von Schriftzeichen des jeweiligen ersten Datenobjektes zugeordnet ist. Eine Anzahl der ersten Datenobjekte ist bevorzugt gleich einer Anzahl der Gruppen von Schriftzeichen des Zentralservers.

Das jeweilige erste Datenobjekt kann beispielsweise eine jeweilige Zeile einer ersten Matrix sein. Die jeweilige Zeile der ersten Matrix weist nach diesem Beispiel sowohl die jeweilige Gruppe von Schriftzeichen, beispielsweise in einem ersten Spaltenelement der jeweiligen Zeile, als auch das jeweilige Identifizierungsmerkmal auf, beispielsweise in einem zweiten Spaltenelement der jeweiligen Zeile, das denjenigen Server spezifiziert, welcher der jeweiligen Gruppe von Schriftzeichen des jeweiligen ersten Datenobjektes zugeordnet ist.

Ein Bereitstellen der oben beschriebenen jeweiligen Zuordnung zwischen der jeweiligen Gruppe von Schriftzeichen und dem jeweiligen Server kann als eine erste Funktion des Zentralservers betrachtet werden.

Mithilfe des jeweiligen Servers werden bevorzugt jeweilige Funktionen bereitgestellt, die mit Hilfe der jeweiligen Befehle des jeweiligen Satzes von Befehlen ausgelöst und/oder realisiert werden können. Mithilfe der Server und/oder des Zentralservers wird bevorzugt für den jeweiligen Server jeweils ein jeweiliger Satz von Zuordnungen zwischen den jeweiligen Befehlen, die auf dem jeweiligen Server ausführbar sind, im Folgenden auch als jeweilige Serverbefehle bezeichnet, und den jeweiligen sprachlichen Elementen, die dem jeweiligen Server zugeordnet sind, bereitgestellt. Vorteilhafterweise ist der jeweilige Satz von Zuordnungen zwischen den jeweiligen Serverbefehlen und den jeweiligen sprachlichen Elementen, das heißt der jeweiligen Gruppe von Schriftzeichen, die dem jeweiligen Server zugeordnet sind, im Folgenden auch als jeweilige Befehlszuordnungen bezeichnet, auf dem jeweiligen Server und/oder auf dem Zentralserver gespeichert. Dies stellt eine Variante dar, wie das Kommunikationsnetzwerk eingerichtet sein kann, dass die jeweiligen Befehle auf dem jeweiligen Server in Abhängigkeit der jeweiligen sprachlichen Elemente ausführbar sind. Unter Verwendung der jeweiligen Befehlszuordnung können die jeweiligen Befehle in Abhängigkeit der jeweiligen sprachlichen Elemente aufgerufen und damit ausgeführt werden.

Der Befehl, dessen Ausführung im sechsten Schritt ausgelöst wird, ist insbesondere dem ausgewählten Teil der sprachlichen Elemente zugeordnet. Aus diesem Grund wird dieser Befehl im Folgenden als ausgewählter Befehl bezeichnet. Eine Zuordnung des ausgewählten Befehls zu dem ausgewählten Teil der sprachlichen Elemente kann vorteilhafterweise mithilfe der Befehlszuordnungen gefunden werden.

Die Befehlszuordnungen können beispielsweise mithilfe von zweiten Datenobjekten oder den ersten Datenobjekten bereitgestellt werden. Beispielsweise kann die jeweilige Gruppe von Schriftzeichen und derjenige Serverbefehl, der der jeweiligen Gruppe von Schriftzeichen durch die jeweilige Befehlszuordnung zugeordnet ist, in einem jeweiligen zweiten Datenobjekt der zweiten Datenobjekte oder in dem jeweiligen ersten Datenobjekt der ersten Datenobjekte zusammen gespeichert sein. Praktischerweise sind die zweiten Datenobjekte auf dem Zentralserver gespeichert. Eine Anzahl der zweiten Datenobjekte ist bevorzugt gleich der Anzahl der Gruppen von Schriftzeichen des Zentralservers.

Das jeweilige zweite Datenobjekt kann beispielsweise eine jeweilige Zeile einer zweiten Matrix sein. Die jeweilige Zeile der zweiten Matrix weist nach diesem Beispiel sowohl die jeweilige Gruppe von Schriftzeichen, beispielsweise in einem ersten Spaltenelement der jeweiligen Zeile, als auch den jeweiligen Serverbefehl auf, beispielsweise in einem zweiten Spaltenelemente derjeweiligen Zeile, das denjenigen Serverbefehl spezifiziert, welcher der jeweiligen Gruppe von Schriftzeichen des jeweiligen zweiten Datenobjektes zugeordnet ist.

Generell können die jeweiligen Serverbefehle derart ausgebildet sein, dass ein Ausführen derjeweiligen Serverbefehle ein Steuern von Hardwareelementen des jeweiligen Servers, eines jeweiligen weiteren Servers, der mit dem jeweiligen Server zum Datenaustausch verbunden oder verbindbar ist, und/oder einer jeweiligen Vorrichtung, die mit dem jeweiligen Server zur Datenübertragung verbunden oder verbindbar ist, auslöst. Die Hardwareelemente können beispielsweise Prozessoren, Festplatten, Schalter, Relais oder sonstige elektronische Bauteile umfassen.

Mit anderen Worten kann der jeweilige Server ausgebildet und eingerichtet sein, auf die jeweilige Vorrichtung und/oder den jeweiligen weiteren Server einzuwirken. Die jeweilige Vorrichtung kann einen jeweiligen Roboter oder jeweilige Roboter, insbesondere Roboter zum Bearbeiten und/oder Transportieren von Gegenständen, umfassen. Demnach kann das erfindungsgemäße Verfahren zum Beispiel dafür genutzt werden, um einen jeweiligen automatisierten oder halbautomatisierten Logistikpark, der mit dem ausgewählten Server zur Datenübertragung verbindbar oder verbunden ist, in Abhängigkeit der sprachlichen Elemente der Notiz zu steuern.

Die durch die Server bereitgestellten Funktionen können gemäß einer Ausführungsform beispielsweise ein Steuern oder Regeln von Maschinen, insbesondere eines Maschinenparks, wie zum Beispiel der Roboter des Logistikparks umfassen. Bezogen auf den Anwendungsfall einer Steuerung des Logistikparks in Abhängigkeit von den sprachlichen Elementen der Notiz können die Funktionen zum Beispiel ein Verpacken oder Sortieren von Gegenständen, insbesondere von Waren, zum Abschicken der Gegenstände mithilfe der Roboter umfassen. Demnach kann unter einem Bereitstellen der jeweiligen Funktionen vonseiten des jeweiligen Servers auch ein jeweiliges Bereitstellen einer Durchführung von Prozessen, insbesondere Arbeitsabläufen, mithilfe des jeweiligen Servers, insbesondere mithilfe des jeweiligen Roboters, verstanden werden. In diesem Sinne können die jeweiligen Funktionen mithilfe des jeweiligen Servers und bevorzugt mithilfe der jeweiligen Vorrichtung und/oder des jeweiligen weiteren Servers, die mit den jeweiligen Server zum Datenaustausch verbindbar oder verbunden ist, bereitgestellt werden.

Generell können die jeweiligen Funktionen ein Erstellen von Dateien und/oder Daten und/oder ein Versenden der Daten und/oder der Dateien von dem jeweiligen Server oder dem jeweiligen weiteren Server umfassen. Die Ansteuerung des jeweiligen weiteren Servers kann bevorzugt ein Auslösen jeweiliger weiterer Funktionen des jeweiligen weiteren Servers umfassen.

Des Weiteren können die jeweiligen Funktionen auch ein Bereitstellen von jeweiligen Servicedienstleistungen umfassen. Die jeweiligen Servicedienstleistungen können beispielsweise eine Verarbeitung von Daten und/oder Versenden von Daten in Abhängigkeit von den sprachlichen Elementen der Notiz umfassen.

Mithilfe der jeweiligen Befehlszuordnungen ist es möglich, die jeweiligen Serverbefehle in Abhängigkeit von den jeweiligen sprachlichen Elementen, die den jeweiligen Serverbefehlen gemäß der Befehlszuordnungen zugeordnet sind, auszuführen. Insbesondere kann die Ausführung des ausgewählten Befehls in Abhängigkeit des ausgewählten Teils der sprachlichen Elemente ausgelöst, das heißt initiiert, werden.

Beispielsweise kann der Prozessor des Zentralservers den ausgewählten Befehl mithilfe der Befehlszuordnungen anhand des ausgewählten Teils der sprachlichen Elemente bestimmen. Hierzu kann gemäß einer Variante der Prozessor des Zentralservers dasjenige zweite Datenobjekt auslesen, in welchem die ausgewählte Gruppe von Schriftzeichen gespeichert ist. Hierbei liest der Prozessor des Zentralservers automatisch den ausgewählten Befehl aus. Nachdem der Prozessor des Zentralservers den ausgewählten Befehl gelesen hat, sendet der Prozessor des Zentralservers den ausgewählten Befehl bevorzugt über die zweite Kommunikationsverbindung zu dem ausgewählten Server. Der ausgewählte Server führt den ausgewählten Befehl bevorzugt aus, nachdem der ausgewählte Server den ausgewählten Befehl empfangen hat.

Die Ausführung des ausgewählten Befehls wird zumindest insofern in Abhängigkeit des ausgewählten Teils der sprachlichen Elemente initiiert, als dass der ausgewählte Befehl dem ausgewählten Teil der sprachlichen Elemente zugeordnet ist.

Gemäß einer weiteren Variante kann der Zentralserver den ausgewählten Teil der sprachlichen Elemente über die zweite Kommunikationsverbindung zu dem ausgewählten Server senden. Der ausgewählte Server bestimmt im Anschluss daran den ausgewählten Befehl mithilfe desjenigen Satzes von Zuordnungen, die die sprachlichen Elemente, die dem ausgewählten Server zugeordnet sind, denjenigen Befehlen zuordnen, die auf dem ausgewählten Server ausführbar sind, und in Abhängigkeit von dem ausgewählten Teil der sprachlichen Elemente. Hierzu kann gemäß einer Variante ein Prozessor des ausgewählten Servers dasjenige zweite Datenobjekt auslesen, in welchem die ausgewählte Gruppe von Schriftzeichen gespeichert ist. Hierbei liest der Prozessor des ausgewählten Servers automatisch den ausgewählten Befehl aus. Nachdem der Prozessor des ausgewählten Servers den ausgewählten Befehl gelesen hat, führt dieser oder ein weiterer Prozessor des ausgewählten Servers den ausgewählten Befehl bevorzugt aus.

Das oben beschriebene Initiieren der Ausführung des ausgewählten Befehls in Abhängigkeit des ausgewählten Teils der sprachlichen Elemente kann demnach als Ausführung einer der jeweiligen Serverbefehle betrachtet werden, der auf dem ausgewählten Server ausführbar ist. Durch das Ausführen des ausgewählten Befehls wird bevorzugt zumindest eine Funktion, die durch den ausgewählten Server bereitgestellt wird, ausgeführt.

Dadurch, dass die Ausführung des Befehls in Abhängigkeit zumindest des ausgewählten Teils der sprachlichen Elemente initiiert wird und derjenige Server unter den Servern ausgewählt wird, dem zumindest der ausgewählte Teil der sprachlichen Elemente des Zentralservers zugeordnet ist, kann der Befehl als ausgewählter Befehl betrachtet werden. Der ausgewählte Befehl wird bei dem vorgeschlagenen Verfahren insbesondere mithilfe der sprachlichen Elemente der Notiz und der sprachlichen Elemente des Zentralservers bestimmt. Dadurch, dass die zumindest eine Funktion des ausgewählten Servers mithilfe des ausgewählten Befehls auslösbar ist, kann diese zumindest eine Funktion als ausgewählte Funktion bezeichnet werden. Die ausgewählte Funktion wird bei dem vorgeschlagenen Verfahren insbesondere über eine Bestimmung des ausgewählten Befehls mithilfe der sprachlichen Elemente der Notiz bestimmt.

Zum einen ermöglicht das vorgeschlagene Verfahren, die ausgewählte Funktion unter allen möglichen Funktionen, die die Server bereitstellen können, automatisiert aufzufinden. Zum anderen kann das vorgeschlagene Verfahren einen Datenverkehr innerhalb des Kommunikationsnetzwerkes deutlich reduzieren. Dadurch, dass die sprachlichen Elemente auf dem Zentralserver gespeichert sind und die sprachlichen Elemente des Zentralservers jeweils zumindest dem jeweiligen Server zugeordnet sind, ist es nicht notwendig, dass das mobile Kommunikationsgerät eine jeweilige Kommunikationsverbindung zu dem jeweiligen Server aufbaut, um zu überprüfen, ob der ausgewählte Befehl auf dem jeweiligen Server ausführbar ist beziehungsweise, ob die ausgewählte Funktion durch den jeweiligen Server bereitgestellt wird.

Sowohl die Texterkennung als auch die Erstellung der Bilddatei können jeweils als Verfahren betrachtet werden, die eine Unschärfe beim Verarbeiten der sprachlichen Elemente der Notiz produzieren können. Das vorgeschlagene Verfahren ist durch die Benutzung des KI-Moduls nun derart ausgestaltet, dass trotz dieser Unschärfe die sprachlichen Elemente der Notiz derart verarbeitet werden können, dass der ausgewählte Server unter den Servern ausgewählt werden kann, um die ausgewählte Funktion bereitzustellen. Dies liegt insbesondere daran, dass der ausgewählte Teil der sprachlichen Elemente in Abhängigkeit von den jeweiligen Ähnlichkeiten zwischen den sprachlichen Elementen des Zentralservers und den sprachlichen Elementen der Notiz ausgewählt, insbesondere bestimmt, wird. Dementsprechend erlaubt das vorgeschlagene Verfahren insbesondere zum einen, überhaupt den richtigen Server in Form des ausgewählten Servers auf Basis von unscharfen Daten in Form von ausgegebenen Daten des Texterkennungsmoduls, wie beispielsweise die oben genannte Textdatei, zu finden. Zum anderen kann mithilfe des vorgeschlagenen Verfahrens der Datenverkehr innerhalb des Kommunikationsnetzwerks gegenüber einer Variante, bei welcher das mobile Kommunikationsgerät die jeweiligen Kommunikationsverbindungen zu dem jeweiligen Server aufbaut, reduziert werden.

Das vorgeschlagene Verfahren stellt insbesondere ein Verfahren dar, bei welchem die jeweiligen durch den jeweiligen Server bereitgestellten Funktionen in Form der jeweiligen sprachlichen Elemente des Zentralservers repräsentiert werden können. Dies liegt daran, dass vorteilhafterweise zum einen die durch die Server bereitgestellten Funktionen mithilfe der Serverbefehle ausgelöst beziehungsweise realisiert werden können und zum anderen der jeweilige Server ausgebildet und eingerichtet ist, die jeweiligen Serverbefehle in Abhängigkeit der sprachlichen Elemente, die dem jeweiligen Server zugeordnet sind, auszuführen.

Das vorgeschlagene Verfahren ermöglicht es, die ausgewählte Funktion mit Hilfe der sprachlichen Elemente der Notiz aufzufinden. Weiterhin kann die ausgewählte Funktion mithilfe des Erstellens der Bilddatei von der Fläche, auf der die sprachlichen Elemente der Notiz dargestellt sind, ausgelöst werden. Dies erfolgt insbesondere dadurch, dass der ausgewählte Befehl bei dem vorgeschlagenen Verfahren insbesondere mithilfe der sprachlichen Elemente der Notiz, wie oben beschrieben, bestimmt wird und die ausgewählte Funktion des ausgewählten Servers mithilfe des Initiierens der Ausführung des ausgewählten Befehls ausgelöst wird.

Demgegenüber können im Stand der Technik viele Verfahren gefunden werden, bei welchen ein Benutzer auf einem Bildschirm eine Auswahl von gewünschten Funktionen oder Gegenständen trifft, um eine oder mehrere gewünschte Funktionen auszulösen. In Abhängigkeit von dieser Auswahl wird im Stand der Technik, beispielsweise anhand einer Indizierung der gewünschten Funktion, die gewünschte Funktion bereitgestellt oder ein Bereitstellen dieser gewünschten Funktion ausgelöst. Demgegenüber hat das vorgeschlagene Verfahren, bei welchem die Auswahl der gewünschten Funktionen nicht an dem Bildschirm erfolgen muss, den Vorteil, dass dieses Verfahren komfortabler sein kann.

Die numerischen Werte ermöglichen es, die sprachlichen Elemente der Notiz mit den sprachlichen Elementen der Datenbanken mithilfe von mathematischen Rechenoperationen zu vergleichen. Dabei ist der jeweiligen Gruppe von Schriftzeichen des Zentralservers ein jeweiliger Satz von numerischen Werten zugeordnet. Der jeweilige Satz der numerischen Werte bildet die oben genannten jeweiligen numerischen Werte. Vorteilhafterweise werden den sprachlichen Elementen der Notiz ebenfalls numerische Werte, im Folgenden als Vergleichswerte bezeichnet, zugeordnet. Anhand der numerischen Werte und der Vergleichswerte kann festgestellt werden, ob Teile der sprachlichen Elemente des Zentralservers identisch oder ähnlich zu den sprachlichen Elementen oder zu Teilen der sprachlichen Elemente der Notiz sind. Des Weiteren können die numerischen Werte dafür verwendet werden, um das oben genannte jeweilige Ähnlichkeitsmaß für die jeweiligen sprachlichen Elemente des Zentralservers zu bestimmen.

Eine jeweilige Zuordnung zwischen dem jeweiligen Satz der numerischen Werte und der jeweiligen Gruppe von Schriftzeichen kann beispielsweise dadurch bereitgestellt sein oder bereitgestellt werden, indem ein jeweiliges Speicherelement erster Art, das den jeweiligen Satz der numerischen Werte speichert, mit einem jeweiligen Speicherelemente zweiter Art, das die jeweilige Gruppe von Schriftzeichen speichert, miteinander, beispielsweise mithilfe eines jeweiligen Zeigerelementes, verknüpft ist oder verknüpft wird. Die Speicherelemente erster Art unterscheiden sich von den Speicherelementen zweiter Art insbesondere durch ihre Größe. Im Allgemeinen sind die Speicherelemente zweiter Art größer, weil die jeweilige Gruppe von Schriftzeichen einen größeren Speicherplatz als der jeweilige Satz der numerischen Werte benötigt. Dies stellt einen weiteren Vorteil dar, weshalb die Verwendung der numerischen Werte praktisch ist.

Mit anderen Worten können die Gruppen von Schriftzeichen jeweils unter Verwendung zumindest eines Speichers des Kommunikationsnetzwerkes, insbesondere des Speichers oder eines weiteren Speichers des Zentralservers, derart mit dem jeweiligen Satz der numerischen Werte verknüpft werden oder sein, sodass die Gruppen von Schriftzeichen jeweils dem jeweiligen Satz der numerischen Werte zugeordnet werden beziehungsweise zugeordnet sind.

Gemäß einer weiteren Möglichkeit kann die jeweilige Zuordnung zwischen dem jeweiligen Satz der numerischen Werte und der jeweiligen Gruppe von Schriftzeichen auch dadurch bereitgestellt sein oder bereitgestellt werden, indem der jeweilige Satz der numerischen Werte zusammen mit der jeweiligen Gruppe von Schriftzeichen in einem jeweiligen dritten Datenobjekt oder in dem oben genannten jeweiligen ersten oder zweiten Datenobjekt gespeichert ist oder gespeichert wird. In diesem Fall ist oder wird das jeweilige dritte Datenobjekt beziehungsweise erste oder zweite Datenobjekt vorteilhafterweise mithilfe des jeweiligen Speichers erster Art und mithilfe des jeweiligen Speichers zweiter Art gespeichert.

Im Allgemeinen kann das vorgeschlagene Verfahren gemäß einer ersten Variante durchgeführt werden, bei welcher die jeweilige Zuordnung zwischen der jeweiligen Gruppe von Schriftzeichen und den jeweiligen numerischen Werten schon vor einer Durchführung des ersten, insbesondere des vierten, Schrittes vorliegt. Bei der ersten Variante liegen insbesondere die jeweiligen numerischen Werte, die der jeweiligen Gruppe von Schriftzeichen zugeordnet sind, vor der Durchführung des vierten, insbesondere des ersten, Schrittes vor. Dadurch kann das vorgeschlagene Verfahren schneller durchgeführt werden.

Gemäß einer zweiten Variante kann vor einem Durchführen des ersten oder vierten Schrittes die jeweilige Zuordnung zwischen der jeweiligen Gruppe von Schriftzeichen des Zentralservers und den jeweiligen numerischen Werten erzeugt werden. Insbesondere können bei der zweiten Variante die jeweiligen numerischen Werte, die der jeweiligen Gruppe von Schriftzeichen zugeordnet sind, vor einer Durchführung des vierten Schrittes, das heißt vor dem Auswählen des Teils der sprachlichen Elemente des Zentralservers, erzeugt werden.

In einer besonderen Ausgestaltung sind die Sätze der numerischen Werte, die den jeweiligen sprachlichen Elementen des Zentralservers zugeordnet sind, jeweils in Form von Einträgen eines jeweiligen Vektors ausgebildet. Der jeweilige Vektor repräsentiert die jeweiligen sprachlichen Elemente, das heißt die jeweilige Gruppe, des Zentralservers in einem ersten Vektorraum. Insbesondere kann der jeweilige Vektor eine Bedeutung der jeweiligen sprachlichen Elemente des Zentralservers repräsentieren. Im Fall der zweiten Variante können die jeweiligen Vektoren, insbesondere die Einträge der jeweiligen Vektoren, in Abhängigkeit der jeweiligen sprachlichen Elemente vor dem vierten Schritt erzeugt werden.

Das Auswählen des Teils der sprachlichen Elemente des Zentralservers und das Auswählen des Servers mithilfe des KI-Moduls können die folgenden weiteren Schritte umfassen.

In einem ersten weiteren Schritt wird ein Vergleichsvektor in Abhängigkeit von den sprachlichen Elementen der Notiz erzeugt. Der Vergleichsvektor repräsentiert die sprachlichen Elemente der Notiz in dem ersten Vektorraum. Insbesondere kann der Vergleichsvektor eine Bedeutung der sprachlichen Elemente der Notiz repräsentieren.

In einem zweiten weiteren Schritt wird ein jeweiliges Ähnlichkeitsmaß, bevorzugt mithilfe des KI-Moduls, für den jeweiligen Vektor bestimmt. Das jeweilige Ähnlichkeitsmaß für den jeweiligen Vektor, im Folgenden auch Ähnlichkeitsmaß des jeweiligen Vektors genannt, gibt jeweils ein Maß für eine Ähnlichkeit zwischen dem jeweiligen Vektor und dem Vergleichsvektor an. In einem dritten weiteren Schritt wird ein nächster Vektor als derjenige der Vektoren bestimmt, der unter Berücksichtigung der Ähnlichkeitsmaße für die Vektoren dem Vergleichsvektor am ähnlichsten ist. Mit anderen Worten ist der nächste Vektor derjenige Vektor unter den Vektoren, der zu dem Vergleichsvektor unter Berücksichtigung der jeweiligen Ähnlichkeitsmaße für die Vektoren die größte Ähnlichkeit aufweist. In einem vierten weiteren Schritt wird der ausgewählte Server anhand des nächsten Vektors ausgewählt, wobei die Einträge des nächsten Vektors denjenigen sprachlichen Elementen des Zentralservers, das heißt derjenigen Gruppe von Schriftzeichen, zugeordnet sind, die dem ausgewählten Server zugeordnet sind.

Ein jeweiliges Erzeugen des jeweiligen Vektors in Abhängigkeit der jeweiligen sprachlichen Elemente derart, dass der jeweilige Vektor die jeweiligen sprachlichen Elemente in dem ersten Vektorraum repräsentiert, kann als eine jeweilige Einbettung der jeweiligen sprachlichen Elemente in den ersten Vektorraum verstanden werden. Hierdurch kann jeweils eine Bedeutung der jeweiligen sprachlichen Elemente des Zentralservers mithilfe des jeweiligen Vektors in abstrakter Form dargestellt werden.

Analog kann ein Erzeugen des Vergleichsvektors in Abhängigkeit von den sprachlichen Elementen der Notiz als eine Einbettung der sprachlichen Elemente der Notiz in den ersten Vektorraum verstanden werden. Hierdurch kann eine Bedeutung der sprachlichen Elemente der Notiz mithilfe des Vergleichsvektors in abstrakter Form dargestellt werden. Im Folgenden wird eine mögliche Variante beschrieben, wie die sprachlichen Elemente des Zentralservers und die sprachlichen Elemente der Notiz in den ersten Vektorraum eingebettet werden können.

Durch die Ausführung der Anweisungen des Computerprogrammes des KI-Moduls auf dem Prozessor des Zentralservers kann bevorzugt die jeweilige Einbettung der jeweiligen sprachlichen Elemente in den ersten Vektorraum und die Einbettung der sprachlichen Elemente der Notiz in den ersten Vektorraum umgesetzt werden.

Um die sprachlichen Elemente des Zentralservers und der Notiz in den ersten Vektorraum einzubetten, werden oder sind die Gruppen der Schriftzeichen und die Gruppe von Schriftzeichen der Notiz jeweils bevorzugt in jeweilige Untergruppen von Schriftzeichen, sogenannte "Tokens" eingeteilt. Beispielsweise kann die Silbe "ver" eine erste Untergruppe und die Schriftzeichenfolge "st" eine zweite Untergruppe von Schriftzeichen ausbilden. Die Untergruppen von Schriftzeichen, das heißt die Tokens, können als Schriftzeichenfolgen verstanden werden. Weiterhin werden oder sind den jeweiligen Untergruppen von Schriftzeichen vorteilhafterweisen Zahlenwerte zur Identifikation der jeweiligen Untergruppen zugeordnet. Diese Zahlenwerte werden im Folgenden auch als Untergruppenidentifikatoren der Untergruppen bezeichnet. Die Untergruppenidentifikatoren können beispielsweise mithilfe einer Bibliothek des Kommunikationsnetzwerks, insbesondere des Zentralservers, bestimmt werden.

Vorteilhafterweise ist eine Anzahl von möglichen unterschiedlichen Untergruppen von Schriftzeichen mindestens fünf Mal größer als eine Dimension des ersten Vektorraums. Beispielsweise kann die Anzahl von möglichen unterschiedlichen Untergruppen von Schriftzeichen ungefähr in einer Größenordnung von 20000 bis 40000 liegen. Die möglichen unterschiedlichen Untergruppen von Schriftzeichen können in ihrer Gesamtheit eine Bibliothek von möglichen unterschiedlichen Schriftzeichenfolgen ausbilden. Gemäß einer möglichen Ausgestaltung ist innerhalb des Kommunikationsnetzwerkes, bevorzugt auf dem Zentralserver, die Bibliothek der Schriftzeichenfolgen gespeichert. Die Dimension des ersten Vektorraums kann hingegen in einer Größenordnung von etwa 100 bis 2000 liegen. Dadurch, dass die Anzahl der möglichen unterschiedlichen Untergruppen von Schriftzeichen mindestens fünf Mal größer als die Dimension des ersten Vektorraums ist, kann bei der Einbettung der sprachlichen Elemente des Zentralservers und der Notiz eine Dimensionsreduktion vollzogen werden. Diese Dimensionsreduktion erlaubt es, die Bedeutung der sprachlichen Elemente der Notiz einfacher mit den sprachlichen Elementen des Zentralservers zu vergleichen.

Bevorzugt wird in Abhängigkeit von den Untergruppen von Schriftzeichen der jeweiligen Gruppe von Schriftzeichen, insbesondere in Abhängigkeit von den Untergruppenidentifikatoren dieser Untergruppen, ein jeweiliger Eingabevektor erzeugt. Beispielsweise können die Eingabevektoren jeweils die Untergruppenidentifikatoren der Untergruppen der jeweiligen Gruppe von Schriftzeichen als Einträge aufweisen.

Analog kann ein Vergleichseingabevektor in Abhängigkeit von den Untergruppen von Schriftzeichen der Notiz erstellt werden. Der Vergleichseingabevektor kann hierbei in Abhängigkeit von den Untergruppenidentifikatoren, die den Untergruppen von Schriftzeichen der Notiz zugeordnet sind, erzeugt werden. Beispielsweise kann der Vergleichseingabevektor die Untergruppenidentifikatoren der Untergruppen der Gruppe von Schriftzeichen der Notiz als Einträge aufweisen.

In einer möglichen Ausgestaltung können die Eingabevektoren und der Vergleichseingabevektor mithilfe des KI-Moduls erzeugt werden oder sind mithilfe des KI-Moduls erzeugt.

Der jeweilige Eingabevektor und der Vergleichseingabevektor werden bevorzugt zu einem Einbettungsmodul des Kommunikationsnetzwerks, insbesondere des KI-Moduls, gesendet.

Das Einbettungsmodul ist bevorzugt ausgebildet und eingerichtet, für jede Untergruppe von Schriftzeichen der jeweiligen Gruppe von Schriftzeichen einen jeweiligen Einbettungsvektor zu erzeugen. Dabei stellt der jeweilige Einbettungsvektor jeweils ein Ergebnis einer Einbettung derjenigen jeweiligen Untergruppe in den ersten Vektorraum dar, für die der jeweilige Einbettungsvektor erstellt wird. Die Einbettungsvektoren haben jeweils eine Dimension, die gleich des ersten Vektorraumes ist. Die Einbettungsvektoren werden jeweils in Abhängigkeit von einem jeweiligen Eintrag der Eingabevektoren, insbesondere mithilfe des Einbettungsmoduls, erzeugt. Die Einbettungsvektoren können insbesondere jeweils eine Bedeutung der jeweiligen Untergruppe von Schriftzeichen der jeweiligen Gruppe von Schriftzeichen repräsentieren. Um die Einbettungsvektoren erzeugen zu können, kann das Einbettungsmodul gemäß einer Variante Zugriff auf das Programm "Word2vec" oder "globevec" haben oder Funktionen von einem dieser Programme oder zu diesen Funktionen ähnliche Funktionen bereitstellen.

Bevorzugt weist das Einbettungsmodul zumindest eine Funktion auf, die die jeweilige Untergruppe von Schriftzeichen der jeweiligen Gruppe von Schriftzeichen auf den ersten Vektorraum abbilden kann. Die Funktion ist insbesondere durch einen Trainingsdatensatz erstellt. Der Trainingsdatensatz weist jeweilige Trainingsgruppen von Schriftzeichen auf.

Die Schriftzeichen der Trainingsgruppen werden für ein Training der Funktion jeweils in die Schriftzeichenfolgen der Bibliothek der Schriftzeichenfolgen eingeteilt. Die Trainingsgruppen weisen jeweils somit jeweilige Schriftfolgen auf, die in der Bibliothek der Schriftzeichenfolgen enthalten sind. Weiterhin wird erfasst, an welcher Stelle die jeweiligen Schriftfolgen der jeweiligen Trainingsgruppe innerhalb der jeweiligen Trainingsgruppe stehen.

Bei dem Training der Funktion wird bevorzugt für jede Schriftfolge der Trainingsgruppen ein jeweiliger korrespondierender Trainingseinbettungsvektor mithilfe der Funktion des Einbettungsmoduls erstellt. Hierbei werden vorteilhaft für Schriftfolgen der Trainingsgruppen, die identische Schriftzeichen in identischer Reihenfolge aufweisen, dieselben Einbettungsvektoren erstellt. Die Trainingseinbettungsvektoren weisen bevorzugt jeweils Zahlenwerte, insbesondere reelle Zahlenwerte, als Einträge auf.

Die jeweilige Stelle, an welcher die jeweilige Schriftfolge der jeweiligen Trainingsgruppe innerhalb der jeweiligen Trainingsgruppe steht, kann ebenfalls demjenigen Trainingseinbettungsvektor zugeordnet werden, der für die jeweilige korrespondierende Schriftfolge erstellt wurde. Mit anderen Worten wird jedem Trainingseinbettungsvektor diejenige Stelle innerhalb der jeweiligen Trainingsgruppe zugeordnet, an welcher die zu dem jeweiligen Trainingseinbettungsvektor korrespondierende Schriftfolge innerhalb der jeweiligen Trainingsgruppe steht.

Bei dem Training der Funktion des Einbettungsmoduls werden die Trainingseinbettungsvektoren, insbesondere deren Einträge, vorteilhafterweise derart erstellt, dass eine jeweilige Wahrscheinlichkeit für den jeweiligen Trainingseinbettungsvektor, dass der jeweilige Trainingseinbettungsvektor an einer bestimmten Stelle innerhalb der jeweiligen Trainingsgruppe steht in Abhängigkeit von den vor der zu dem jeweiligen Trainingseinbettungsvektor korrespondierenden Schriftfolge stehenden Schriftfolgen und in Abhängigkeit von den hinter der zu dem jeweiligen Trainingseinbettungsvektor korrespondierenden Schriftfolge stehenden Schriftfolgen maximiert wird.

Diejenigen Einbettungsvektoren, die für die Untergruppen von Schriftzeichen der jeweiligen Gruppe von Schriftzeichen generiert werden, werden zusammen genommen im Folgenden auch als jeweiliger Satz von Einbettungsvektoren bezeichnet.

Der jeweilige Vektor kann vorteilhafterweise in Abhängigkeit von dem jeweiligen Satz der Einbettungsvektoren, beispielsweise in Form einer Linearkombination der Einbettungsvektoren des jeweiligen Satzes der Einbettungsvektoren, generiert werden. Demzufolge repräsentiert der jeweilige Vektor eine Bedeutung der jeweiligen Gruppe von Schriftzeichen, das heißt eine Bedeutung der jeweiligen sprachlichen Elemente des Zentralservers. Der jeweilige Vektor liegt bevorzugt, insbesondere im Fall der ersten Variante, derart vor, dass der jeweilige Vektor in Abhängigkeit von dem jeweiligen Satz der Einbettungsvektoren, beispielsweise in Form einer Linearkombination der Einbettungsvektoren des jeweiligen Satzes der Einbettungsvektoren, generiert ist.

Beispielsweise können Einträge des jeweiligen Vektors jeweils in Form eines Mittelwertes der Einträge der Einbettungsvektoren des jeweiligen Satzes der Einbettungsvektoren gebildet werden beziehungsweise gebildet sein.

Analog wird bevorzugt für jede Untergruppe von Schriftzeichen der Gruppe von Schriftzeichen der Notiz ein jeweiliger weiterer Einbettungsvektor erzeugt. Dabei stellt der jeweilige weitere Einbettungsvektor ein Ergebnis einer Einbettung der jeweiligen Untergruppe der Gruppe von Schriftzeichen der Notiz in den ersten Vektorraum dar, für die der jeweilige weitere Einbettungsvektor erstellt wird. Der jeweilige weitere Einbettungsvektor wird bevorzugt in Abhängigkeit von einem jeweiligen Eintrag des Vergleichseingabevektors, insbesondere mithilfe des Einbettungsmoduls, erzeugt. Die weiteren Einbettungsvektoren können insbesondere eine Bedeutung der jeweiligen Untergruppe von Schriftzeichen der Gruppe von Schriftzeichen der Notiz repräsentieren.

Der Vergleichsvektor kann bei dieser Variante in Abhängigkeit von den weiteren Einbettungsvektoren, beispielsweise in Form einer Linearkombination der weiteren Einbettungsvektoren, generiert werden. Demzufolge repräsentiert der Vergleichsvektor eine Bedeutung der Gruppe von Schriftzeichen der Notiz, das heißt eine Bedeutung der sprachlichen Elemente der Notiz. Beispielsweise können Einträge des Vergleichsvektors jeweils in Form von Mittelwerten der Einträge der weiteren Einbettungsvektoren gebildet werden.

Das Ähnlichkeitsmaß des jeweiligen Vektors kann beispielsweise in Form einer jeweiligen Kosinus-Ähnlichkeit zwischen dem jeweiligen Vektor und dem Vergleichsvektor, insbesondere mithilfe des KI-Moduls, berechnet werden. Möglich ist auch, dass das Ähnlichkeitsmaß des jeweiligen Vektors in Form eines jeweiligen Skalarproduktes zwischen dem jeweiligen Vektor und dem Vergleichsvektor, insbesondere mithilfe des KI-Moduls, berechnet wird. Das Ähnlichkeitsmaß des jeweiligen Vektors kann insbesondere das oben genannte Ähnlichkeitsmaß der jeweiligen sprachlichen Elemente, das heißt der jeweiligen Gruppe von Schriftzeichen, bilden.

Gemäß einer möglichen Ausgestaltung wird derjenige der Vektoren als der nächste Vektor bestimmt, der die größte Kosinus-Ähnlichkeit aufweist oder dessen Skalarprodukt am größten ist, je nachdem, wie die Ähnlichkeitsmaße der Vektoren bestimmt werden.

Der ausgewählte Server ist bei der Ausgestaltung des Verfahrens mit den oben genannten weiteren Schritten derjenige Server unter den Servern, dem diejenigen sprachlichen Elemente des Zentralservers zugeordnet sind, das heißt diejenige Gruppe von Schriftzeichen zugeordnet ist, in Abhängigkeit derer der nächste Vektor mithilfe des Einbettungsmoduls erzeugt ist beziehungsweise erzeugt wurde.

Wie oben beschrieben, sind die jeweiligen sprachlichen Elemente des Zentralservers in Form von jeweiligen Gruppen von Schriftzeichen ausgebildet.

Gemäß einer vorteilhaften Ausgestaltung des Verfahrens weisen die jeweilige Gruppe von Schriftzeichen jeweils die oben beschriebenen jeweiligen Untergruppen von Schriftzeichen auf. Bei dieser Ausgestaltung ist der jeweilige Vektor als jeweiliger kontextbezogener Vektor ausgebildet. Die kontextbezogenen Vektoren berücksichtigen bei dieser Ausgestaltung jeweils eine jeweilige Korrelation zwischen den jeweiligen Untergruppen von Schriftzeichen innerhalb der jeweiligen Gruppe von Schriftzeichen. Insbesondere werden bei dieser Ausgestaltung die Vektoren derart erzeugt, dass die jeweilige Korrelation zwischen den jeweiligen Untergruppen von Schriftzeichen innerhalb der jeweiligen Gruppe von Schriftzeichen bei dem Erzeugen der Vektoren mit einfließt. Diese Ausgestaltung des Verfahrens wird im Folgenden kontextbezogene Einbettung genannt.

Zum Erzeugen der kontextbezogenen Vektoren kann zunächst für jede Untergruppe von Schriftzeichen der jeweiligen Gruppe von Schriftzeichen wie oben beschrieben der jeweilige Einbettungsvektor erzeugt werden. Für jede Gruppe von Schriftzeichen wird somit der jeweilige Satz von Einbettungsvektoren erzeugt.

Im Folgenden wird beschrieben, wie für die jeweilige Gruppe von Schriftzeichen in Abhängigkeit von den Einbettungsvektoren des jeweiligen Satzes von Einbettungsvektoren derjeweilige kontextbezogene Einbettungsvektor erzeugt werden kann. Die Einbettungsvektoren des jeweiligen Satzes von Einbettungsvektoren werden im Folgenden Einbettungsvektoren des jeweiligen Satzes genannt. Durch die Ausführung der Anweisungen des Computerprogrammes des KI-Moduls auf dem Prozessor des Zentralservers werden bevorzugt die kontextbezogenen Einbettungsvektoren, wie im Folgenden beschrieben, erzeugt.

Bevorzugt werden, insbesondere mithilfe des KI-Moduls, jeweilige erste Hilfsvektoren jeweils in Abhängigkeit von den Einbettungsvektoren des jeweiligen Satzes berechnet. Für jeden Satz der Einbettungsvektoren wird hierbei ein jeweiliger Satz der ersten Hilfsvektoren generiert.

Die jeweiligen ersten Hilfsvektoren können jeweils vorteilhafterweise eine erste Dimension aufweisen, die kleiner als die Dimension des ersten Vektorraumes ist. Bevorzugt werden die jeweiligen ersten Hilfsvektoren jeweils durch eine erste Projektion des jeweiligen Einbettungsvektors des jeweiligen Satzes auf eine erste Richtung des ersten Vektorraums erstellt. Die erste Richtung kann hierbei durch einen ersten Richtungsvektor spezifiziert sein. Insbesondere werden die jeweiligen ersten Hilfsvektoren jeweils durch Berechnen eines jeweiligen Skalarproduktes des jeweiligen Einbettungsvektors des jeweiligen Satzes mit dem ersten Richtungsvektor erzeugt. Mithilfe der ersten Projektion kann insbesondere eine erste Art von Bedeutung der jeweiligen Untergruppe von Schriftzeichen der jeweiligen Gruppe von Schriftzeichen beschrieben werden. Die erste Projektion kann als eine Beobachtung entlang der ersten Richtung in dem ersten Vektorraum angesehen werden, wobei die erste Richtung eine erste Art von semantischen Aspekten berücksichtigt.

Die jeweiligen ersten Hilfsvektoren werden jeweils für jeden Satz von Einbettungsvektoren erzeugt und sind demnach, je nachdem in Abhängigkeit von welchem Satz von Einbettungsvektoren die jeweiligen ersten Hilfsvektoren berechnet werden, unterschiedlich.

Weiterhin können jeweils in Abhängigkeit von den Einbettungsvektoren des jeweiligen Satzes, insbesondere mithilfe des KI-Moduls, jeweilige zweite Hilfsvektoren berechnet werden. Für jeden Satz der Einbettungsvektoren wird hierbei ein jeweiliger Satz der zweiten Hilfsvektoren generiert.

Die jeweiligen zweiten Hilfsvektoren können vorteilhafterweise eine zweite Dimension aufweisen, die kleiner als die Dimension des ersten Vektorraumes ist. Die zweite Dimension ist vorteilhafterweise gleich der ersten Dimension. Bevorzugt werden die jeweiligen zweiten Hilfsvektoren jeweils durch eine zweite Projektion des jeweiligen Einbettungsvektors des jeweiligen Satzes auf eine zweite Richtung des ersten Vektorraums erstellt. Die zweite Richtung kann hierbei durch einen zweiten Richtungsvektor spezifiziert sein. Insbesondere werden die jeweiligen zweiten Hilfsvektoren jeweils durch Berechnen eines jeweiligen Skalarproduktes des jeweiligen Einbettungsvektors des jeweiligen Satzes mit dem zweiten Richtungsvektor erzeugt. Mithilfe der zweiten Projektion kann insbesondere eine zweite Art von Bedeutung der jeweiligen Untergruppe von Schriftzeichen der jeweiligen Gruppe von Schriftzeichen beschrieben werden. Die zweite Projektion kann als eine Beobachtung entlang der zweiten Richtung in dem ersten Vektorraum angesehen werden, wobei die zweite Richtung eine zweite Art von semantischen Aspekten berücksichtigt.

Die jeweiligen zweiten Hilfsvektoren werden jeweils für jeden Satz von Einbettungsvektoren erzeugt und sind demnach, je nachdem in Abhängigkeit von welchem Satz von Einbettungsvektoren die jeweiligen zweiten Hilfsvektoren berechnet werden, unterschiedlich.

In einem weiteren Schritt können die jeweiligen ersten Hilfsvektoren, die für den jeweiligen Satz von Einbettungsvektoren erzeugt wurden, jeweils mit den transponierten jeweiligen zweiten Hilfsvektoren, die für jeweiligen selben Satz von Einbettungsvektoren erzeugt wurden, multipliziert werden, um eine jeweilige Korrelationsmatrix für den jeweiligen Satz von Einbettungsvektoren zu bilden. Ein jeweiliger Eintrag der jeweiligen Korrelationsmatrix kann durch ein Skalarprodukt einer der ersten Hilfsvektoren, der für den jeweiligen Satz von Einbettungsvektoren erzeugt wurde, mit einem der zweiten Hilfsvektoren, der für den jeweiligen Satz von Einbettungsvektoren erzeugt wurde, berechnet werden.

Weiterhin können die Einträge der jeweiligen Korrelationsmatrix normalisiert werden, um eine jeweilige erste normalisierte Korrelationsmatrix zu erhalten, bei welcher alle Einträge einer Spalte der Korrelationsmatrix in der Summe Eins ergeben. Des Weiteren kann auch eine Softmax-Funktion über alle Einträge einer jeweiligen Spalte der jeweiligen Korrelationsmatrix ausgeführt werden, um eine jeweilige zweite normalisierte Korrelationsmatrix zu erhalten. Einträge einer jeweiligen Spalte der jeweiligen zweiten normalisierten Korrelationsmatrix summieren sich bevorzugt zu Eins.

Weiterhin können in Abhängigkeit von den Einbettungsvektoren des jeweiligen Satzes, insbesondere mithilfe des KI-Moduls, jeweilige dritte Hilfsvektoren berechnet werden. Für jeden Satz der Einbettungsvektoren wird hierbei ein jeweiliger Satz der dritten Hilfsvektoren generiert.

Die jeweiligen dritten Hilfsvektoren können vorteilhafterweise eine dritte Dimension aufweisen, die kleiner als die Dimension des ersten Vektorraumes ist. Die dritte Dimension ist vorteilhafterweise gleich der ersten Dimension. Bevorzugt werden die jeweiligen dritten Hilfsvektoren jeweils durch eine dritte Projektion des jeweiligen Einbettungsvektors des jeweiligen Satzes auf eine dritte Richtung des ersten Vektorraums erstellt. Die dritte Richtung kann hierbei durch einen dritten Richtungsvektor spezifiziert sein. Insbesondere werden die jeweiligen dritten Hilfsvektoren jeweils durch Berechnen eines jeweiligen Skalarproduktes des jeweiligen Einbettungsvektors des jeweiligen Satzes mit dem dritten Richtungsvektor erzeugt. Mithilfe der dritten Projektion kann insbesondere eine dritte Art von Bedeutung der jeweiligen Untergruppe von Schriftzeichen der jeweiligen Gruppe von Schriftzeichen beschrieben werden. Die dritte Projektion kann als eine Beobachtung entlang einer dritten Richtung in dem ersten Vektorraum angesehen werden, wobei die dritte Richtung eine dritte Art von semantischen Aspekten berücksichtigt.

Die jeweiligen dritten Hilfsvektoren werden jeweils für jeden Satz von Einbettungsvektoren erzeugt und sind demnach, je nachdem in Abhängigkeit von welchem Satz von Einbettungsvektoren die jeweiligen dritten Hilfsvektoren berechnet werden, unterschiedlich.

Vorteilhafterweise werden mithilfe der jeweiligen dritten Hilfsvektoren und mithilfe der jeweiligen ersten, insbesondere mit der jeweiligen zweiten, normalisierten Korrelationsmatrix jeweilige erste kontextbezogene Einbettungsvektoren jeweils für den jeweiligen Satz von Einbettungsvektoren erzeugt.

Die jeweiligen ersten kontextbezogenen Einbettungsvektoren berechnen sich jeweils in Form einer jeweiligen Linearkombination der jeweiligen dritten Hilfsvektoren. Jeweilige Linearkoeffizienten zur Berechnung der jeweiligen Linearkombination sind gleich der Einträge einer jeweiligen Spalte der jeweiligen ersten, insbesondere der jeweiligen zweiten, normalisierten Korrelationsmatrix. Für jede Spalte der ersten oder zweiten normalisierten Korrelationsmatrix wird jeweils einer der jeweiligen ersten kontextbezogenen Einbettungsvektoren berechnet. Demnach ist eine Anzahl der jeweiligen ersten kontextbezogenen Einbettungsvektoren gleich einer Anzahl der Spalten der ersten oder zweiten normalisierten Korrelationsmatrix.

Die jeweiligen ersten kontextbezogenen Einbettungsvektoren haben jeweils eine Dimension, die gleich der dritten Dimension ist.

In analoger Weise wie die jeweiligen ersten kontextbezogenen Einbettungsvektoren für den jeweiligen Satz von Einbettungsvektoren erzeugt werden, werden für jeden Satz von Einbettungsvektoren bevorzugt jeweils jeweilige weitere kontextbezogene Einbettungsvektoren, insbesondere mithilfe des KI-Moduls, erstellt. Im Unterschied zu der oben beschriebenen Erstellung der jeweiligen ersten kontextbezogenen Einbettungsvektoren sind bei einer Erstellung der jeweiligen weiteren kontextbezogenen Einbettungsvektoren jedoch jeweilige Einträge des ersten, zweiten und dritten Richtungsvektors unterschiedlich. Dadurch ändern sich jeweils die erste, zweite und dritte Richtung und damit die jeweilige erste, zweite und dritte Projektion, wodurch unterschiedliche semantische Aspekte berücksichtigt werden können.

Für jeden Einbettungsvektor des jeweiligen Satzes von Einbettungsvektoren werden bevorzugt so viele jeweilige weitere kontextbezogene Einbettungsvektoren erstellt, dass eine Summe der jeweiligen Dimensionen aller kontextbezogener Einbettungsvektoren und der Dimension des jeweiligen ersten kontextbezogenen Einbettungsvektors zusammengenommen gleich der Dimension des jeweiligen Einbettungsvektors ist. Vorteilhafterweise wird ein jeweiliger finaler kontextbezogener Einbettungsvektor für jeden Einbettungsvektor des jeweiligen Satzes von Einbettungsvektoren durch Aneinanderhängen des ersten kontextbezogenen Einbettungsvektors und der weiteren kontextbezogenen Einbettungsvektoren, die für den jeweiligen Einbettungsvektor des jeweiligen Satzes von Einbettungsvektoren gebildet wurden, erzeugt. Eine Dimension des jeweiligen finalen kontextbezogenen Einbettungsvektors ist bevorzugt gleich der Dimension einer der Einbettungsvektoren.

Die finalen kontextbezogenen Einbettungsvektoren, die für die Untergruppen von Schriftzeichen der jeweiligen Gruppe von Schriftzeichen generiert werden, werden zusammen genommen im Folgenden auch als jeweiliger Satz der finalen kontextbezogenen Einbettungsvektoren bezeichnet.

Weiterhin kann bei dem Verfahren der kontextbezogenen Einbettung der jeweilige Vektor in Abhängigkeit von dem jeweiligen Satz der finalen kontextbezogenen Einbettungsvektoren, beispielsweise in Form einer Linearkombination der finalen kontextbezogenen Einbettungsvektoren des jeweiligen Satzes der finalen kontextbezogenen Einbettungsvektoren, generiert werden. Beispielsweise können Einträge des jeweiligen Vektors jeweils in Form eines Mittelwertes der Einträge der finalen kontextbezogenen Einbettungsvektoren des jeweiligen Satzes der finalen kontextbezogenen Einbettungsvektoren gebildet werden.

Demzufolge repräsentiert der jeweilige Vektor eine kontextbezogene Bedeutung der jeweiligen Gruppe von Schriftzeichen, das heißt eine kontextbezogene Bedeutung der jeweiligen sprachlichen Elemente des Zentralservers.

In gleicher Art und Weise, wie für die jeweilige Gruppe von Schriftzeichen in Abhängigkeit von den Einbettungsvektoren des jeweiligen Satzes von Einbettungsvektoren die jeweiligen finalen kontextbezogenen Einbettungsvektoren erzeugt werden können, so werden bevorzugt für die Gruppe von Schriftzeichen der Notiz in Abhängigkeit von den weiteren Einbettungsvektoren weitere finale kontextbezogene Einbettungsvektoren, bevorzugt mithilfe des KI-Moduls, generiert.

In analoger Weise können in Abhängigkeit von den weiteren Einbettungsvektoren, insbesondere mithilfe des KI-Moduls, weitere erste Hilfsvektoren berechnet werden. Die weiteren ersten Hilfsvektoren haben jeweils bevorzugt eine Dimension, die gleich der ersten Dimension der jeweiligen ersten Hilfsvektoren ist. Bevorzugt werden die weiteren ersten Hilfsvektoren jeweils durch eine jeweilige erste Projektion des jeweiligen weiteren Einbettungsvektors auf die erste Richtung des ersten Vektorraums erstellt. Die erste Richtung kann hierbei durch den ersten Richtungsvektor spezifiziert sein. Insbesondere werden die weiteren ersten Hilfsvektoren jeweils durch Berechnen eines jeweiligen Skalarproduktes des jeweiligen weiteren Einbettungsvektors mit dem ersten Richtungsvektor erzeugt. Mithilfe der ersten Projektion kann insbesondere die erste Art von Bedeutung der jeweiligen Untergruppe von Schriftzeichen der Notiz untersucht werden.

Weiterhin können in Abhängigkeit von den weiteren Einbettungsvektoren, insbesondere mithilfe des KI-Moduls, weitere zweite Hilfsvektoren berechnet werden. Die weiteren zweiten Hilfsvektoren haben jeweils bevorzugt eine Dimension, die gleich der ersten Dimension der weiteren ersten Hilfsvektoren ist. Bevorzugt werden die weiteren zweiten Hilfsvektoren jeweils durch eine jeweilige zweite Projektion des jeweiligen weiteren Einbettungsvektors auf die zweite Richtung des ersten Vektorraums erstellt. Die zweite Richtung kann hierbei durch den zweiten Richtungsvektor spezifiziert sein. Insbesondere werden die weiteren zweiten Hilfsvektoren jeweils durch Berechnen eines jeweiligen Skalarproduktes des jeweiligen weiteren Einbettungsvektors mit dem zweiten Richtungsvektor erzeugt. Mithilfe der zweiten Projektion kann insbesondere die zweite Art von Bedeutung der jeweiligen Untergruppe von Schriftzeichen der Notiz untersucht werden.

In einem weiteren Schritt können die weiteren ersten Hilfsvektoren jeweils mit den transponierten weiteren zweiten Hilfsvektoren multipliziert werden, um eine weitere Korrelationsmatrix zu bilden. Ein jeweiliger Eintrag der weiteren Korrelationsmatrix kann durch ein Skalarprodukt einer der weiteren ersten Hilfsvektoren mit einem der weiteren zweiten Hilfsvektoren berechnet werden.

Weiterhin können die Einträge der weiteren Korrelationsmatrix normalisiert werden, um eine erste weitere normalisierte Korrelationsmatrix zu erhalten, bei welcher alle Einträge einer Spalte der Korrelationsmatrix in der Summe Eins ergeben. Des Weiteren kann auch eine Softmax-Funktion über alle Einträge einer jeweiligen Spalte der weiteren Korrelationsmatrix ausgeführt werden, um eine zweite weitere normalisierte Korrelationsmatrix zu erhalten. Einträge einer jeweiligen Spalte der zweiten weiteren normalisierten Korrelationsmatrix summieren sich bevorzugt zu Eins.

Weiterhin können in Abhängigkeit von den weiteren Einbettungsvektoren, insbesondere mithilfe des KI-Moduls, weitere dritte Hilfsvektoren berechnet werden. Die weiteren dritten Hilfsvektoren haben jeweils bevorzugt eine Dimension, die gleich der ersten Dimension der ersten weiteren Hilfsvektoren ist. Bevorzugt werden die weiteren dritten Hilfsvektoren jeweils durch eine jeweilige dritte Projektion des jeweiligen weiteren Einbettungsvektors auf die dritte Richtung des ersten Vektorraums erstellt. Die dritte Richtung kann hierbei durch den dritten Richtungsvektor spezifiziert sein. Insbesondere werden die weiteren dritten Hilfsvektoren jeweils durch Berechnen eines jeweiligen Skalarproduktes des jeweiligen weiteren Einbettungsvektors mit dem dritten Richtungsvektor erzeugt. Mithilfe der dritten Projektion kann insbesondere die dritte Art von Bedeutung der jeweiligen Untergruppe von Schriftzeichen der Notiz untersucht werden.

Vorteilhafterweise werden mithilfe der weiteren dritten Hilfsvektoren und mithilfe der ersten, insbesondere der zweiten, weiteren normalisierten Korrelationsmatrix für den jeweiligen weiteren Einbettungsvektor jeweils ein erster weiterer kontextbezogener Einbettungsvektor erzeugt.

Die ersten weiteren kontextbezogenen Einbettungsvektoren berechnen sich jeweils in Form einer jeweiligen Linearkombination der weiteren dritten Hilfsvektoren. Jeweilige Linearkoeffizienten zur Berechnung dieser jeweiligen Linearkombination sind gleich der Einträge einer jeweiligen Spalte der ersten, insbesondere der zweiten, weiteren normalisierten Korrelationsmatrix. Für jede Spalte der ersten oder zweiten weiteren normalisierten Korrelationsmatrix wird jeweils einer der ersten weiteren kontextbezogenen Einbettungsvektoren berechnet. Demnach ist eine Anzahl der ersten weiteren kontextbezogenen Einbettungsvektoren gleich einer Anzahl der Spalten der ersten oder der zweiten weiteren normalisierten Korrelationsmatrix.

Die ersten weiteren kontextbezogenen Einbettungsvektoren haben jeweils eine Dimension, die gleich der dritten Dimension ist.

In analoger Weise wie die ersten weiteren kontextbezogenen Einbettungsvektoren erzeugt werden, werden für jeden weiteren Einbettungsvektor bevorzugt jeweils zusätzliche kontextbezogene Einbettungsvektoren, insbesondere mithilfe des KI-Moduls, erstellt. Im Unterschied zu der oben beschriebenen Erstellung der ersten weiteren kontextbezogenen Einbettungsvektoren sind bei einer Erstellung der jeweiligen zusätzlichen kontextbezogenen Einbettungsvektoren jedoch jeweilige Einträge des ersten, zweiten und dritten Richtungsvektors unterschiedlich. Dadurch ändern sich jeweils die erste, zweite und dritte Richtung und damit die jeweilige erste, zweite und dritte Projektion, wodurch unterschiedliche semantische Aspekte berücksichtigt werden können.

Für jeden weiteren Einbettungsvektor werden bevorzugt so viele zusätzliche kontextbezogene Einbettungsvektoren erstellt, dass eine Summe der Dimensionen einer der ersten weiteren kontextbezogenen Einbettungsvektoren und der jeweiligen Dimensionen der zusätzlichen kontextbezogenen Einbettungsvektoren, die für den jeweiligen weiteren Einbettungsvektor berechnet wurden, zusammengenommen gleich der Dimension einer der weiteren Einbettungsvektoren ist. Vorteilhafterweise wird für jeden weiteren Einbettungsvektor ein jeweiliger weiterer finaler kontextbezogener Einbettungsvektor durch Aneinanderhängen des jeweiligen weiteren ersten kontextbezogenen Einbettungsvektors und der jeweiligen zusätzlichen weiteren kontextbezogenen Einbettungsvektoren, die für den jeweiligen weiteren Einbettungsvektor gebildet wurden, erzeugt.

Weiterhin kann bei dem Verfahren der kontextbezogenen Einbettung der Vergleichsvektor in Abhängigkeit von den weiteren finalen kontextbezogenen Einbettungsvektoren, beispielsweise in Form einer Linearkombination der weiteren finalen kontextbezogenen Einbettungsvektoren, generiert werden. Beispielsweise können Einträge des Vergleichsvektors jeweils in Form eines Mittelwertes der Einträge der weiteren finalen kontextbezogenen Einbettungsvektoren gebildet werden.

In einer Weiterbildung kann die Notiz weitere sprachliche Elemente aufweisen. Mit anderen Worten weist die Notiz bei dieser Weiterbildung die sprachlichen Elemente der Notiz und die weiteren sprachlichen Elemente der Notiz auf. Analog zu den sprachlichen Elementen der Notiz umfassen die weiteren sprachlichen Elemente der Notiz bevorzugt Schriftzeichen, wie Buchstaben, Ziffern und/oder Sonderzeichen. Weiterhin können die weiteren sprachlichen Elemente der Notiz bevorzugt eine Silbe, zwei oder mehrere Silben und/oder ein Wort, zwei oder mehrere Wörter umfassen. Die weiteren sprachlichen Elemente der Notiz werden im Folgenden auch als weitere Gruppe von Schriftzeichen der Notiz bezeichnet.

In einer besonderen Ausgestaltung wird ein jeweiliges weiteres Ähnlichkeitsmaß für die jeweiligen sprachlichen Elemente des Zentralservers bestimmt. Das jeweilige weitere Ähnlichkeitsmaß für die jeweiligen sprachlichen Elemente des Zentralservers ist bei dieser Ausgestaltung ein Maß für eine Anzahl von jeweiligen Datenverarbeitungsschritten, die für eine Umwandlung der jeweiligen sprachlichen Elemente des Zentralservers in die weiteren sprachlichen Elemente der Notiz nötig sind. Bevorzugt wird für jede Gruppe von Schriftzeichen des Zentralservers das jeweilige weitere Ähnlichkeitsmaß bestimmt. Vorzugsweise ist das jeweilige weitere Ähnlichkeitsmaß für die jeweiligen sprachlichen Elemente, das heißt für die jeweilige Gruppe von Schriftzeichen, des Zentralservers eine jeweilige Levenshtein-Distanz.

Weiterhin kann ein weiterer Teil der sprachlichen Elemente des Zentralservers, das heißt eine weitere Gruppe von Schriftzeichen des Zentralservers, unter Berücksichtigung der weiteren Ähnlichkeitsmaße für die jeweiligen sprachlichen Elemente des Zentralservers ausgewählt werden. Der weitere Teil der sprachlichen Elemente wird insbesondere derart unter den sprachlichen Elementen des Zentralservers ausgewählt, dass der weitere Teil die größte Ähnlichkeit zu den weiteren sprachlichen Elementen der Notiz unter Berücksichtigung der weiteren Ähnlichkeitsmaße aufweist. Sind die Ähnlichkeitsmaße jeweils in Form der jeweiligen Levenshtein-Distanz ausgebildet, so weist die Levenshtein-Distanz des weiteren Teils der sprachlichen Elemente bevorzugt die kleinste Levenshtein-Distanz auf.

Weiterhin kann zumindest ein weiterer Server der Server ausgewählt oder der ausgewählte Server erneut ausgewählt werden, wobei dem ausgewählten weiteren Server oder dem ausgewählten Server zumindest der ausgewählte weitere Teil der sprachlichen Elemente des Zentralservers zugeordnet ist. Weiterhin kann eine Ausführung eines weiteren Befehls der Befehle, die auf dem ausgewählten weiteren Server oder dem ausgewählten Server ausführbar sind, über eine dritte Kommunikationsverbindung zwischen dem zumindest einen ausgewählten weiteren Server und dem Zentralserver oder über die zweite Kommunikationsverbindung in Abhängigkeit des ausgewählten weiteren Teils der sprachlichen Elemente initiiert werden. Der weitere Befehl wird auf dem ausgewählten weiteren Server oder dem ausgewählten Server ausgeführt. Die dritte Kommunikationsverbindung kann beispielsweise durch das Internet oder ein weiteres LAN bereitgestellt sein.

Die jeweiligen Datenverarbeitungsschritte können beispielsweise ein Streichen eines oder mehrerer Schriftzeichen der jeweiligen Gruppe von Schriftzeichen umfassen. Genauso gut können die jeweiligen Datenverarbeitungsschritte ein Hinzufügen eines oder mehrerer weiterer Schriftzeichen zu der jeweiligen Gruppe von Schriftzeichen umfassen. Insbesondere gibt die jeweilige Levenshtein-Distanz an, wie groß die minimale Anzahl der jeweiligen Datenverarbeitungsschritte ist, um die jeweiligen sprachlichen Elemente des Zentralservers in die weiteren sprachlichen Elemente der Notiz umzuwandeln.

Je geringer das jeweilige weitere Ähnlichkeitsmaß, insbesondere die jeweilige Levenshtein-Distanz, der jeweiligen sprachlichen Elemente des Zentralservers ist, desto ähnlicher sind die jeweiligen sprachlichen Elemente des Zentralservers zu den weiteren sprachlichen Elementen der Notiz. Vorteilhafterweise werden diejenigen sprachlichen Elemente des Zentralservers als der weitere Teil der sprachlichen Elemente ausgewählt, deren Ähnlichkeitsmaß, insbesondere deren Levenshtein-Distanz, am niedrigsten ist.

Der weitere Befehl kann analog zu dem oben genannten ausgewählten Befehl, der auf dem ausgewählten Server ausgeführt wird, als weiterer ausgewählter Serverbefehl der oben genannten Serverbefehle betrachtet werden, wobei der weitere Befehl auf dem ausgewählten weiteren Server ausgeführt wird. Insbesondere kann der Zentralserver die Ausführung des weiteren ausgewählten Serverbefehls mithilfe der oben beschriebenen Befehlszuordnungen und in Abhängigkeit des ausgewählten weiteren Teils der sprachlichen Elemente auslösen.

Beispielsweise kann der Prozessor des Zentralservers den weiteren Befehl mithilfe der Befehlszuordnungen anhand des ausgewählten weiteren Teils der sprachlichen Elemente bestimmen. Hierzu kann gemäß einer Variante der Prozessor des Zentralservers dasjenige zweite Datenobjekt auslesen, in welchem die ausgewählte weitere Gruppe von Schriftzeichen gespeichert ist. Hierbei liest der Prozessor des Zentralservers automatisch den ausgewählten weiteren Befehl aus. Nachdem der Prozessor des Zentralservers den ausgewählten weiteren Befehl gelesen hat, sendet der Prozessor des Zentralservers den ausgewählten weiteren Befehl bevorzugt über die dritte Kommunikationsverbindung zu dem ausgewählten weiteren Server. Der ausgewählte weitere Server führt den ausgewählten weiteren Befehl bevorzugt aus, nachdem der ausgewählte weitere Server den ausgewählten weiteren Befehl empfangen hat.

Die Ausführung des ausgewählten weiteren Befehls wird zumindest insofern in Abhängigkeit des ausgewählten weiteren Teils der sprachlichen Elemente initiiert, als dass der ausgewählte weitere Befehl dem ausgewählten weiteren Teil der sprachlichen Elemente zugeordnet ist.

Gemäß einer weiteren Variante kann der Zentralserver die ausgewählten weiteren Teil der sprachlichen Elemente über die dritte Kommunikationsverbindung zu dem ausgewählten weiteren Server senden. Der ausgewählte weitere Server bestimmt im Anschluss daran den ausgewählten weiteren Befehl mithilfe desjenigen Satzes von Zuordnungen, die die sprachlichen Elemente, die dem ausgewählten weiteren Server zugeordnet sind, denjenigen Befehlen zuordnen, die auf dem ausgewählten weiteren Server ausführbar sind, und in Abhängigkeit von dem ausgewählten weiteren Teil der sprachlichen Elemente. Hierzu kann gemäß einer Variante ein Prozessor des ausgewählten weiteren Servers dasjenige zweite Datenobjekt auslesen, in welchem die ausgewählte weitere Gruppe von Schriftzeichen gespeichert ist. Hierbei liest der Prozessor des ausgewählten weiteren Servers automatisch den ausgewählten weiteren Befehl aus. Nachdem der Prozessor des ausgewählten weiteren Servers den ausgewählten weiteren Befehl gelesen hat, führt dieser oder ein weiterer Prozessor des ausgewählten weiteren Servers den ausgewählten weiteren Befehl bevorzugt aus.

Der Vorteil, das jeweilige weitere Ähnlichkeitsmaß, insbesondere die jeweilige Levenshtein-Distanz, zu verwenden kann darin bestehen, dass eine Ähnlichkeit zwischen einer Gruppe von Schriftzeichen des Zentralservers und der weiteren Gruppe von Schriftzeichen der Notiz gut detektierbar ist, selbst wenn diese Ähnlichkeit nicht oder nur unzureichend mithilfe der jeweiligen numerischen Werte, insbesondere der Vektoren oder kontextbezogenen Vektoren, detektiert werden kann. Dies kann zum Beispiel dann der Fall sein, wenn zumindest zwei Untergruppen der weiteren Gruppe von Schriftzeichen der Notiz eine unterschiedliche Bedeutung haben. In diesem Fall kann es beispielsweise vorkommen, dass diese unterschiedliche Bedeutung nicht durch eine der Gruppen von Schriftzeichen des Zentralservers repräsentiert wird. In diesem Fall kann der nächste Vektor unter Umständen nicht so genau oder gar nicht bestimmt werden. Das jeweilige weitere Ähnlichkeitsmaß, insbesondere die jeweilige Levenshtein-Distanz, kann demnach als zusätzliches Hilfsmittel dienen, zu möglichst vielen, insbesondere allen, sprachlichen Elementen der Notiz jeweils eine ähnliche Gruppe von Schriftzeichen aus der Menge der Gruppen von Schriftzeichen des Zentralservers zu finden.

Prinzipiell kann jedoch zunächst eine Ähnlichkeit der weiteren sprachlichen Elemente der Notiz zu den sprachlichen Elementen des Zentralservers mithilfe der numerischen Werte, insbesondere der Vektoren oder kontextbezogenen Vektoren, analog zu den sprachlichen Elementen der Notiz überprüft werden. Für den Fall, dass keine ausreichende Ähnlichkeit der Gruppen von Schriftzeichen des Zentralservers zu der weiteren Gruppe von Schriftzeichen der Notiz mithilfe der numerischen Werte , insbesondere der Vektoren oder kontextbezogenen Vektoren, festgestellt werden kann, wird dann bevorzugt wie oben beschrieben das jeweilige weitere Ähnlichkeitsmaß, insbesondere die jeweilige Levenshtein-Distanz, verwendet, um den ausgewählten weiteren Teil der sprachlichen Elemente auszuwählen.

Keine ausreichende Ähnlichkeit der Gruppen von Schriftzeichen des Zentralservers zu der weiteren Gruppe von Schriftzeichen der Notiz kann zum Beispiel dann vorliegen, wenn keines der Ähnlichkeitsmaße der Vektoren das vorgegebene Ähnlichkeitsmaß überschreitet oder, je nach Ausgestaltung des Ähnlichkeitsmaßes, unterschreitet.

Mitunter kann es vorkommen, dass die sprachlichen Elemente der Notiz einen Begriff aufweisen, von dem man im Voraus weiß, dass dieser nicht durch eine der Untergruppen von Schriftzeichen der Gruppen von Schriftzeichen des Zentralservers repräsentiert werden kann aber dennoch häufig vorkommen kann. Für diesen Anwendungsfall kann, insbesondere mithilfe des Zentralservers, eine Ausschlussliste von sprachlichen Elementen, eine sogenannte "Blacklist", bereitgestellt werden.

In einer vorteilhaften Ausführungsform des Verfahrens wird ein Umfang der sprachlichen Elemente der Notiz reduziert, in dem ein Teil der sprachlichen Elemente der Notiz verworfen wird. Ein verworfener Teil der sprachlichen Elemente der Notiz wird bevorzugt dadurch ermittelt, indem die sprachlichen Elemente der Notiz mit den sprachlichen Elementen der Ausschlussliste verglichen werden. Der verworfene Teil der sprachlichen Elemente der Notiz wird hierbei als derjenige Teil der sprachlichen Elemente der Notiz bestimmt, der eine Ähnlichkeit mit zumindest einem sprachlichen Element der Ausschlussliste aufweist. Die sprachlichen Elemente der Notiz ohne den verworfenen Teil werden im Folgenden reduzierte sprachliche Elemente genannt.

Anstatt der sprachlichen Elemente der Notiz werden bei dieser Ausführungsform bevorzugt die reduzierten sprachlichen Elemente zur Durchführung der oben beschriebenen Varianten des Verfahrens verwendet. Dadurch kann gemäß einer Variante der nächste Vektor einfacher ermittelt werden. Gemäß einer weiteren Variante können die jeweiligen Levenshtein-Distanzen dadurch reduziert werden.

Gemäß einer vorteilhaften Weiterbildung werden mehrere Teile der sprachlichen Elemente des Zentralservers in Abhängigkeit von der jeweiligen Ähnlichkeit zwischen den jeweiligen sprachlichen Elementen des Zentralservers und den sprachlichen Elementen der Notiz mithilfe des KI-Modul des Kommunikationsnetzwerks unter Verwendung der jeweiligen numerischen Werte ausgewählt. Hierbei kann eine jeweilige Auswahl einer der mehreren Teile der sprachlichen Elemente des Zentralservers analog zu der oben beschriebenen Auswahl des Teils der sprachlichen Elemente des Zentralservers erfolgen. So können beispielsweise für jeden der mehreren Teile ein jeweiliger nächster Vektor, vorzugweise mithilfe der oben beschriebenen kontextbezogenen Einbettung, bestimmt werden. Gemäß dieser Weiterbildung weisen die mehreren ausgewählten Teile der sprachlichen Elemente jeweils eine größere Ähnlichkeit zu den sprachlichen Elementen der Notiz als die übrigen sprachlichen Elemente des Zentralservers auf. Dies kann insbesondere derart verstanden werden, dass die übrigen sprachlichen Elemente des Zentralservers im Durchschnitt eine geringere Ähnlichkeit zu den sprachlichen Elementen der Notiz aufweisen als jeder der mehreren ausgewählten Teile der sprachlichen Elemente des Zentralservers.

Weiterhin werden die ausgewählten Teile der sprachlichen Elemente des Zentralservers für einen Benutzer bevorzugt sichtbar angezeigt. Beispielsweise können die ausgewählten Teile der sprachlichen Elemente des Zentralservers an einem Display des Mobilgerätes angezeigt werden. Der ausgewählte Server ist für den Benutzer bevorzugt in Abhängigkeit der angezeigten ausgewählten Teile der sprachlichen Elemente des Zentralservers bestimmbar. Beispielweise kann einer der angezeigten ausgewählten Teile der sprachlichen Elemente des Zentralservers angeklickt werden, wodurch der ausgewählte Server als derjenige Server bestimmt wird, der den sprachlichen Elementen des Zentralservers zugeordnet ist, die angeklickt werden.

Diese Weiterbildung hat insbesondere den Vorteil, dass für den Benutzer eine Möglichkeit gegeben wird, einen der angezeigten ausgewählten Teile zu bestimmen und damit den ausgewählten Server selbst als denjenigen Server zu bestimmen, der den sprachlichen Elementen des Zentralservers zugeordnet ist, die angeklickt werden.

In einer weiteren Ausgestaltung werden erweiterte sprachliche Elemente der Notiz erzeugt. Die erweiterten sprachlichen Elemente der Notiz weisen die sprachlichen Elemente der Notiz und personenbezogene sprachliche Elemente auf. Bei dieser Ausgestaltung erfolgt das Auswählen des Teils der sprachlichen Elemente des Zentralservers in Abhängigkeit von einer jeweiligen Ähnlichkeit zwischen den jeweiligen sprachlichen Elementen des Zentralservers und den erweiterten sprachlichen Elementen der Notiz mithilfe des KI-Moduls des Kommunikationsnetzwerks unter Verwendung der jeweiligen numerischen Werte. Der ausgewählte Teil der sprachlichen Elemente weist bei dieser Ausgestaltung eine größere Ähnlichkeit zu den erweiterten sprachlichen Elementen der Notiz als die übrigen sprachlichen Elemente des Zentralservers auf. Der ausgewählte Teil kann bei dieser Ausgestaltung nach einer der oben beschriebenen Varianten, bevorzugt mithilfe der kontextbezogenen Einbettung, bestimmt werden.

Die personenbezogenen sprachlichen Elemente können insbesondere einen Charakter, eine Eigenschaft oder eine Vorliebe einer Person beschreiben. Dadurch kann der ausgewählte Server, insbesondere die ausgewählte Funktion, auch in Abhängigkeit des Charakters, der Eigenschaft und/oder der Vorliebe der Person bestimmt werden.

Die personenbezogenen sprachlichen Elemente können in Abhängigkeit personenbezogenen Daten, die bevorzugt von dem mobilen Kommunikationsgerät zu dem Zentralserver übertragen werden, generiert werden.

Generell kann das Auswählen des ausgewählten Servers mithilfe des KI-Moduls in Abhängigkeit von den personenbezogenen Daten, die von dem mobilen Kommunikationsgerät zu dem Zentralserver übertragen werden, durchgeführt werden. Beispielsweise können die sprachlichen Elemente des Zentralservers in Abhängigkeit von den personenbezogenen Daten gefiltert werden, sodass ein Teil der sprachlichen Elemente des Zentralservers vor dem Auswählen des Teils der sprachlichen Elemente verworfen wird. Dadurch kann das Verfahren beschleunigt werden.

In einer weiteren Ausgestaltung des Verfahrens wird in Abhängigkeit der sprachlichen Elemente der Notiz zumindest ein Stichwort generiert. Weiterhin wird bei dieser Ausgestaltung eine Teilmenge der jeweiligen sprachlichen Elemente des Zentralservers in Abhängigkeit des Stichwortes bestimmt, wobei die jeweiligen sprachlichen Elemente der Teilmenge jeweils zumindest das Stichwort aufweisen. Bevorzugt wird der ausgewählte Teil der sprachlichen Elemente des Zentralservers in Abhängigkeit von der jeweiligen Ähnlichkeit zwischen den jeweiligen sprachlichen Elementen der Teilmenge und den sprachlichen Elementen der Notiz mithilfe des KI-Moduls unter Verwendung der jeweiligen numerischen Werte bestimmt. Dadurch, dass die Teilmenge mithilfe des Stichwortes bestimmt wird, kann eine Anzahl von möglichen Vergleichen zwischen den sprachlichen Elementen der Notiz und den sprachlichen Elementen des Zentralservers reduziert werden. Dies kann eine Durchführung des Verfahrens beschleunigen oder eine für das Verfahren erforderliche Rechenleistung reduzieren.

In einer weiteren Ausgestaltung weisen die sprachlichen Elemente der Notiz ein Zahlwort auf. Bei dieser Ausgestaltung des Verfahrens wird das Zahlwort identifiziert und der Befehl auf dem ausgewählten Server in Abhängigkeit des Zahlwortes wiederholt ausgeführt. Der Befehl wird insbesondere mit einer Häufigkeit auf dem ausgewählten Server wiederholt, die gleich dem Zahlwort ist. Eine Weiterbildung dieser Ausgestaltung kann vorsehen, der Umfang der sprachlichen Elemente der Notiz um das Zahlwort reduziert wird. Dadurch kann unter Umständen die Bedeutung der Gruppe von Schriftzeichen der Notiz mithilfe der Einbettung des Vergleichseingabevektors in den ersten Vektorraum leichter ermittelt werden.

Des Weiteren wird ein Kommunikationsnetzwerk vorgeschlagen. Das Kommunikationsnetzwerk weist ein mobiles Kommunikationsgerät, einen Zentralserver und Server auf. Auf dem Zentralserver sind jeweilige sprachliche Elemente gespeichert, die jeweils zumindest einem jeweiligen Server der Server zugeordnet sind und jeweils jeweiligen numerischen Werten zugeordnet sind. Weiterhin ist das Kommunikationsnetzwerk derart eingerichtet, dass auf dem jeweiligen Server jeweilige Befehle jeweils in Abhängigkeit der jeweiligen sprachlichen Elemente, die dem jeweiligen Server zugeordnet sind, ausführbar sind.

Das Kommunikationsnetzwerk ist ausgebildet und eingerichtet, eine Bilddatei von einer auf einer Fläche dargestellten Notiz, die sprachliche Elemente aufweist, mithilfe des mobilen Kommunikationsgerätes zu erstellen. Weiterhin ist das Kommunikationsnetzwerk ausgebildet und eingerichtet, die sprachlichen Elemente der Notiz in Abhängigkeit von der Bilddatei und mithilfe eines Texterkennungsmoduls des Kommunikationsnetzwerkes zu erkennen. Hierzu kann das Kommunikationsnetzwerk, insbesondere der Zentralserver oder das Mobilgerät, das Texterkennungsmodul aufweisen. Weiterhin ist das Kommunikationsnetzwerk ausgebildet und eingerichtet, Informationen über die sprachlichen Elemente der Notiz von dem mobilen Kommunikationsgerät zu dem Zentralserver über eine erste Kommunikationsverbindung zwischen dem mobilen Kommunikationsgerät und dem Zentralserver zu übertragen. Hierzu weist das Kommunikationsnetzwerk die erste Kommunikationsverbindung auf. Weiterhin ist das Kommunikationsnetzwerk ausgebildet und eingerichtet, einen Teil der sprachlichen Elemente des Zentralservers in Abhängigkeit von einer jeweiligen Ähnlichkeit zwischen den jeweiligen sprachlichen Elementen des Zentralservers und den sprachlichen Elementen der Notiz mithilfe eines künstlichen Intelligenzmoduls (KI-Modul) des Kommunikationsnetzwerks unter Verwendung der jeweiligen numerischen Werte auszuwählen. Hierzu weist das Kommunikationsnetzwerk, insbesondere der Zentralserver, das KI-Modul auf. Der ausgewählte Teil der sprachlichen Elemente weist eine größere Ähnlichkeit zu den sprachlichen Elementen der Notiz als die übrigen sprachlichen Elemente des Zentralservers auf. Weiterhin ist das Kommunikationsnetzwerk ausgebildet und eingerichtet, zumindest einen Server der Server auszuwählen, wobei dem ausgewählten Server zumindest der ausgewählte Teil der sprachlichen Elemente des Zentralservers zugeordnet ist. Weiterhin ist das Kommunikationsnetzwerk ausgebildet und eingerichtet, eine Ausführung zumindest eines Befehls der Befehle, die auf dem ausgewählten Server ausführbar sind, über eine zweite Kommunikationsverbindung zwischen dem zumindest einen ausgewählten Server und dem Zentralserver in Abhängigkeit des ausgewählten Teils der sprachlichen Elemente zu initiieren, wobei der Befehl auf dem ausgewählten Server ausführbar ist. Hierzu weist das Kommunikationsnetzwerk die zweite Kommunikationsverbindung auf.

In einer vorteilhaften Ausgestaltung ist das Kommunikationsnetzwerk ausgebildet und eingerichtet, jeweilige Vektoren jeweils in Abhängigkeit der jeweiligen sprachlichen Elemente des Zentralservers zu erzeugen. Die jeweiligen numerischen Werte, die den jeweiligen sprachlichen Elementen des Zentralservers zugeordnet sind, sind in Form von Einträgen des jeweiligen Vektors ausgebildet. Der jeweilige Vektor repräsentiert die jeweiligen sprachlichen Elemente des Zentralservers in einem ersten Vektorraum. Bei dieser Ausgestaltung ist das Kommunikationsnetzwerk ausgebildet und eingerichtet, einen Vergleichsvektor in Abhängigkeit von den sprachlichen Elementen der Notiz zu erzeugen, wobei der Vergleichsvektor die sprachlichen Elemente der Notiz in dem ersten Vektorraum repräsentiert. Weiterhin ist das Kommunikationsnetzwerk bevorzugt ausgebildet und eingerichtet, ein jeweiliges Ähnlichkeitsmaß für den jeweiligen Vektor, wie oben beschrieben, zu bestimmen, das jeweils ein Maß für eine Ähnlichkeit zwischen dem jeweiligen Vektor und dem Vergleichsvektor angibt. Weiterhin ist das Kommunikationsnetzwerk bevorzugt ausgebildet und eingerichtet, einen nächsten Vektor als denjenigen der Vektoren zu bestimmen, der dem Vergleichsvektor unter Berücksichtigung der Ähnlichkeitsmaße am ähnlichsten ist. Weiterhin ist das Kommunikationsnetzwerk bevorzugt ausgebildet und eingerichtet, den Server anhand des nächsten Vektors, wie oben beschrieben, auszuwählen, wobei die sprachlichen Elemente, in Abhängigkeit derer der nächste Vektor erzeugt ist, dem ausgewählten Server zugeordnet sind.

Weiterhin wird ein Computerprogrammprodukt vorgeschlagen. Das Computerprogrammprodukt umfasst ein Programm, das, wenn es von einem oder mehreren Prozessoren ausgeführt wird, den Prozessor oder die Prozessoren veranlasst, ein Verfahren nach einem oben beschriebenen Varianten durchzuführen. Das Programm kann insbesondere das oben genannte Computerprogramm umfassen. Die Prozessoren können insbesondere einen Prozessor des Mobilgerätes zum Erstellen der Bilddatei, den Prozessor des Zentralservers zum Ausführen von oben beschriebenen Schritten des KI-Moduls und einen Prozessors des ausgewählten Servers umfassen. Der ausgewählte Befehl wird von einem Prozessor des ausgewählten Servers ausgeführt.

Bevorzugte Ausführungsbeispiele werden anhand der folgenden Figuren näher erläutert. Die abhängigen Ansprüche beschreiben weitere vorteilhafte Ausführungsformen der Erfindung. Dabei zeigt schematisch
- Figur 1: ein Kommunikationsnetzwerk mit Servern, einem Zentralserver und einem mobilen Kommunikationsgerät;
- Figur 2: eine auf einer Fläche dargestellte Notiz mit sprachlichen Elementen;
- Figur 3: das in Figur 1 gezeigte Mobilgerät mit einer Kamera und einem Texterkennungsmodul;
- Figur 4: Untergruppen von ersten sprachlichen Elementen des in Figur 1 gezeigten Zentralservers und zu den Untergruppen der ersten sprachlichen Elemente zugeordnete Einbettungsvektoren;
- Figur 5: Untergruppen von zweiten sprachlichen Elementen des in Figur 1 gezeigten Zentralservers und zu den Untergruppen der zweiten sprachlichen Elemente zugeordnete Einbettungsvektoren;
- Figur 6: Untergruppen von dritten sprachlichen Elementen des in Figur 1 gezeigten Zentralservers und zu den Untergruppen der dritten sprachlichen Elemente zugeordnete Einbettungsvektoren;
- Figur 7: Untergruppen von vierten sprachlichen Elementen des in Figur 1 gezeigten Zentralservers und zu den Untergruppen der vierten sprachlichen Elemente zugeordnete Einbettungsvektoren;
- Figur 8: Untergruppen von ersten sprachlichen Elementen der in Figur 2 gezeigten Notiz und zu den Untergruppen der ersten sprachlichen Elemente der Notiz zugeordnete Einbettungsvektoren;
- Figur 9: Untergruppen von zweiten sprachlichen Elementen der in Figur 2 gezeigten Notiz und zu den Untergruppen der zweiten sprachlichen Elemente der Notiz zugeordnete Einbettungsvektoren;
- Figur 10: Untergruppen der ersten sprachlichen Elemente des in Figur 1 gezeigten Zentralservers und zu den Untergruppen der ersten sprachlichen Elemente zugeordnete kontextbezogene Einbettungsvektoren;
- Figur 11: Schritte eines Verfahrens zur Kommunikation in dem in Figur 1 gezeigten Kommunikationsnetzwerk.

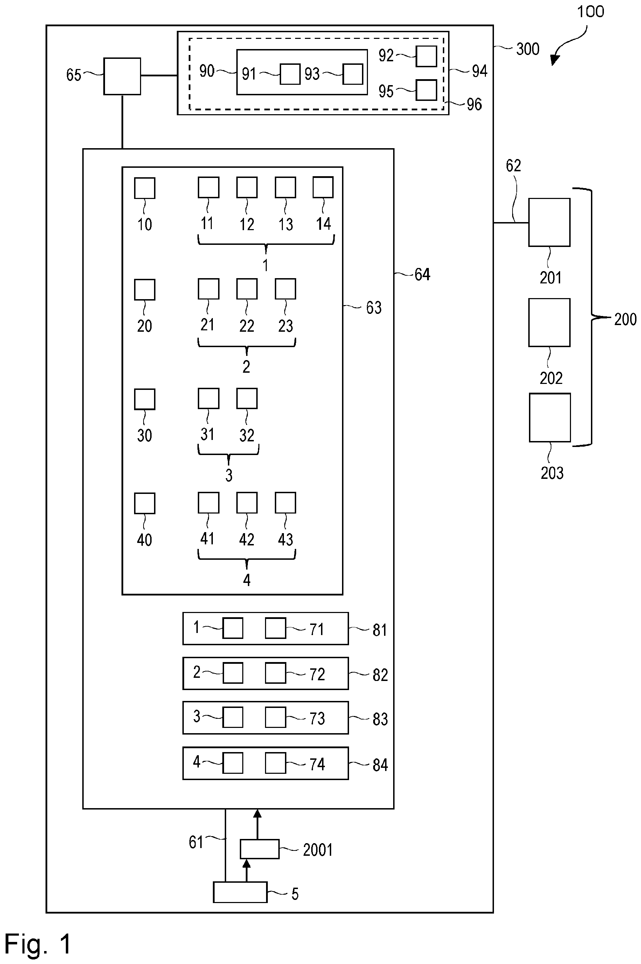

Fig. 1 zeigt ein Kommunikationsnetzwerk 100. Das Kommunikationsnetzwerk 100 weist ein mobiles Kommunikationsgerät 5, einen Zentralserver 300 und Server 200 auf. Die Server 200 umfassen bei der in Fig. 1 gezeigten Ausführungsform einen ersten Server 201, einen zweiten Server 202 und einen dritten Server 203. Auf dem Zentralserver 300 sind jeweilige sprachliche Elemente, darunter erste sprachliche Elemente 1, zweite sprachliche Elemente 2, dritte sprachliche Elemente 3 und vierte sprachliche Elemente 4, gespeichert. Die sprachlichen Elemente 1, 2, 3, 4, im Folgenden auch als sprachliche Elemente des Zentralservers 300 bezeichnet, sind jeweils zumindest einem jeweiligen Server der Server 200 zugeordnet. So können beispielsweise die ersten sprachlichen Elemente 1 und die zweiten sprachlichen Elemente 2 dem ersten Server 201 zugeordnet sein. Weiterhin können beispielsweise die dritten sprachlichen Elemente 3 dem zweiten Server 202 und die vierten sprachlichen Elemente 4 dem dritten Server 203 zugeordnet sein.

Eine Zuordnung der jeweiligen sprachlichen Elemente des Zentralservers 300 zu dem jeweiligen Server der Server 200 kann beispielsweise durch eine Datenstruktur 63 bereitgestellt werden. Die Datenstruktur 63 ist bevorzugt auf einem Speicher 64 des Zentralservers 300 gespeichert.

Die Datenstruktur 63 kann beispielsweise ein erstes Datenobjekt aufweisen, das ein erstes Identifizierungsmerkmal 10 und die ersten sprachlichen Elemente 1 enthält. Die ersten sprachlichen Elemente 1 weisen beispielsweise eine erste Untergruppe 11 von Schriftzeichen, eine zweite Untergruppe 12 von Schriftzeichen, eine dritte Untergruppe 13 von Schriftzeichen und eine vierte Untergruppe 14 von Schriftzeichen auf. Das erste Identifizierungsmerkmal 10 kann beispielsweise den Wert "1" aufweisen, um anzugeben, dass die ersten sprachlichen Elemente 1 dem ersten Server 201 zugeordnet sind.

Weiterhin kann die Datenstruktur 63 ein zweites Datenobjekt aufweisen, das ein zweites Identifizierungsmerkmal 20 und die zweiten sprachlichen Elemente 2 enthält. Die zweiten sprachlichen Elemente 2 weisen beispielsweise eine erste Untergruppe 21 von Schriftzeichen, eine zweite Untergruppe 22 von Schriftzeichen und eine dritte Untergruppe 23 von Schriftzeichen auf. Das zweite Identifizierungsmerkmal 20 kann beispielsweise den Wert "1" aufweisen, um anzugeben, dass die zweiten sprachlichen Elemente 2 dem ersten Server 201 zugeordnet sind.

Weiterhin kann die Datenstruktur 63 ein drittes Datenobjekt aufweisen, das ein drittes Identifizierungsmerkmal 30 und die dritten sprachlichen Elemente 3 enthält. Die dritten sprachlichen Elemente 3 weisen beispielsweise eine erste Untergruppe 31 von Schriftzeichen und eine zweite Untergruppe 32 von Schriftzeichen auf. Das dritte Identifizierungsmerkmal 30 kann beispielsweise den Wert "2" aufweisen, um anzugeben, dass die dritten sprachlichen Elemente 3 dem zweiten Server 202 zugeordnet sind.

Weiterhin kann die Datenstruktur 63 ein viertes Datenobjekt aufweisen, das ein viertes Identifizierungsmerkmal 40 und die vierten sprachlichen Elemente 2 enthält. Die vierten sprachlichen Elemente 4 weisen beispielsweise eine erste Untergruppe 41 von Schriftzeichen, eine zweite Untergruppe 42 von Schriftzeichen und eine dritte Untergruppe 43 von Schriftzeichen auf. Das vierte Identifizierungsmerkmal 40 kann beispielsweise den Wert "3" aufweisen, um anzugeben, dass die vierten sprachlichen Elemente 4 dem dritten Server 203 zugeordnet sind.

Die jeweiligen Untergruppen 11, 12, 13, 14, 21, 22, 23, 31, 32, 41, 42, 43 können beispielsweise jeweils Silben oder ganze Wörter sein.

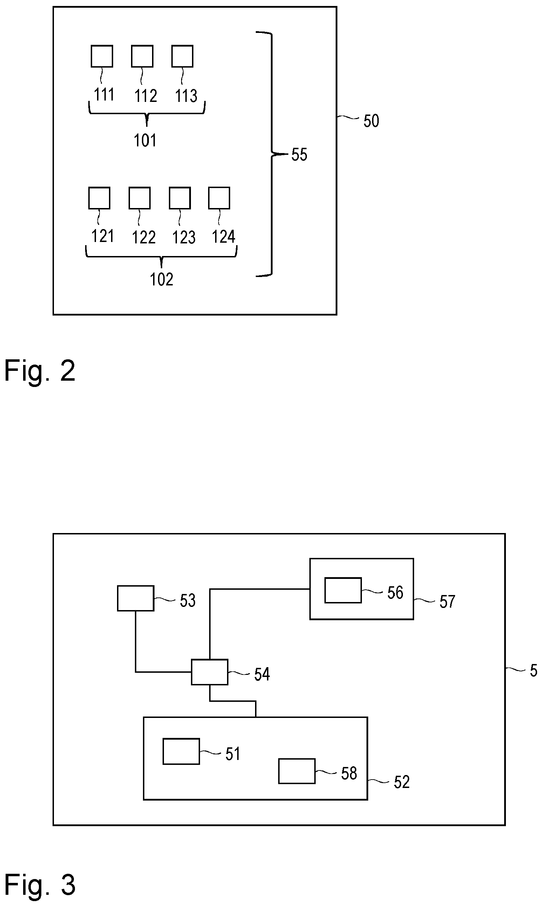

Das mobile Kommunikationsgerät 5 ist bevorzugt ausgebildet und eingerichtet, eine Bilddatei 51 von einer auf einer Fläche 50 dargestellten Notiz 55 zu erstellen. Die Notiz 55 weist, wie in Figur 2 gezeigt, erste sprachliche Elemente 101 und zweite sprachliche Elemente 102 auf. Die ersten sprachlichen Elemente 101 der Notiz 55 können in eine erste Untergruppe 111 von Schriftzeichen, eine zweite Untergruppe 112 von Schriftzeichen und eine dritte Untergruppe 113 von Schriftzeichen eingeteilt werden. Gemäß der in Fig. 2 dargestellten Ausführungsform weisen die zweiten sprachlichen Elemente 102 der Notiz 55 eine erste Untergruppe 121 von Schriftzeichen, eine zweite Untergruppe 122 von Schriftzeichen, eine dritte Untergruppe 123 von Schriftzeichen und eine vierte Untergruppe 124 von Schriftzeichen auf. Die Untergruppen 111, 112, 113 können zusammen genommen als eine erste Gruppe von Schriftzeichen der Notiz 55 und die Untergruppen 121, 122, 123, 124 zusammen genommen als eine zweite Gruppe von Schriftzeichen der Notiz 55 aufgefasst werden. Das heißt, die erste Gruppe von Schriftzeichen der Notiz 55 bildet die ersten sprachlichen Elemente 101 der Notiz 55.

Gemäß einer vorteilhaften Ausgestaltung weist das Mobilgerät 5 eine Kamera 53 auf, um die Bilddatei 51 zu erstellen. Beispielsweise kann ein Prozessor 54 des Mobilgerätes 5 Signale von Photodioden der Kamera 53 derart verarbeiten, dass die Bilddatei 51 generiert wird. Die Bilddatei 51 kann beispielsweise in Form einer Rastergrafik ausgebildet sein. Insbesondere kann die Bilddatei 51 Pixelwerte enthalten. Die Pixelwerte geben jeweils insbesondere eine Helligkeit, insbesondere auch einen Farbwert, an. Die Bilddatei 51 kann vorteilhafterweise in einem Speicher 52 des Mobilgerätes 5 gespeichert sein.

Weiterhin ist das Kommunikationsnetzwerk 100 vorteilhafterweise ausgebildet und eingerichtet, die sprachlichen Elemente 101, 102 der Notiz 55 in Abhängigkeit von der Bilddatei 51 und mit Hilfe eines Texterkennungsmoduls 56 des Kommunikationsnetzwerkes 100 zu erkennen. Bei dem in Fig. 3 gezeigten Beispiel ist das Texterkennungsmodul 56 des Kommunikationsnetzwerkes 100 in dem Mobilgerät 5 integriert. Bevorzugt ist das Texterkennungsmodul 56 in einem RAM 57 des Mobilgerätes 5 in Form einer Software gespeichert. Vorteilhafterweise kann der Prozessor 54 Befehle des Texterkennungsmoduls 56 ausführen, um die Bilddatei 51 in eine Textdatei 58 umzuwandeln. Der Prozessor 54 speichert die Textdatei 58 vorteilhafterweise in dem Speicher 52 ab.

Eine Ausführung der Befehle des Texterkennungsmoduls 56 mit Hilfe des Prozessors 54 kann beispielsweise eine Durchführung einer Mustererkennung, insbesondere mit Hilfe von neuronalen Netzen, umfassen. Bevorzugt ist das Texterkennungsmodul 56 ausgebildet und eingerichtet, insbesondere bei der Durchführung der Mustererkennung, anhand von gemäß der Rastergrafik nebeneinander angeordneten Pixelwerten der Bilddatei 51 Schriftzeichen der Notiz 55, insbesondere die Untergruppen 111, 112, 113, 121, 122, 123, 124 von Schriftzeichen, zu erkennen. Mit Hilfe des Texterkennungsmoduls 56 können die ersten sprachlichen Elemente 101 der Notiz 55 und die zweiten sprachlichen Elemente 102 der Notiz 55 jeweils bevorzugt in Form eines ASCII-Codes bereitgestellt werden. Entsprechend kann die Textdatei 58 die ersten sprachlichen Elemente 101 der Notiz 55 und die zweiten sprachlichen Elemente 102 der Notiz 55 in Form von jeweiligen ASCII-Zeichen aufweisen.

Weiterhin ist das Kommunikationsnetzwerk 100 ausgebildet und eingerichtet, Informationen über die sprachlichen Elemente 101, 102 der Notiz 55 von dem Mobilgerät 5 zu dem Zentralserver 300 über eine erste Kommunikationsverbindung 61 zwischen dem Mobilgerät 5 und dem Zentralserver 300 zu übertragen.

Gemäß einer möglichen Ausführungsform können die Informationen über die sprachlichen Elemente der Notiz 55 in Form der Textdatei 58 zu dem Zentralserver 300 übertragen werden. Hierbei wird die Textdatei 58 vorteilhafterweise mithilfe einer Nachricht 2001 von dem Mobilgerät 5 zu dem Zentralserver 300 gesendet. Die erste Kommunikationsverbindung 61 kann beispielsweise in Form einer Mobilfunkverbindung ausgebildet sein. Insbesondere wird die Information über die sprachlichen Elemente der Notiz 55 über Funk von dem Mobilgerät 5 zu einem Empfangsmast und von dem Empfangsmast zu dem Zentralserver 300 gesendet.

Gemäß einer weiteren Ausgestaltung können die Informationen über die sprachlichen Elemente der Notiz 55 auch in Form der Bilddatei 51 von dem Mobilgerät 5 zu dem Zentralserver 300 gesendet werden. Hierbei wird bevorzugt die Bilddatei 51 anstatt der Textdatei 58 über die erste Kommunikationsverbindung 61 mit Hilfe der Nachricht 2001 von dem Mobilgerät 5 zu dem Zentralserver 300 gesendet. Bei dieser Variante erfolgt eine Umwandlung der Bilddatei 51 in die Textdatei 58 mit Hilfe des Texterkennungsmoduls 56 vorzugsweise auf dem Zentralserver 300. Hierbei kann ein Prozessor 65 des Zentralservers 300 analog wie der Prozessor 54, wie oben beschrieben, die Befehle des Texterkennungsmoduls 56 ausführen, um die Textdatei 58 in Abhängigkeit von der Bilddatei 51 zu erzeugen.

Des Weiteren ist das Kommunikationsnetzwerk 100 vorteilhafterweise ausgebildet und eingerichtet, die jeweiligen sprachlichen Elemente 1, 2, 3, 4 des Zentralservers 300 zu jeweiligen numerischen Werten zuzuordnen.

Insbesondere ist der Prozessor 65 oder einer der Prozessoren der Server 200 ausgebildet und eingerichtet, den Untergruppen 11, 12, 13, 14 der ersten sprachlichen Elemente 1, im Folgenden auch erste Gruppe von sprachlichen Elementen oder abgekürzt erste Gruppe genannt, jeweils jeweilige erste numerische Werte zuzuordnen.

Weiterhin ist der Prozessor 65 oder einer der Prozessoren der Server 200 vorteilhaft ausgebildet und eingerichtet, den Untergruppen 21, 22, 23 der zweiten sprachlichen Elemente 2, im Folgenden auch zweite Gruppe von sprachlichen Elementen oder abgekürzt zweite Gruppe genannt, jeweils jeweilige zweite numerische Werte zuzuordnen.

Weiterhin ist der Prozessor 65 oder einer der Prozessoren der Server 200 vorteilhaft ausgebildet und eingerichtet, den Untergruppen 31, 32 der dritten sprachlichen Elemente 3, im Folgenden auch dritte Gruppe von sprachlichen Elementen oder abgekürzt dritte Gruppe genannt, jeweils jeweilige dritte numerische Werte zuzuordnen.

Analog ist der Prozessor 65 oder einer der Prozessoren der Server 200 vorteilhaft ausgebildet und eingerichtet, den Untergruppen 41, 42, 43 der vierten sprachlichen Elemente 4, im Folgenden auch vierte Gruppe von sprachlichen Elementen oder abgekürzt vierte Gruppe genannt, jeweils jeweilige vierte numerische Werte zuzuordnen.

Möglich ist auch, dass das Kommunikationsnetzwerk 100, insbesondere der Zentralserver 300, den jeweiligen sprachlichen Elementen 1, 2, 3, 4 jeweilige numerischen Werte zuordnet. Weiterhin kann vorgesehen sein, dass den jeweiligen sprachlichen Elementen 1, 2, 3, 4 des Zentralservers 300 jeweils ein Vektor zugeordnet wird. In einer Weiterbildung können auch den jeweiligen Untergruppen von Schriftzeichen der sprachlichen Elemente des Zentralservers 300 jeweils ein Vektor zugeordnet werden.

Im Folgenden wird eine Variante beschrieben, bei welcher zunächst für jede Untergruppe von Schriftzeichen der jeweiligen sprachlichen Elemente des Zentralservers 300 und der Notiz 55 ein jeweiliger Wert, nämlich ein jeweiliger Untergruppenidentifikator, zugeordnet wird.

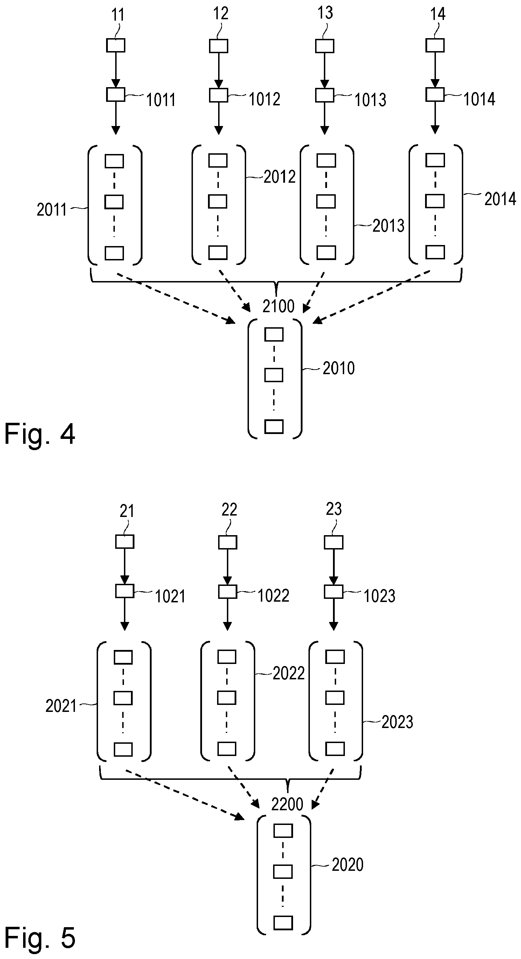

So zeigt Fig. 4 schematisch, dass der ersten Untergruppe 11 von Schriftzeichen der ersten Gruppe ein erster Untergruppenidentifikator 1011 der ersten Gruppe zugeordnet wird. Analog wird der zweiten Untergruppe 12 von Schriftzeichen der ersten Gruppe ein zweiter Untergruppenidentifikator 1012 der ersten Gruppe zugeordnet. Analog wird der dritten Untergruppe 13 von Schriftzeichen der ersten Gruppe ein dritter Untergruppenidentifikator 1013 der ersten Gruppe zugeordnet. Entsprechend wird der vierten Untergruppe 14 von Schriftzeichen der ersten Gruppe ein vierter Untergruppenidentifikator 1014 der ersten Gruppe zugeordnet.

Fig. 5 zeigt, wie in analoger Weise der ersten Untergruppe 21 von Schriftzeichen der zweiten Gruppe ein erster Untergruppenidentifikator 1021 der zweiten Gruppe, der zweiten Untergruppe 22 von Schriftzeichen der zweiten Gruppe ein zweiter Untergruppenidentifikator 1022 der zweiten Gruppe und der dritten Untergruppe 23 von Schriftzeichen der zweiten Gruppe ein dritter Untergruppenidentifikator 1023 der zweiten Gruppe zugeordnet wird.

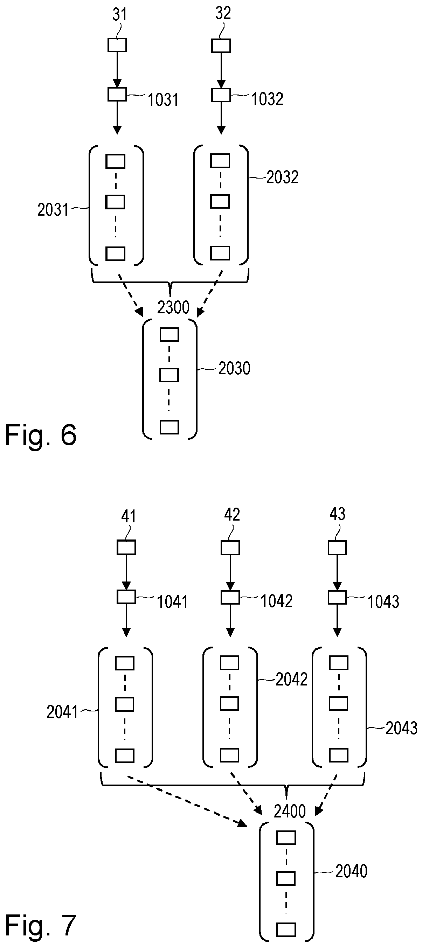

Fig. 6 zeigt, wie in analoger Weise der ersten Untergruppe 31 von Schriftzeichen der dritten Gruppe ein erster Untergruppenidentifikator 1031 der dritten Gruppe und der zweiten Untergruppe 32 von Schriftzeichen der dritten Gruppe ein zweiter Untergruppenidentifikator 1032 der dritten Gruppe zugeordnet wird.

Fig. 7 zeigt, wie in analoger Weise der ersten Untergruppe 41 von Schriftzeichen der vierten Gruppe ein erster Untergruppenidentifikator 1041 der vierten Gruppe, der zweiten Untergruppe 42 von Schriftzeichen der vierten Gruppe ein zweiter Untergruppenidentifikator 1042 der vierten Gruppe und der dritten Untergruppe 43 von Schriftzeichen der vierten Gruppe ein dritter Untergruppenidentifikator 1043 der vierten Gruppe zugeordnet wird.

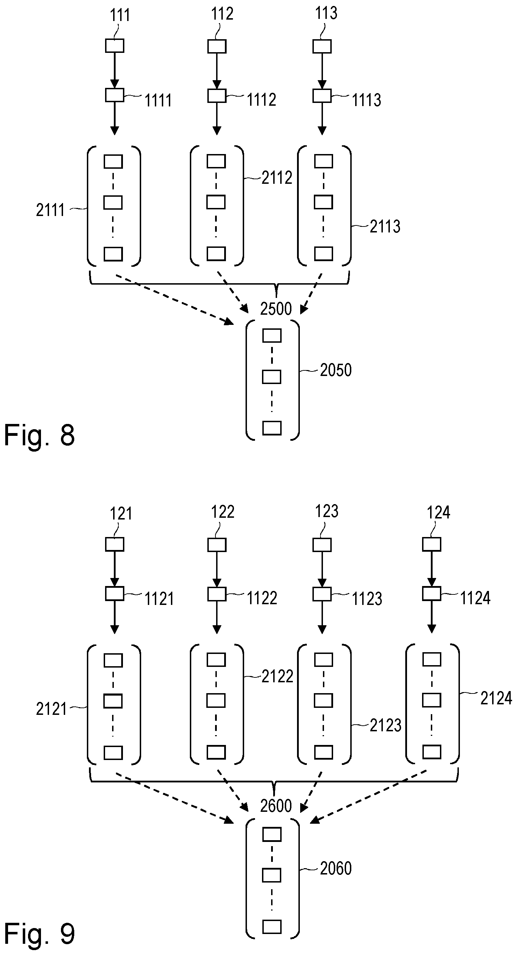

Fig. 8 zeigt, wie in analoger Weise der ersten Untergruppe 111 von Schriftzeichen der ersten Gruppe von Schriftzeichen der Notiz 55 ein erster Untergruppenidentifikator 1111 der ersten Gruppe von Schriftzeichen der Notiz 55 zugeordnet wird. Entsprechend werden der zweiten Untergruppe 112 von Schriftzeichen der ersten Gruppe von Schriftzeichen der Notiz 55 ein zweiter Untergruppenidentifikator 1112 der ersten Gruppe von Schriftzeichen der Notiz 55 und der dritten Untergruppe 113 von Schriftzeichen der ersten Gruppe von Schriftzeichen der Notiz 55 ein dritter Untergruppenidentifikator 1113 der ersten Gruppe von Schriftzeichen der Notiz 55 zugeordnet.

In analoger Weise werden der ersten Untergruppe 121 von Schriftzeichen der zweiten Gruppe von Schriftzeichen der Notiz 55 ein zweiter Untergruppenidentifikator 1121 der zweiten Gruppe von Schriftzeichen der Notiz 55 der zweiten Untergruppe 122 von Schriftzeichen der zweiten Gruppe von Schriftzeichen der Notiz 55 ein zweiter Untergruppenidentifikator 1122 der zweiten Gruppe von Schriftzeichen der Notiz 55, der dritten Untergruppe 123 von Schriftzeichen der zweiten Gruppe von Schriftzeichen der Notiz 55 ein dritter Untergruppenidentifikator 1123 der zweiten Gruppe von Schriftzeichen der Notiz 55 und der vierten Untergruppe 124 von Schriftzeichen der zweiten Gruppe von Schriftzeichen der Notiz 55 ein vierter Untergruppenidentifikator 1124 der zweiten Gruppe von Schriftzeichen der Notiz 55 zugeordnet.

Vorteilhafterweise weist das Kommunikationsnetzwerk 100, insbesondere der Zentralserver 300, ein Einbettungsmodul 91 auf. Das Einbettungsmodul 91 ist bevorzugt ausgebildet und eingerichtet, für die Untergruppen von Schriftzeichen der jeweiligen Gruppen von Schriftzeichen einen jeweiligen Einbettungsvektor bereitzustellen, das heißt in diesem Fall insbesondere zu laden oder zu erzeugen.

So kann beispielsweise mit Hilfe des Einbettungsmoduls 91 ein erster Einbettungsvektor 2011 der ersten Gruppe in Abhängigkeit von der ersten Untergruppe 11 von Schriftzeichen der ersten Gruppe, insbesondere in Abhängigkeit von dem ersten Untergruppenidentifikator 1011 der ersten Gruppe, bereitgestellt werden.

Analog können mit Hilfe des Einbettungsmoduls 91 für die zweite Untergruppe 12, die dritte Untergruppe 13 und die vierte Untergruppe 14 der ersten Gruppe entsprechend ein zweiter Einbettungsvektor 2012, ein dritter Einbettungsvektor 2013 beziehungsweise ein vierter Einbettungsvektor 2014 der ersten Gruppe bereitgestellt werden.

Analog können mit Hilfe des Einbettungsmoduls 91 für die erste Untergruppe 21, die zweite Untergruppe 22 und die dritte Untergruppe 23 der zweiten Gruppe entsprechend ein erster Einbettungsvektor 2021, ein zweiter Einbettungsvektor 2022 beziehungsweise ein dritter Einbettungsvektor 2023 der zweiten Gruppe bereitgestellt werden.

Analog können mit Hilfe des Einbettungsmoduls 91 für die erste Untergruppe 31 und die zweite Untergruppe 32 der dritten Gruppe entsprechend ein erster Einbettungsvektor 2031 beziehungsweise ein zweiter Einbettungsvektor 2032 der dritten Gruppe bereitgestellt werden.

Analog können mit Hilfe des Einbettungsmoduls 91 für die erste Untergruppe 41, die zweite Untergruppe 42 und die dritte Untergruppe 43 der vierten Gruppe entsprechend ein erster Einbettungsvektor 2041, ein zweiter Einbettungsvektor 2042 beziehungsweise ein dritter Einbettungsvektor 2043 der vierten Gruppe bereitgestellt werden.

Vorteilhafterweise wird mit Hilfe des Einbettungsmoduls 91 für jede Untergruppe von Schriftzeichen der Gruppe von Schriftzeichen der Notiz 55 ein jeweiliger weiterer Einbettungsvektor erzeugt.

Die erste Gruppe von Schriftzeichen der Notiz 55 wird im Folgenden erste Gruppe der Notiz genannt. Analog wird im Folgenden die zweite Gruppe von Schriftzeichen der Notiz 55 zweite Gruppe der Notiz genannt.

Fig. 8 zeigt, wie für die erste Untergruppe 111 der ersten Gruppe der Notiz ein erster weiterer Einbettungsvektor 2111 der ersten Gruppe der Notiz, bevorzugt mit Hilfe des ersten Untergruppenidentifikators 1111 der ersten Gruppe der Notiz, generiert wird. Analog wird bevorzugt für die zweite Untergruppe 112 und für die dritte Untergruppe 113 der ersten Gruppe der Notiz ein zweiter weiterer Einbettungsvektor 2112 beziehungsweise ein dritter weiterer Einbettungsvektor 2113 der ersten Gruppe der Notiz, bevorzugt mit Hilfe des zweiten Untergruppenidentifikators 1112 beziehungsweise des dritten Untergruppenidentifikators 1113 der ersten Gruppe der Notiz, generiert.

Analog wird bevorzugt für die erste Untergruppe 121, die zweite Untergruppe 122, die dritte Untergruppe 123 und für die vierte Untergruppe 124 der zweiten Gruppe der Notiz ein erster weiterer Einbettungsvektor 2121, ein zweiter weiterer Einbettungsvektor 2122, ein dritter weiterer Einbettungsvektor 2123 beziehungsweise ein vierter weiterer Einbettungsvektor 2124 der zweiten Gruppe der Notiz, bevorzugt mit Hilfe des ersten Untergruppenidentifikators 1121, des zweiten Untergruppenidentifikators 1122, des dritten Untergruppenidentifikators 1113 beziehungsweise des vierten Untergruppenidentifikators 1114 der zweiten Gruppe der Notiz, generiert.

Der jeweilige Einbettungsvektor 2011, 2012, 2013, 2014, 2021, 2022, 2023, 2031, 2032, 2041, 2042, 2043, 2111, 2112, 2113, 2121, 2122, 2123 und 2124 wird in Abhängigkeit von der jeweiligen Untergruppe 11, 12, 13, 14, 21, 22, 23, 31, 32, 41, 42, 43, 111, 112, 113, 121, 122, 123 beziehungsweise 124, insbesondere in Abhängigkeit von dem jeweiligen Untergruppenidentifikator 1011, 1012, 1013, 1014, 1021, 1022, 1023, 1031, 1032, 1041, 1042, 1043, 1111, 1112, 1113, 1121, 1122, 1123 beziehungsweise 1124, bereitgestellt. Um den jeweiligen Untergruppenidentifikator 1011, 1012, 1013, 1014, 1021, 1022, 1023, 1031, 1032, 1041, 1042, 1043, 1111, 1112, 1113, 1121, 1122, 1123 und 1124 in Abhängigkeit von der jeweiligen Untergruppe 11, 12, 13, 14, 21, 22, 23, 31, 32, 41, 42, 43, 111, 112, 113, 121, 122, 123 beziehungsweise 124 zu bestimmen, kann beispielsweise eine Bibliothek 92 des Zentralservers 300 verwendet werden. Die Bibliothek 92 stellt bevorzugt eine jeweilige Zuordnung von verschiedenen unterschiedlichen Untergruppen von Schriftzeichen, im Umfang von bevorzugt etwa 20.000 bis 40.000 Untergruppen von Schriftzeichen, zu jeweiligen Untergruppenidentifikatoren zur Verfügung. Die Untergruppenidentifikatoren 1011, 1012, 1013, 1014, 1021, 1022, 1023, 1031, 1032, 1041, 1042, 1043, 1111, 1112, 1113, 1121, 1122, 1123 und 1124 können beispielsweise in Form von natürlichen Zahlen ausgebildet sein. Insbesondere kann vorgesehen sein, dass die Untergruppenidentifikatoren 1011, 1012, 1013, 1014, 1021, 1022, 1023, 1031, 1032, 1041, 1042, 1043, 1111, 1112, 1113, 1121, 1122, 1123 und 1124 zum Indexieren der Einbettungsvektoren 2011, 2012, 2013, 2014, 2021, 2022, 2023, 2031, 2032, 2041, 2042, 2043, 2111, 2112, 2113, 2121, 2122, 2123 beziehungsweise 2124 verwendet werden.

Vorteilhafterweise weist der Zentralserver 300 ein Untergruppenerkennungsmodul 93 auf. Das Untergruppenerkennungsmodul 93 ist bevorzugt ausgebildet und eingerichtet, in Abhängigkeit von der Textdatei 58 die jeweiligen Untergruppen von Schriftzeichen der Notiz 55, beispielsweise die Untergruppen 111, 112, 113, 121, 122, 123, 124, in Abhängigkeit von den ASCII-Zeichen der Textdatei 58 zu erkennen. Analog kann das Untergruppenerkennungsmodul 93 bevorzugt in Abhängigkeit von den jeweiligen sprachlichen Elementen 1, 2, 3, 4 des Zentralservers 300, insbesondere in Abhängigkeit von ASCII-Zeichen der jeweiligen sprachlichen Elemente 1, 2, 3, 4 des Zentralservers 300, die Untergruppen 11, 12, 13, 14, 21, 22, 23, 31, 32, 41, 42, 43 erkennen.

Die Einbettungsvektoren 2011, 2012, 2013, 2014, 2021, 2022, 2023, 2031, 2032, 2041, 2042, 2043, 2111, 2112, 2113, 2121, 2122, 2123, 2124 sind in Fig. 4 schematisch mit Hilfe von runden Klammern dargestellt. Einzelne numerische Werte, die einen jeweiligen Eintrag der jeweiligen Einbettungsvektoren 2011, 2012, 2013, 2014, 2021, 2022, 2023, 2031, 2032, 2041, 2042, 2043, 2111, 2112, 2113, 2121, 2122, 2123, 2124 ausbilden, sind in Fig. 4 lediglich schematisch mit Hilfe eines Rechtecks dargestellt. Diese numerischen Werte können bevorzugt reelle Zahlen, vorteilhafterweise positive reelle Zahlen, sein. Eine Dimension der jeweiligen Einbettungsvektoren 2011, 2012, 2013, 2014, 2021, 2022, 2023, 2031, 2032, 2041, 2042, 2043, 2111, 2112, 2113, 2121, 2122, 2123, 2124 liegt vorzugsweise in einem Bereich von etwa 100 bis 1000. Der Übersicht halber sind in den Figuren jeweils nur drei Werte der Einbettungsvektoren in Form von Rechtecken dargestellt. Weiterhin weisen die jeweiligen Einbettungsvektoren 2011, 2012, 2013, 2014, 2021, 2022, 2023, 2031, 2032, 2041, 2042, 2043, 2111, 2112, 2113, 2121, 2122, 2123, 2124 bevorzugt dieselbe Dimension auf.

Der jeweilige Einbettungsvektor 2011, 2012, 2013, 2014, 2021, 2022, 2023, 2031, 2032, 2041, 2042, 2043, 2111, 2112, 2113, 2121, 2122, 2123, 2124 kann als eine Einbettung der jeweiligen Untergruppe 11, 12, 13, 14, 21, 22, 23, 31, 32, 41, 42, 43, 111, 112, 113, 121, 122, 123 beziehungsweise 124 in einen ersten Vektorraum aufgefasst werden.

Im Folgenden wird ein erstes Anwendungsbeispiel betrachtet, bei welchem die ersten sprachlichen Elemente 101 der Notiz 55 eine erste Schriftzeichenfolge "blauer Kuli" umfassen. Gemäß diesem ersten Anwendungsbeispiel ist die erste Untergruppe 111 von Schriftzeichen der ersten Gruppe der Notiz gleich "blau", die zweite Untergruppe 112 von Schriftzeichen der ersten Gruppe der Notiz gleich "er" und die dritte Untergruppe 113 von Schriftzeichen der ersten Gruppe der Notiz gleich "Kuli".

Gemäß des ersten Anwendungsbeispiels umfassen die zweiten sprachlichen Elemente 102 der Notiz 55 eine zweite Schriftzeichenfolge "Lineal, Dreieck, Bleistift, hart". Gemäß diesem ersten Anwendungsbeispiel ist die erste Untergruppe 121 von Schriftzeichen der zweiten Gruppe der Notiz gleich "Lineal", die zweite Untergruppe 122 von Schriftzeichen der zweiten Gruppe der Notiz gleich "Dreieck", die dritte Untergruppe 123 von Schriftzeichen der zweiten Gruppe der Notiz gleich "Bleistift" und die vierte Untergruppe 124 von Schriftzeichen der zweiten Gruppe der Notiz gleich "hart".

Weiterhin ist gemäß dem ersten Anwendungsbeispiel die erste Untergruppe 11 von Schriftzeichen der ersten Gruppe gleich "Kugelschreiber", die zweite Untergruppe 12 von Schriftzeichen der ersten Gruppe gleich "blau", die dritte Untergruppe 13 von Schriftzeichen der ersten Gruppe gleich "Kugelschreiber" und die vierte Untergruppe 14 von Schriftzeichen der ersten Gruppe gleich "rot".

Weiterhin ist gemäß dem ersten Anwendungsbeispiel die erste Untergruppe 21 von Schriftzeichen der zweiten Gruppe gleich "Geo", die zweite Untergruppe 22 von Schriftzeichen der zweiten Gruppe gleich "metrie" und die dritte Untergruppe 23 von Schriftzeichen der zweiten Gruppe gleich "Set".

Weiterhin ist gemäß dem ersten Anwendungsbeispiel die erste Untergruppe 31 von Schriftzeichen der dritten Gruppe gleich "Hefte" und die zweite Untergruppe 32 von Schriftzeichen der dritten Gruppe gleich "A4".

Weiterhin ist gemäß dem ersten Anwendungsbeispiel die erste Untergruppe 41 von Schriftzeichen der vierten Gruppe gleich "Schul", die zweite Untergruppe 42 von Schriftzeichen der vierten Gruppe gleich "ranz" und die dritte Untergruppe 43 von Schriftzeichen der vierten Gruppe gleich "en".

Im Folgenden soll beschrieben werden, wie ein Teil der sprachlichen Elemente des Zentralservers 300 in Abhängigkeit einer jeweiligen Ähnlichkeit zwischen den jeweiligen sprachlichen Elementen des Zentralservers 300, insbesondere den sprachlichen Elementen 1, 2, 3 und 4, und den sprachlichen Elementen der Notiz 55 ausgewählt werden kann. Dieser Teil der sprachlichen Elemente 1, 2, 3, 4 wird im Folgenden auch als ausgewählter Teil bezeichnet. Der ausgewählte Teil der sprachlichen Elemente weist eine größere Ähnlichkeit zu den sprachlichen Elementen der Notiz 55 als die übrigen sprachlichen Elemente des Zentralservers 300 auf. Der Einfachheit halber wird für eine Bestimmung der jeweiligen Ähnlichkeit zwischen den jeweiligen sprachlichen Elementen des Zentralservers 300, insbesondere den sprachlichen Elementen 1, 2, 3 und 4, und den sprachlichen Elementen der Notiz 55 nur die erste Gruppe von Schriftzeichen der Notiz 55 betrachtet.

Vorteilhafterweise wird für die erste Gruppe von Schriftzeichen ein erster zusammenfassender Einbettungsvektor 2010 in Form einer Linearkombination aus den Einbettungsvektoren der ersten Gruppe gebildet. Gemäß des in Figur 4 gezeigten Beispiels kann der erste zusammenfassende Einbettungsvektor 2010 als eine Linearkombination aus dem ersten Einbettungsvektor 2011, dem zweiten Einbettungsvektor 2012, dem dritten Einbettungsvektor 2013 und dem vierten Einbettungsvektor 2014 der ersten Gruppe ausgebildet sein. Koeffizienten für eine Bildung der Linearkombination aus den Einbettungsvektoren der ersten Gruppe können derart ausgebildet sein, dass jeweilige Einträge des ersten zusammenfassenden Einbettungsvektors 2010 als Mittelwerte von entsprechenden Einträgen der Einbettungsvektoren 2011, 2012, 2013, 2014 berechnet werden.

Analog wird bevorzugt für die zweite Gruppe von Schriftzeichen ein zweiter zusammenfassender Einbettungsvektor 2020 in Form einer Linearkombination aus den Einbettungsvektoren der zweiten Gruppe gebildet. Gemäß des in Figur 5 gezeigten Beispiels kann der zweite zusammenfassende Einbettungsvektor 2020 als eine Linearkombination aus dem ersten Einbettungsvektor 2021, dem zweiten Einbettungsvektor 2022 und dem dritten Einbettungsvektor 2023 der zweiten Gruppe ausgebildet sein. Koeffizienten für eine Bildung der Linearkombination aus den Einbettungsvektoren der zweiten Gruppe können derart ausgebildet sein, dass jeweilige Einträge des zweiten zusammenfassenden Einbettungsvektors 2020 als Mittelwerte von entsprechenden Einträgen der Einbettungsvektoren 2021, 2022, 2023 berechnet werden.

Analog wird bevorzugt für die dritte Gruppe von Schriftzeichen ein dritter zusammenfassender Einbettungsvektor 2030 in Form einer Linearkombination aus den Einbettungsvektoren der dritten Gruppe gebildet. Gemäß des in Figur 6 gezeigten Beispiels kann der dritte zusammenfassende Einbettungsvektor 2030 als eine Linearkombination aus dem ersten Einbettungsvektor 2031 und dem zweiten Einbettungsvektor 2032 der dritten Gruppe ausgebildet sein. Koeffizienten für eine Bildung der Linearkombination aus den Einbettungsvektoren der dritten Gruppe können derart ausgebildet sein, dass jeweilige Einträge des dritten zusammenfassenden Einbettungsvektors 2030 als Mittelwerte von entsprechenden Einträgen der Einbettungsvektoren 2031, 2032 berechnet werden.

Analog wird bevorzugt für die vierte Gruppe von Schriftzeichen ein vierter zusammenfassender Einbettungsvektor 2040 in Form einer Linearkombination aus den Einbettungsvektoren der vierten Gruppe gebildet. Gemäß des in Figur 7 gezeigten Beispiels kann der vierte zusammenfassende Einbettungsvektor 2040 als eine Linearkombination aus dem ersten Einbettungsvektor 2041, dem zweiten Einbettungsvektor 2042 und dem dritten Einbettungsvektor 2043 der vierten Gruppe ausgebildet sein. Koeffizienten für eine Bildung der Linearkombination aus den Einbettungsvektoren der vierten Gruppe können derart ausgebildet sein, dass jeweilige Einträge des vierten zusammenfassenden Einbettungsvektors 2040 als Mittelwerte von entsprechenden Einträgen der Einbettungsvektoren 2041, 2042, 2043 berechnet werden.

Vorteilhafterweise wird für die erste Gruppe von Schriftzeichen der Notiz 55 ein erster Vergleichsvektor 2050 in Form einer Linearkombination aus den Einbettungsvektoren der ersten Gruppe der Notiz gebildet. Gemäß des in Figur 8 gezeigten Beispiels kann der erste Vergleichsvektor 2050 als eine Linearkombination aus dem ersten weiteren Einbettungsvektor 2111, dem zweiten weiteren Einbettungsvektor 2112 und dem dritten weiteren Einbettungsvektor 2113 der ersten Gruppe der Notiz ausgebildet sein. Koeffizienten für eine Bildung der Linearkombination aus den Einbettungsvektoren der ersten Gruppe der Notiz können derart ausgebildet sein, dass jeweilige Einträge des ersten Vergleichsvektors 2050 als Mittelwerte von entsprechenden Einträgen der Einbettungsvektoren 2111, 2112, 2113 berechnet werden.

Analog kann für die zweite Gruppe von Schriftzeichen der Notiz 55 ein zweiter Vergleichsvektor 2060 in Form einer Linearkombination aus den Einbettungsvektoren der zweiten Gruppe der Notiz gebildet werden. Gemäß des in Figur 9 gezeigten Beispiels kann der zweite Vergleichsvektor 2060 als eine Linearkombination aus dem ersten weiteren Einbettungsvektor 2121, dem zweiten weiteren Einbettungsvektor 2122, dem dritten weiteren Einbettungsvektor 2123 und dem vierten weiteren Einbettungsvektor 2124 der zweiten Gruppe der Notiz ausgebildet sein. Koeffizienten für eine Bildung der Linearkombination aus den Einbettungsvektoren der zweiten Gruppe der Notiz können derart ausgebildet sein, dass jeweilige Einträge des zweiten Vergleichsvektors 2060 als Mittelwerte von entsprechenden Einträgen der Einbettungsvektoren 2121, 2122, 2123, 2124 berechnet werden. Der zweite Vergleichsvektor 2060 kann insbesondere verwendet werden, um in gleicher Weise wie für die erste Gruppe von Schriftzeichen der Notiz 55 auch für die zweite Gruppe von Schriftzeichen der Notiz 55 eine Gruppe von Schriftzeichen des Zentralservers 300 von der ersten, zweiten, dritte oder vierten Gruppe von Schriftzeichen auszuwählen, die der zweiten Gruppe von Schriftzeichen der Notiz 55 am ähnlichsten ist.

Bevorzugt ist ein KI-Modul 90 des Kommunikationsnetzwerks 100 ausgebildet und eingerichtet, den ausgewählten Teil der sprachlichen Elemente des Zentralservers 300 in Abhängigkeit von der jeweiligen Ähnlichkeit zwischen den jeweiligen sprachlichen Elementen des Zentralservers 300 und den sprachlichen Elementen der Notiz 55 mithilfe des KI-Moduls 90 unter Verwendung der jeweiligen numerischen Werte, die den jeweiligen sprachlichen Elementen 1, 2, 3, 4 des Zentralservers 300 zugeordnet sind, auszuwählen, das heißt zu bestimmen. Gemäß dem ersten Anwendungsbeispiel sind diejenigen numerischen Werte, die den ersten sprachlichen Elementen 1 zugeordnet sind, in Form der Einträge des ersten zusammenfassenden Einbettungsvektor 2010 ausgebildet. Weiterhin sind bei dem ersten Anwendungsbeispiel diejenigen numerischen Werte, die den zweiten sprachlichen Elementen 2 zugeordnet sind, in Form der Einträge des zweiten zusammenfassenden Einbettungsvektors 2020 ausgebildet. Weiterhin sind bei dem ersten Anwendungsbeispiel diejenigen numerischen Werte, die den dritten sprachlichen Elementen 3 zugeordnet sind, in Form der Einträge des dritten zusammenfassenden Einbettungsvektors 2030 ausgebildet. Weiterhin sind bei dem ersten Anwendungsbeispiel diejenigen numerischen Werte, die den vierten sprachlichen Elementen 4 zugeordnet sind, in Form der Einträge des vierten zusammenfassenden Einbettungsvektors 2040 ausgebildet.

Praktischerweise ist das Kommunikationsnetzwerk 100, insbesondere ein KI-Modul 90 des Zentralservers 300, ausgebildet und eingerichtet, ein jeweiliges Ähnlichkeitsmaß für den ersten, zweiten, dritten und vierten zusammenfassenden Einbettungsvektor zu bestimmen, das jeweils ein Maß für eine Ähnlichkeit zwischen dem ersten, zweiten, dritten beziehungsweise vierten zusammenfassenden Einbettungsvektor und dem ersten Vergleichsvektor angibt. Das jeweilige Ähnlichkeitsmaß für den ersten, zweiten, dritten und vierten zusammenfassenden Einbettungsvektor kann beispielsweise in Form einer jeweiligen Kosinus-Ähnlichkeit zwischen dem ersten, zweiten, dritten beziehungsweise vierten zusammenfassenden Einbettungsvektor und dem ersten Vergleichsvektor ausgebildet sein.

Weiterhin ist das KI-Modul 90 vorteilhaft ausgebildet und eingerichtet, einen nächsten zusammenfassenden Einbettungsvektor als denjenigen des ersten, zweiten, dritten beziehungsweise vierten zusammenfassenden Einbettungsvektors zu bestimmen, der dem ersten Vergleichsvektor am ähnlichsten ist. Für den Fall, dass das jeweilige Ähnlichkeitsmaß die jeweilige Kosinus-Ähnlichkeit ist, ist der nächste zusammenfassende Einbettungsvektor derjenige, der das größte Ähnlichkeitsmaß aufweist. Je kleiner ein jeweiliger Winkel zwischen dem ersten, zweiten, dritten beziehungsweise vierten zusammenfassenden Einbettungsvektor und dem ersten Vergleichsvektor ist, desto ähnlicher ist im Allgemeinen der betreffende erste, zweite, dritte beziehungsweise vierte zusammenfassende Einbettungsvektor zu dem ersten Vergleichsvektor.

Für das oben beschriebene erste Anwendungsbeispiel bestimmt das KI-Modul 90 den ersten zusammenfassenden Einbettungsvektor als den nächsten zusammenfassenden Einbettungsvektor. Dies ist vor allem dadurch begründet, dass eine Bedeutung des Begriffes "Kugelschreiber blau Kugelschreiber rot", welche durch den ersten zusammenfassenden Einbettungsvektor 2010 in dem ersten Vektorraum repräsentiert wird, ähnlicher zu einer Bedeutung des Begriffes "blauer Kuli", welcher durch den ersten Vergleichsvektor 2050 in dem ersten Vektorraum repräsentiert wird, ist als eine Bedeutung des Begriffes "Geometrie Set", welche durch den zweiten zusammenfassenden Einbettungsvektor 2020 in dem ersten Vektorraum repräsentiert wird, eine Bedeutung des Begriffes "Hefte A4", welche durch den dritten zusammenfassenden Einbettungsvektor 2030 in dem ersten Vektorraum repräsentiert wird, oder eine Bedeutung des Begriffes "Schulranzen", welche durch den vierten zusammenfassenden Einbettungsvektor 2040 in dem ersten Vektorraum repräsentiert wird.

Bezogen auf das erste Anwendungsbeispiel entspricht der ausgewählte Teil der sprachlichen Elemente den ersten sprachlichen Elementen 1, da dies die sprachlichen Elemente sind, in Abhängigkeit derer der nächste zusammenfassende Einbettungsvektor erzeugt ist. Somit kann durch Verwendung der Einbettungsvektoren, insbesondere der zusammenfassenden Einbettungsvektoren, der ausgewählte Teil der sprachlichen Elemente bestimmt, das heißt ausgewählt, werden. Dadurch, dass der nächste zusammenfassende Einbettungsvektor in Abhängigkeit der oben genannten Kosinusähnlichkeiten bestimmt wird, wird der ausgewählte Teil der sprachlichen Elemente in Abhängigkeit von der jeweiligen Ähnlichkeit zwischen den jeweiligen sprachlichen Elementen des Zentralservers 300 und den sprachlichen Elementen der Notiz 55, hier der ersten Gruppe der Notiz 55, bestimmt.

Weiterhin ist das Kommunikationsnetzwerk 100, insbesondere der Zentralserver 300, ausgebildet und eingerichtet, zumindest einen Server der Server 200 auszuwählen, wobei dem ausgewählten Server zumindest der ausgewählte Teil der sprachlichen Elemente des Zentralservers 300 zugeordnet ist. Bezogen auf das erste Anwendungsbeispiel wählt der Zentralserver 300 den ersten Server 201 aus, da die ersten sprachlichen Elemente 1 dem ersten Server 201 zugeordnet sind.

Insbesondere ist das Kommunikationsnetzwerk 100, insbesondere der Zentralserver 300, ausgebildet und eingerichtet, den ausgewählten Server anhand des nächsten Vektors zu bestimmen, wobei die sprachlichen Elemente, in Abhängigkeit derer der nächste Vektor erzeugt ist, dem ausgewählten Server zugeordnet sind. Bezogen auf das erste Anwendungsbeispiel ist der ausgewählte Server der erste Server 201, da die ersten sprachlichen Elemente 1, in Abhängigkeit derer der erste zusammenfassende Einbettungsvektor erzeugt ist, dem ersten Server 201 zugeordnet sind.

Die Server 201, 202, 203 sind bevorzugt ausgebildet und eingerichtet, jeweilige Befehle in Abhängigkeit von den jeweiligen sprachlichen Elementen 1, 2, 3, 4, die dem jeweiligen Server zugeordnet sind, auszuführen.

Insbesondere ist das Kommunikationsnetzwerk 100, insbesondere der Zentralserver 300, ausgebildet und eingerichtet, eine Ausführung eines Befehls über eine zweite Kommunikationsverbindung 62 zwischen dem zumindest einen ausgewählten Server und dem Zentralserver 300 in Abhängigkeit des ausgewählten Teils der sprachlichen Elemente zu initiieren, wobei der Befehl auf dem ausgewählten Server ausführbar ist.

Der Befehl ist vorzugsweise dem ausgewählten Teil der sprachlichen Elemente zugeordnet. Praktischerweise sind in dem Speicher 64 jeweilige Sätze von Befehlszuordnungen gespeichert. Beispielsweise kann ein erster Satz von Befehlszuordnungen eine erste Befehlszuordnung 81 und eine zweite Befehlszuordnung 82 aufweisen.

Die erste Befehlszuordnung 81 ordnet den ersten sprachlichen Elementen 1 einen ersten Befehl 71 zu. Entsprechend kann die zweite Befehlszuordnung 82 den zweiten sprachlichen Elementen 2 einen zweiten Befehl 72 zuordnen. Gemäß des in Fig. 1 gezeigten Beispiels ist der erste Satz von Befehlszuordnungen dem ersten Server 201 zugeordnet. Der Einfachheit halber ist ein dritter Satz von Befehlszuordnungen in Form einer einzelnen Befehlszuordnung, nämlich der dritten Befehlszuordnung 83, und analog ein vierter Satz von Befehlszuordnungen in Form einer einzelnen Befehlszuordnung, nämlich der vierten Befehlszuordnung 84, ausgebildet. Die dritte Befehlszuordnung 83 ordnet den dritten sprachlichen Elementen 3 einen dritten Befehl 73 zu. Entsprechend ordnet die vierte Befehlszuordnung 84 den vierten sprachlichen Elementen 4 einen vierten Befehl 74 zu.

In einer möglichen Ausgestaltung kann vorgesehen sein, dass der Zentralserver denjenigen Befehl lädt, der dem ausgewählten Teil der sprachlichen Elemente zugeordnet ist. Hierbei greift der Zentralserver 300 vorteilhafterweise auf die Sätze der Befehlszuordnungen zu. Bezogen auf das erste Anwendungsbeispiel, bei welchem die ersten sprachlichen Elemente 1 den ausgewählten Teil der sprachlichen Elemente bilden, lädt der Zentralserver 300 den ersten Befehl 71. Der erste Befehl 71 kann beispielsweise ein Verpacken eines roten und eines blauen Kugelschreibers bewirken, wenn der erste Befehl 71 auf dem ersten Server 201 ausgeführt wird. Gemäß einer Variante kann der erste Server 201 zur Steuerung von Verpackungsmaschinen ausgebildet sein. Der erste Befehl 71 kann insbesondere Teil einer ersten Befehlskette zum Verpacken des roten und des blauen Kugelschreibers sein. In einer Weiterbildung kann vorgesehen sein, dass ein Ausführen des ersten Befehls auf dem ersten Server 201 ein Abarbeiten der ersten Befehlskette auf einem Prozessor des ersten Servers 201 auslöst.

Gemäß einer möglichen Ausgestaltung sendet der Zentralserver 300 den Befehl, der den ausgewählten sprachlichen Elementen zugeordnet ist, zu dem ausgewählten Server. Angewandt auf das erste Anwendungsbeispiel kann der Zentralserver 300 den ersten Befehl 71 an den ersten Server 201 senden. Der erste Server 201 ist bei dieser Variante bevorzugt ausgebildet und eingerichtet, den ersten Befehl 71 in Reaktion auf ein Empfangen des ersten Befehls 71 auszuführen, insbesondere auf dem Prozessor des ersten Servers 201 auszuführen.

Gemäß einer weiteren möglichen Ausgestaltung sind die Sätze der Befehlszuordnungen auf den Servern 200 gespeichert. Insbesondere kann der erste Satz der Befehlszuordnungen auf dem ersten Server 201 gespeichert sein. Bei dieser Ausgestaltung sendet der Zentralserver 300 bevorzugt die ausgewählten sprachlichen Elemente zu demjenigen Server, dem der ausgewählte Teil der sprachlichen Elemente zugeordnet ist. Hierzu kann der Zentralserver vorteilhafterweise die Identifizierungsmerkmale 10, 20, 30, 40 der Datenstruktur 63 verwenden. Angewandt auf das erste Anwendungsbeispiel kann der Zentralserver 300 anhand des ersten Identifizierungsmerkmals 10 den ersten Server 201 als den ausgewählten Server bestimmen. Insbesondere kann, bezogen auf das erste Anwendungsbeispiel, der Zentralserver 300 die ersten sprachlichen Elemente 1 zu dem ersten Server 201, das heißt in diesem Fall dem ausgewählten Server, senden. Der erste Server 201 ist bei dieser Ausgestaltung bevorzugt ausgebildet und eingerichtet, den ersten Befehl 71 in Reaktion auf ein Empfangen der ersten sprachlichen Elemente 1 auszuführen, insbesondere auf dem Prozessor des ersten Servers 201 auszuführen. Hierzu kann der erste Server 201 vorteilhaft die erste Befehlszuordnung 81 verwenden, die bei dieser Variante auf dem ersten Server 201 gespeichert ist.

In einer vorteilhaften Weiterbildung kann der Zentralserver 300 die sprachlichen Elemente der Notiz 55, insbesondere die erste Gruppe der Notiz 55, zusammen mit dem ausgewählten Teil der sprachlichen Elemente des Zentralservers 300 zu dem ausgewählten Server, bezogen auf das erste Anwendungsbeispiel zu dem ersten Server 201, senden. Dies erlaubt es, die sprachlichen Elemente der Notiz 55, insbesondere die erste Gruppe der Notiz 55, mit dem ausgewählten Teil der sprachlichen Elemente des Zentralservers 300 auf dem ausgewählten Server zu vergleichen. Bilden beispielsweise die sprachlichen Elemente der Notiz 55, insbesondere die erste Gruppe der Notiz 55, eine Teilmenge des ausgewählten Teils der sprachlichen Elemente des Zentralservers 300, so kann der ausgewählte Server den Befehl vorteilhafterweise an die sprachlichen Elemente der Notiz 55, insbesondere die erste Gruppe der Notiz 55, anpassen. Beispielweise kann ein Anpassen des ersten Befehls 71 bewirken, dass ein Ausführen des angepassten ersten Befehls ein Verpacken von nur dem blauen Kuli auslöst.

Die jeweiligen Sätze der Befehlszuordnungen können in einer in Fig. 1 nicht dargestellten Variante auf dem jeweiligen Server 201, 202 beziehungsweise 203 gespeichert sein. In diesem Fall müssen die jeweiligen Befehlszuordnungen nicht auf dem Zentralserver 300 gespeichert sein. Bei dieser Variante kann der Zentralserver 300 den ausgewählten Teil der sprachlichen Elemente, beispielsweise die sprachlichen Elemente 1, über die zweite Kommunikationsverbindung 62 zu dem ausgewählten Server, beispielsweise zu dem ersten Server 201, senden. In Reaktion auf ein Empfangen ausgewählten Teil der sprachlichen Elemente kann der ausgewählte Server vorzugsweise mit Hilfe der auf dem ausgewählten Server gespeicherten Befehlszuordnung die Ausführung des Befehls in Abhängigkeit des ausgewählten Teils der sprachlichen Elemente auslösen. Dieses Beispiel zeigt, dass die Befehlszuordnungen nicht zwangsläufig auf dem Zentralserver 300 abgespeichert sein müssen. Vorteilhaft ist jedoch, wenn das Kommunikationsnetzwerk 100 die jeweiligen Befehlszuordnungen bereitstellt.

Wie bereits oben beschrieben sind die sprachlichen Elemente 1, 2, 3, 4 und die sprachlichen Elemente der Notiz 55 in Form von Gruppen von Schriftzeichen ausgebildet. Hierbei weist die erste Gruppe von Schriftzeichen die Untergruppen 11, 12, 13, 14 auf. Die zweite Gruppe von Schriftzeichen weist die Untergruppen 21, 22, 23 auf. Die dritte Gruppe von Schriftzeichen weist die Untergruppen 31, 32 auf. Die vierte Gruppe von Schriftzeichen weist die Untergruppen 41, 42, 43, 44 auf. Die erste Gruppe von Schriftzeichen der Notiz 55 weist die Untergruppen 111, 112, 113 auf. Die zweite Gruppe von Schriftzeichen der Notiz 55 weist die Untergruppen 121, 122, 123, 124 auf.

In einer vorteilhaften Ausgestaltung wird für die jeweiligen Untergruppen 11, 12, 13, 14, 21, 22, 23, 31, 32, 41, 42, 43, 44, 111, 112, 113, 121, 122, 123, 124 jeweils ein kontextbezogener Einbettungsvektor erzeugt. Bei einer Generierung der jeweiligen kontextbezogenen Einbettungsvektoren wird eine jeweilige Korrelation zwischen den jeweiligen Untergruppen von Schriftzeichen innerhalb der jeweiligen Gruppe von Schriftzeichen berücksichtigt.

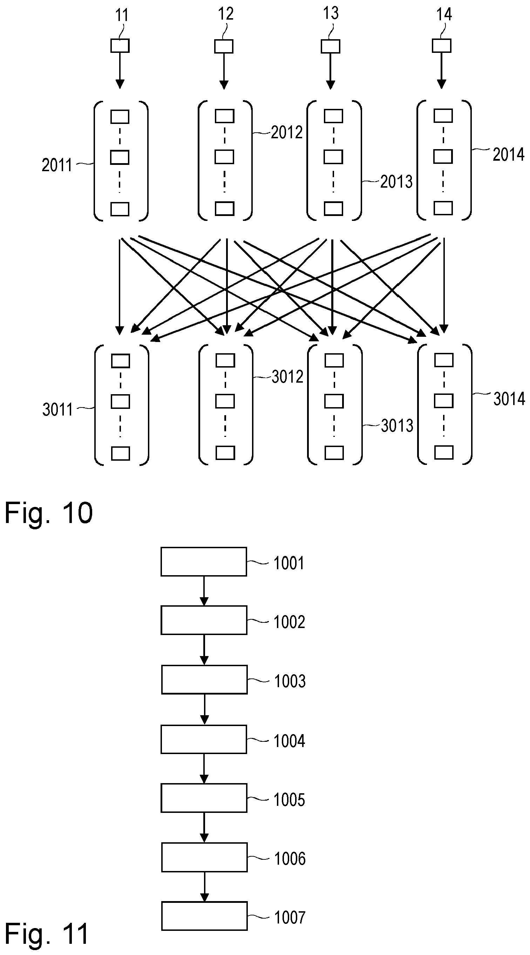

Im Folgenden soll beispielhaft anhand der Figur 10 visualisiert werden, wie für die erste Gruppe von Schriftzeichen in Abhängigkeit von den Einbettungsvektoren 2011, 2012, 2013, 2014 finale kontextbezogene Einbettungsvektoren 3011, 3012, 3013, 3014 erzeugt werden können.

Der erste Einbettungsvektor 2011, der zweite Einbettungsvektor 2012, der dritte Einbettungsvektor 2013 und der vierte Einbettungsvektor 2014 der ersten Gruppe können zusammengenommen als ein erster Satz 2100 von Einbettungsvektoren bezeichnet werden.

Analog können der erste Einbettungsvektor 2021, der zweite Einbettungsvektor 2022 und der dritte Einbettungsvektor 2023 der zweiten Gruppe zusammengenommen als ein zweiter Satz 2200 von Einbettungsvektoren bezeichnet werden.

Analog können der erste Einbettungsvektor 2031 und der zweite Einbettungsvektor 2032 der dritten Gruppe zusammengenommen als ein dritter Satz 2300 von Einbettungsvektoren bezeichnet werden.

Analog können der erste Einbettungsvektor 2041, der zweite Einbettungsvektor 2042 und der dritte Einbettungsvektor 2043 der vierten Gruppe zusammengenommen als ein vierter Satz 2400 von Einbettungsvektoren bezeichnet werden.

Analog können der erste Einbettungsvektor 2111, der zweite Einbettungsvektor 2112 und der dritte Einbettungsvektor 2113, die für die erste Gruppe von Schriftzeichen der Notiz 55 erstellt sind, zusammengenommen als ein weiterer erster Satz 2500 von Einbettungsvektoren bezeichnet werden.

Analog können der erste Einbettungsvektor 2121, der zweite Einbettungsvektor 2122, der dritte Einbettungsvektor 2123 und der vierte Einbettungsvektor 2124, die für die zweite Gruppe von Schriftzeichen der Notiz 55 erstellt sind, zusammengenommen als ein weiterer zweiter Satz 2060 von Einbettungsvektoren bezeichnet werden.

Die Einbettungsvektoren des jeweiligen Satzes 2100, 2200, 2300, 2400, 2500, 2600 von Einbettungsvektoren werden im Folgenden Einbettungsvektoren des jeweiligen Satzes genannt.

In Abhängigkeit von den Einbettungsvektoren des jeweiligen Satzes werden bevorzugt, insbesondere mithilfe des KI-Moduls 90, jeweilige erste Hilfsvektoren berechnet. Die jeweiligen ersten Hilfsvektoren können jeweils vorteilhafterweise eine erste Dimension aufweisen, die kleiner als die Dimension des ersten Vektorraumes ist. Bevorzugt werden die jeweiligen ersten Hilfsvektoren jeweils durch eine erste Projektion des jeweiligen Einbettungsvektors des jeweiligen Satzes, beispielsweise der Einbettungsvektoren 2011, 2012, 2013 und 2014, auf eine erste Richtung des ersten Vektorraums erstellt. Die erste Richtung kann hierbei durch einen ersten Richtungsvektor spezifiziert sein. Insbesondere werden die jeweiligen ersten Hilfsvektoren jeweils durch Berechnen eines jeweiligen Skalarproduktes des jeweiligen Einbettungsvektors des jeweiligen Satzes mit dem ersten Richtungsvektor erzeugt.

Die jeweiligen ersten Hilfsvektoren werden jeweils für jeden Satz 2100, 2200, 2300, 2400, 2500, 2600 von Einbettungsvektoren erzeugt und sind demnach, je nachdem in Abhängigkeit von welchem Satz von Einbettungsvektoren die jeweiligen ersten Hilfsvektoren berechnet werden, unterschiedlich.

Weiterhin können in Abhängigkeit von den Einbettungsvektoren des jeweiligen Satzes, insbesondere mithilfe des KI-Moduls, jeweilige zweite Hilfsvektoren berechnet werden. Die jeweiligen zweiten Hilfsvektoren können vorteilhafterweise eine zweite Dimension aufweisen, die kleiner als die Dimension des ersten Vektorraumes ist. Die zweite Dimension ist vorteilhafterweise gleich der ersten Dimension. Bevorzugt werden die jeweiligen zweiten Hilfsvektoren jeweils durch eine zweite Projektion des jeweiligen Einbettungsvektors des jeweiligen Satzes, beispielsweise der Einbettungsvektoren 2011, 2012, 2013 und 2014, auf eine zweite Richtung des ersten Vektorraums erstellt. Die zweite Richtung kann hierbei durch einen zweiten Richtungsvektor spezifiziert sein. Insbesondere werden die jeweiligen zweiten Hilfsvektoren jeweils durch Berechnen eines jeweiligen Skalarproduktes des jeweiligen Einbettungsvektors des jeweiligen Satzes mit dem zweiten Richtungsvektor erzeugt.

Die jeweiligen zweiten Hilfsvektoren werden jeweils für jeden Satz 2100, 2200, 2300, 2400, 2500, 2600 von Einbettungsvektoren erzeugt und sind demnach, je nachdem in Abhängigkeit von welchem Satz von Einbettungsvektoren die jeweiligen zweiten Hilfsvektoren berechnet werden, unterschiedlich.

In einem weiteren Schritt können die jeweiligen ersten Hilfsvektoren des jeweiligen Satzes von Einbettungsvektoren jeweils mit den transponierten jeweiligen zweiten Hilfsvektoren des jeweiligen Satzes von Einbettungsvektoren multipliziert werden, um eine jeweilige Korrelationsmatrix für den jeweiligen Satz 2100, 2200, 2300, 2400, 2500, 2600 von Einbettungsvektoren zu bilden. Ein jeweiliger Eintrag der jeweiligen Korrelationsmatrix kann durch ein Skalarprodukt eines jeweiligen ersten Hilfsvektors der ersten Hilfsvektoren des jeweiligen Satzes von Einbettungsvektoren mit einem jeweiligen zweiten Hilfsvektor der zweiten Hilfsvektoren des jeweiligen Satzes von Einbettungsvektoren berechnet werden.

Weiterhin können die Einträge der jeweiligen Korrelationsmatrix normalisiert werden, um eine jeweilige erste normalisierte Korrelationsmatrix zu erhalten, bei welcher alle Einträge einer Spalte der jeweiligen Korrelationsmatrix in der Summe Eins ergeben. Des Weiteren kann auch eine Softmax-Funktion über alle Einträge einer jeweiligen Spalte der jeweiligen Korrelationsmatrix ausgeführt werden, um eine jeweilige zweite normalisierte Korrelationsmatrix zu erhalten. Einträge einer jeweiligen Spalte der jeweiligen zweiten normalisierten Korrelationsmatrix summieren sich bevorzugt zu Eins.

Weiterhin können in Abhängigkeit von den Einbettungsvektoren des jeweiligen Satzes 2100, 2200, 2300, 2400, 2500, 2600, insbesondere mithilfe des KI-Moduls, jeweilige dritte Hilfsvektoren berechnet werden. Die jeweiligen dritten Hilfsvektoren können vorteilhafterweise eine dritte Dimension aufweisen, die kleiner als die Dimension des ersten Vektorraumes ist. Die dritte Dimension ist vorteilhafterweise gleich der ersten Dimension. Bevorzugt werden die jeweiligen dritten Hilfsvektoren jeweils durch eine dritte Projektion des jeweiligen Einbettungsvektors des jeweiligen Satzes, beispielsweise der Einbettungsvektoren 2011, 2012, 2013 und 2014, auf eine dritte Richtung des ersten Vektorraums erstellt. Die dritte Richtung kann hierbei durch einen dritten Richtungsvektor spezifiziert sein. Insbesondere werden die jeweiligen dritten Hilfsvektoren jeweils durch Berechnen eines jeweiligen Skalarproduktes des jeweiligen Einbettungsvektors des jeweiligen Satzes mit dem dritten Richtungsvektor erzeugt.

Die jeweiligen dritten Hilfsvektoren werden jeweils für jeden Satz 2100, 2200, 2300, 2400, 2500, 2600 von Einbettungsvektoren erzeugt und sind demnach, je nachdem in Abhängigkeit von welchem Satz von Einbettungsvektoren die jeweiligen dritten Hilfsvektoren berechnet werden, unterschiedlich.

Vorteilhafterweise werden mithilfe der jeweiligen dritten Hilfsvektoren und mit der jeweiligen ersten, insbesondere mit der jeweiligen zweiten, normalisierten Korrelationsmatrix jeweilige erste kontextbezogene Einbettungsvektoren jeweils für den jeweiligen Satz 2100, 2200, 2300, 2400, 2500, 2600 von Einbettungsvektoren erzeugt.

Die jeweiligen ersten kontextbezogenen Einbettungsvektoren berechnen sich jeweils in Form einer jeweiligen Linearkombination der jeweiligen dritten Hilfsvektoren. Jeweilige Linearkoeffizienten zur Berechnung der jeweiligen Linearkombination sind gleich der Einträge einer jeweiligen Spalte der jeweiligen ersten, insbesondere der jeweiligen zweiten, normalisierten Korrelationsmatrix. Für jede Spalte der ersten oder zweiten normalisierten Korrelationsmatrix wird jeweils einer der ersten kontextbezogenen Einbettungsvektoren berechnet. Demnach ist eine Anzahl der ersten kontextbezogenen Einbettungsvektoren gleich einer Anzahl der Spalten der ersten oder zweiten normalisierten Korrelationsmatrix.

Die jeweiligen ersten kontextbezogenen Einbettungsvektoren haben jeweils eine Dimension, die gleich der dritten Dimension ist.

In analoger Weise wie die jeweiligen ersten kontextbezogenen Einbettungsvektoren für den jeweiligen Satz 2100, 2200, 2300, 2400, 2500, 2600 von Einbettungsvektoren erzeugt werden, werden für jeden Einbettungsvektor des jeweiligen Satzes 2100, 2200, 2300, 2400, 2500, 2600 von Einbettungsvektoren bevorzugt jeweils jeweilige weitere kontextbezogene Einbettungsvektoren, insbesondere mithilfe des KI-Moduls 90, erstellt. Im Unterschied zu der oben beschriebenen Erstellung der ersten kontextbezogenen Einbettungsvektoren sind bei einer Erstellung der jeweiligen weiteren kontextbezogenen Einbettungsvektoren jedoch jeweilige Einträge des ersten, zweiten und dritten Richtungsvektors unterschiedlich. Dadurch ändern sich jeweils die erste, zweite und dritte Richtung und damit die jeweilige erste, zweite und dritte Projektion, wodurch unterschiedliche semantische Aspekte berücksichtigt werden können.

Für jeden Einbettungsvektor des jeweiligen Satzes 2100, 2200, 2300, 2400, 2500, 2600 von Einbettungsvektoren, beispielsweise für jeden der Einbettungsvektoren 2011, 2012, 2013 und 2014, werden bevorzugt so viele weitere kontextbezogene Einbettungsvektoren erstellt, dass eine Summe der jeweiligen Dimensionen aller kontextbezogener Einbettungsvektoren zusammengenommen gleich der Dimension einer der Einbettungsvektoren, beispielsweise einer der Einbettungsvektoren 2011, 2012, 2013 und 2014, ist. Vorteilhafterweise wird ein jeweiliger finaler kontextbezogener Einbettungsvektor für jeden Einbettungsvektor des jeweiligen Satzes 2100, 2200, 2300, 2400, 2500, 2600 von Einbettungsvektoren durch Aneinanderhängen des ersten kontextbezogenen Einbettungsvektors und der weiteren kontextbezogenen Einbettungsvektoren, die für den jeweiligen Einbettungsvektor gebildet wurden, erzeugt.

Beispielhaft ist für die erste Gruppe ein erster finaler kontextbezogener Einbettungsvektor 3011, ein zweiter finaler kontextbezogener Einbettungsvektor 3012, ein dritter finaler kontextbezogener Einbettungsvektor 3013 und ein vierter finaler kontextbezogener Einbettungsvektor 3014 in Fig. 10 gezeigt.

Liegen die finalen kontextbezogenen Einbettungsvektoren vor, so kann für die erste Gruppe von Schriftzeichen der erste zusammenfassende Einbettungsvektor 2010 gemäß einer besonderen Ausgestaltung in Form einer Linearkombination aus den finalen kontextbezogenen Einbettungsvektoren der ersten Gruppe gebildet werden. Beispielsweise kann der erste zusammenfassende Einbettungsvektor 2010 als eine Linearkombination aus dem ersten finalen kontextbezogenen Einbettungsvektor 3011, dem zweiten finalen kontextbezogenen Einbettungsvektor 3012, dem dritten finalen kontextbezogenen Einbettungsvektor 3013 und dem vierten finalen kontextbezogenen Einbettungsvektor 3014 der ersten Gruppe ausgebildet sein. Koeffizienten für eine Bildung der Linearkombination aus den finalen kontextbezogenen Einbettungsvektoren der ersten Gruppe können derart ausgebildet sein, dass jeweilige Einträge des ersten zusammenfassenden Einbettungsvektor als Mittelwerte von entsprechenden Einträgen der finalen kontextbezogenen Einbettungsvektoren 3011, 3012, 3013, 3014 berechnet werden.

Analog können gemäß einer besonderen Ausgestaltung für die zweite Gruppe, die dritte Gruppe und die vierte Gruppe jeweils der zweite, dritte und vierte zusammenfassender Einbettungsvektor 2020, 2030 beziehungsweise 2040 in Form einer jeweiligen Linearkombination aus den jeweiligen finalen kontextbezogenen Einbettungsvektoren der zweiten Gruppe, der dritten Gruppe beziehungsweise der vierten Gruppe gebildet werden.

Analog können gemäß einer besonderen Ausgestaltung für die erste Gruppe der Notiz 55 und die zweite Gruppe der Notiz 55 jeweils der erste und zweite Vergleichsvektor 2050, 2060 in Form einer jeweiligen Linearkombination aus den jeweiligen finalen kontextbezogenen Einbettungsvektoren der erste Gruppe der Notiz 55 beziehungsweise der zweiten Gruppe der Notiz 55 gebildet werden.

Mithilfe des ersten, zweiten, dritten und vierten zusammenfassenden Einbettungsvektor 2010, 2020, 2030, 2040 und dem ersten Vergleichsvektor 2050 kann, wie oben beschrieben, der ausgewählte Teil der sprachlichen Elemente bestimmt werden. Hierbei können, wie oben beschrieben, die jeweiligen Ähnlichkeitsmaße, insbesondere die jeweilige Kosinus-Ähnlichkeit, verwendet werden.

Fig. 11 zeigt Schritte eines Verfahrens zur Kommunikation in dem Kommunikationsnetzwerk 100. In einem ersten Schritt 1001 wird die Bilddatei 51 erstellt. Die Bilddatei 51 kann insbesondere, wie oben beschrieben, mit Hilfe der Kamera 53 des Mobilgerätes 5 erzeugt werden. In einem zweiten Schritt 1002 werden die sprachlichen Elemente der Notiz 55 in Abhängigkeit von der Bilddatei 51 und mit Hilfe des Texterkennungsmoduls 56 des Kommunikationsnetzwerkes 100 erkannt. Hierbei wird, wie oben beschrieben, bevorzugt die Textdatei 58 in Abhängigkeit von der Bilddatei 51 erzeugt.

In einem dritten Schritt 1003 werden die Informationen über die sprachlichen Elemente der Notiz 55 von dem mobilen Kommunikationsgerät 5 zu dem Zentralserver 300 über die erste Kommunikationsverbindung 61 übertragen. Dies kann, wie oben beschrieben, mit Hilfe eines Versendens der Nachricht 2001 von dem Mobilgerät 5 zu dem Zentralserver 300 erfolgen.

In einem vierten Schritt 1004 können die jeweiligen sprachlichen Elemente des Zentralservers 300 zu jeweiligen numerischen Werten zugeordnet werden. Hierbei können insbesondere den einzelnen Untergruppen der jeweiligen sprachlichen Elemente 1, 2, 3, 4 die jeweiligen Einbettungsvektoren 2011, 2012, 2013, 2014, 2021, 2022, 2023, 2031, 2032, 2041, 2042, 2043 zugeordnet werden. Der vierte Schritt 1004 kann jedoch auch vor dem ersten Schritt 1001 durchgeführt werden.

In einem fünften Schritt 1005 wird der ausgewählte Teil der sprachlichen Elemente des Zentralservers 300 in Abhängigkeit von der jeweiligen Ähnlichkeit zwischen den jeweiligen sprachlichen Elementen des Zentralservers 300 und den sprachlichen Elementen der Notiz 55 mit Hilfe des KI-Moduls 90 bestimmt. Ein Bestimmen des ausgewählten Teils der sprachlichen Elemente des Zentralservers 300 meint im Rahmen dieser Offenbarung ein Auswählen dieses Teils der sprachlichen Elemente des Zentralservers 300. Beim Bestimmen des ausgewählten Teils der sprachlichen Elemente des Zentralservers 300 können unter anderem die jeweiligen numerischen Werte, die den jeweiligen sprachlichen Elementen des Zentralservers 300 zugeordnet sind, verwendet werden.

In einem sechsten Schritt 1006 wird zumindest der ausgewählte Server der Server 200 bestimmt. Im Rahmen dieser Offenbarung meint ein Bestimmen des ausgewählten Servers der Server 200 ein Auswählen dieses Servers. Dem ausgewählten Server ist zumindest der ausgewählte Teil der sprachlichen Elemente des Zentralservers 300 zugeordnet. Wie oben beschrieben, kann der Zentralserver 300 zum Bestimmen des ausgewählten Servers die Datenstruktur 63, insbesondere die Identifizierungsmerkmale 10, 20, 30, 40, verwenden.

In einem siebten Schritt 1007 wird die Ausführung des Befehls, welcher dem ausgewählten Teil der sprachlichen Elemente des Zentralservers 300 zugeordnet ist, über die zweite Kommunikationsverbindung 62 initiiert. Der Befehl wird hierbei auf dem ausgewählten Server ausgeführt. Bezogen auf das obige erste Anwendungsbeispiel ist der ausgewählte Server der erste Server 201.

Das KI-Modul 90 ist in einem Arbeitsspeicher 94, bevorzugt in einem flüchtigen Speicher, wie beispielsweise einem RAM, des Zentralservers 300 gespeichert. Die Bibliothek 92 kann in dem Arbeitsspeicher 94 oder in dem Speicher 64 gespeichert sein. Der Speicher 64 kann als nichtflüchtiger Speicher ausgebildet sein. Um die Schritte 1001 bis 1007 und/oder die oben beschriebenen Varianten des vorgeschlagenen Verfahrens auszuführen kann der Prozessor 65 ein Hauptprogramm 95 abarbeiten. Bei einem Abarbeiten des Hauptprogramms 95 kann der Prozessor 65 beispielsweise das KI-Modul 90, insbesondere das Einbettungsmodul 91 und das Untergruppenerkennungsmodul 93, aufrufen, um die Schritte 1001 bis 1007 umzusetzen. Das Hauptprogramm 95, das KI-Modul 90 und die Bibliothek 92 können zusammengenommen als Computerprogrammprodukt 96 bezeichnet werden. Das Computerprogrammprodukt 96 umfasst ein Programm, insbesondere das Hauptprogramm 95, das, wenn es von einem Computer, wie dem Zentralserver 300, insbesondere von dem Prozessor 65, ausgeführt wird, den Computer veranlasst, ein Verfahren nach einer der oben beschriebenen Varianten, insbesondere die Schritte 1001 bis 1007, durchzuführen.

## Patentansprüche

1. Verfahren zur Kommunikation in einem Kommunikationsnetzwerk (100), wobei das Kommunikationsnetzwerk (100) ein mobiles Kommunikationsgerät (5), einen Zentralserver (300) und Server (200) umfasst, wobei auf dem Zentralserver (300) jeweilige sprachliche Elemente (1, 2, 3, 4) gespeichert sind, die jeweils zumindest einem jeweiligen Server (201, 202, 203) der Server (200) zugeordnet sind und jeweils jeweiligen numerischen Werten zugeordnet sind, und das Kommunikationsnetzwerk derart eingerichtet ist, dass auf dem jeweiligen Server (201, 202, 203) jeweilige Befehle (71, 72, 73, 74) jeweils in Abhängigkeit der jeweiligen sprachlichen Elemente (1, 2, 3, 4), die dem jeweiligen Server (201, 202, 203) zugeordnet sind, ausführbar sind, das Verfahren aufweisend die folgenden Schritte:
- Erstellen einer Bilddatei (51) von einer auf einer Fläche (50) dargestellten Notiz (55), die sprachliche Elemente (101) aufweist, mithilfe des mobilen Kommunikationsgerätes (5);
- Erkennen der sprachlichen Elemente (101) der Notiz (55) in Abhängigkeit von der Bilddatei (51) und mithilfe eines Texterkennungsmoduls (56) des Kommunikationsnetzwerkes (100);
- Übertragen von Informationen über die sprachlichen Elemente (101) der Notiz (55) von dem mobilen Kommunikationsgerät (5) zu dem Zentralserver (300) über eine erste Kommunikationsverbindung zwischen dem mobilen Kommunikationsgerät (5) und dem Zentralserver (300);
- Auswählen eines Teils der sprachlichen Elemente (1, 2, 3, 4) des Zentralservers (300) in Abhängigkeit von einer jeweiligen Ähnlichkeit zwischen den jeweiligen sprachlichen Elementen (1, 2, 3, 4) des Zentralservers (300) und den sprachlichen Elementen (101) der Notiz (55) mithilfe eines künstlichen Intelligenzmoduls (KI-Modul (90)) des Kommunikationsnetzwerkes (100) unter Verwendung der jeweiligen numerischen Werte, wobei der ausgewählte Teil der sprachlichen Elemente eine größere Ähnlichkeit zu den sprachlichen Elementen (101) der Notiz (55) als die übrigen sprachlichen Elemente des Zentralservers (300) aufweist;
- Auswählen von zumindest einem Server (201) der Server (200), wobei dem ausgewählten Server (201) zumindest der ausgewählte Teil der sprachlichen Elemente des Zentralservers (300) zugeordnet ist;
- Initiieren einer Ausführung zumindest eines Befehls (71) der Befehle, die auf dem ausgewählten Server (201) ausführbar sind, über eine zweite Kommunikationsverbindung zwischen dem zumindest einen ausgewählten Server (201) und dem Zentralserver (300) in Abhängigkeit des ausgewählten Teils der sprachlichen Elemente, wobei der Befehl (71) auf dem ausgewählten Server (201) ausgeführt wird.

2. Verfahren nach Anspruch 1, wobei die jeweiligen numerischen Werte, die den jeweiligen sprachlichen Elementen (1, 2, 3, 4) des Zentralservers (300) zugeordnet sind, in Form von Einträgen eines jeweiligen Vektors (2010, 2020, 2030, 2040) ausgebildet sind und der jeweilige Vektor (2010, 2020, 2030, 2040) die jeweiligen sprachlichen Elemente (1, 2, 3, 4) des Zentralservers (300) in einem ersten Vektorraum repräsentiert und das Auswählen des Teils der sprachlichen Elemente des Zentralservers (300) und das Auswählen des Servers (201) mithilfe des KI-Moduls (90) die folgenden Schritte umfasst:
- Erzeugen eines Vergleichsvektors (2050) in Abhängigkeit von den sprachlichen Elementen (101) der Notiz (55), wobei der Vergleichsvektor (2050) die sprachlichen Elemente (101) der Notiz (55) in dem ersten Vektorraum repräsentiert;
- Bestimmen eines jeweiligen Ähnlichkeitsmaßes für den jeweiligen Vektor (2010, 2020, 2030, 2040), das jeweils ein Maß für eine Ähnlichkeit zwischen dem jeweiligen Vektor (2010, 2020, 2030, 2040) und dem Vergleichsvektor (2050) angibt;
- Bestimmen eines nächsten Vektors als denjenigen der Vektoren (2010, 2020, 2030, 2040), der dem Vergleichsvektor (2050) unter Berücksichtigung der Ähnlichkeitsmaße für die Vektoren (2010, 2020, 2030, 2040) am ähnlichsten ist;
- Auswählen des Servers (201) anhand des nächsten Vektors, wobei die Einträge des nächsten Vektors denjenigen sprachlichen Elementen (1) des Zentralservers (300) zugeordnet sind, die dem ausgewählten Server (201) zugeordnet sind.

3. Verfahren nach Anspruch 2, wobei die jeweiligen sprachlichen Elemente des Zentralservers (300) in Form einer jeweiligen Gruppe von Schriftzeichen ausgebildet sind, wobei die jeweilige Gruppe von Schriftzeichen jeweils Untergruppen von Schriftzeichen aufweist und der jeweilige Vektor als kontextbezogener Vektor ausgebildet ist, der eine jeweilige Korrelation zwischen den jeweiligen Untergruppen von Schriftzeichen innerhalb der jeweiligen Gruppe von Schriftzeichen berücksichtigt.

4. Verfahren nach einem der vorherigen Ansprüche, wobei die Notiz (55) weitere sprachliche Elemente aufweist und das Verfahren die folgenden weiteren Schritte aufweist:
- Bestimmen eines jeweiligen weiteren Ähnlichkeitsmaßes für die jeweiligen sprachlichen Elemente des Zentralservers (300), wobei das jeweilige weitere Ähnlichkeitsmaß für die jeweiligen sprachlichen Elemente des Zentralservers (300) ein Maß für eine Anzahl von jeweiligen Datenverarbeitungsschritten ist, die für eine Umwandlung der jeweiligen sprachlichen Elemente des Zentralservers (300) in die weiteren sprachlichen Elemente der Notiz (55) nötig sind;
- Auswählen eines weiteren Teils der sprachlichen Elemente des Zentralservers (300) unter Berücksichtigung der weiteren Ähnlichkeitsmaße für die jeweiligen sprachlichen Elemente des Zentralservers (300);
- Auswählen von zumindest einem weiteren Server der Server oder erneutes Auswählen des ausgewählten Servers, wobei dem ausgewählten weiteren Server oder dem ausgewählten Server zumindest der ausgewählte weitere Teil der sprachlichen Elemente des Zentralservers (300) zugeordnet ist;
- Initiieren einer Ausführung eines weiteren Befehls der Befehle, die auf dem ausgewählten weiteren Server oder dem ausgewählten Server ausführbar sind, über eine dritte Kommunikationsverbindung zwischen dem zumindest einen ausgewählten weiteren Server und dem Zentralserver (300) oder über die zweite Kommunikationsverbindung in Abhängigkeit des ausgewählten weiteren Teils der sprachlichen Elemente, wobei der weitere Befehl auf dem ausgewählten weiteren Server oder dem ausgewählten Server ausgeführt wird.

5. Verfahren nach Anspruch 4, wobei das jeweilige weitere Ähnlichkeitsmaß für die jeweiligen sprachlichen Elemente des Zentralservers (300) eine jeweilige Levenshtein-Distanz ist.

6. Verfahren nach einem der vorherigen Ansprüche, wobei ein Umfang der sprachlichen Elemente (101) der Notiz (55) reduziert wird, indem ein Teil der sprachlichen Elemente (101) der Notiz (55) verworfen wird, wobei ein verworfener Teil der sprachlichen Elemente (101) der Notiz (55) dadurch ermittelt wird, indem die sprachlichen Elemente (101) der Notiz (55) mit sprachlichen Elementen einer Ausschlussliste verglichen werden und der verworfene Teil der sprachlichen Elemente (101) der Notiz (55) als derjenige Teil der sprachlichen Elemente (101) der Notiz (55) bestimmt wird, der eine Ähnlichkeit mit zumindest einem sprachlichen Element der Ausschlussliste aufweist.

7. Verfahren nach einem der vorherigen Ansprüche, wobei mehrere Teile der sprachlichen Elemente des Zentralservers (300) in Abhängigkeit von der jeweiligen Ähnlichkeit zwischen den jeweiligen sprachlichen Elementen des Zentralservers (300) und den sprachlichen Elementen (101) der Notiz (55) mithilfe des KI-Moduls (90) unter Verwendung der jeweiligen numerischen Werte ausgewählt werden, wobei die mehreren ausgewählten Teile der sprachlichen Elemente jeweils eine größere Ähnlichkeit zu den sprachlichen Elementen (101) der Notiz (55) als die übrigen sprachlichen Elemente des Zentralservers (300) aufweisen und die ausgewählten Teile für einen Benutzer sichtbar angezeigt werden und der ausgewählte Server für den Benutzer in Abhängigkeit der angezeigten ausgewählten Teile bestimmbar ist.

8. Verfahren nach einem der vorhergehenden Ansprüche, wobei erweiterte sprachliche Elemente der Notiz (55) erzeugt werden, die die sprachlichen Elemente der Notiz (55) und personenbezogene sprachliche Elemente aufweisen, und das Auswählen des Teils der sprachlichen Elemente des Zentralservers (300) in Abhängigkeit von einer jeweiligen Ähnlichkeit zwischen den jeweiligen sprachlichen Elementen des Zentralservers (300) und den erweiterten sprachlichen Elementen der Notiz (55) mithilfe des KI-Moduls (90) des Kommunikationsnetzwerkes (100) unter Verwendung der jeweiligen numerischen Werte erfolgt, wobei der ausgewählte Teil der sprachlichen Elemente eine größere Ähnlichkeit zu den erweiterten sprachlichen Elementen der Notiz (55) als die übrigen sprachlichen Elemente des Zentralservers (300) aufweist.

9. Verfahren nach einem der vorhergehenden Ansprüche, wobei in Abhängigkeit der sprachlichen Elemente der Notiz (55) zumindest ein Stichwort generiert wird und eine Teilmenge der jeweiligen sprachlichen Elemente des Zentralservers (300) in Abhängigkeit des Stichwortes bestimmt wird, wobei die jeweiligen sprachlichen Elemente der Teilmenge jeweils zumindest das Stichwort aufweisen, wobei der ausgewählte Teil der sprachlichen Elemente des Zentralservers (300) in Abhängigkeit von der jeweiligen Ähnlichkeit zwischen den jeweiligen sprachlichen Elementen der Teilmenge und den sprachlichen Elementen der Notiz (55) mithilfe des KI-Moduls (90) unter Verwendung der jeweiligen numerischen Werte bestimmt wird.

10. Verfahren nach einem der vorhergehenden Ansprüche, wobei die sprachlichen Elemente der Notiz (55) ein Zahlwort aufweisen und das Zahlwort identifiziert wird, wobei der Befehl auf dem ausgewählten Server in Abhängigkeit des Zahlwortes wiederholt ausgeführt wird.

11. Verfahren nach einem der vorhergehenden Ansprüche, wobei das Auswählen des Servers mithilfe des KI-Moduls (90) in Abhängigkeit von personenbezogenen Daten, die von dem mobilen Kommunikationsgerät (5) zu dem Zentralserver (300) übertragen werden, durchgeführt wird.

12. Kommunikationsnetzwerk (100), aufweisend ein mobiles Kommunikationsgerät (5), einen Zentralserver (300) und Server (200), wobei auf dem Zentralserver (300) jeweilige sprachliche Elemente (1, 2, 3, 4) gespeichert sind, die jeweils zumindest einem jeweiligen Server (201, 202, 203) der Server (200) zugeordnet sind und jeweils jeweiligen numerischen Werten zugeordnet sind, und das Kommunikationsnetzwerk derart eingerichtet ist, dass auf dem jeweiligen Server (201, 202, 203) jeweilige Befehle (71, 72, 73, 74) jeweils in Abhängigkeit der jeweiligen sprachlichen Elemente (1, 2, 3, 4), die dem jeweiligen Server (201, 202, 203) zugeordnet sind, ausführbar sind, wobei das Kommunikationsnetzwerk (100) ausgebildet und eingerichtet ist:
- eine Bilddatei (51) von einer auf einer Fläche (50) dargestellten Notiz (55), die sprachliche Elemente (101) aufweist, mithilfe des mobilen Kommunikationsgerätes (5) zu erstellen;
- die sprachlichen Elemente (101) der Notiz (55) in Abhängigkeit von der Bilddatei (51) und mithilfe eines Texterkennungsmoduls (56) des Kommunikationsnetzwerkes (100) zu erkennen;
- Informationen über die sprachlichen Elemente (101) der Notiz (55) von dem mobilen Kommunikationsgerät (5) zu dem Zentralserver (300) über eine erste Kommunikationsverbindung zwischen dem mobilen Kommunikationsgerät (5) und dem Zentralserver (300) zu übertragen;
- einen Teil der sprachlichen Elemente des Zentralservers (300) in Abhängigkeit von einer jeweiligen Ähnlichkeit zwischen den jeweiligen sprachlichen Elementen (1, 2, 3, 4) des Zentralservers (300) und den sprachlichen Elementen (101) der Notiz (55) mithilfe eines künstlichen Intelligenzmoduls (KI-Modul (90)) des Kommunikationsnetzwerkes (100) unter Verwendung der jeweiligen numerischen Werte auszuwählen, wobei der ausgewählte Teil der sprachlichen Elemente eine größere Ähnlichkeit zu den sprachlichen Elementen (101) der Notiz (55) als die übrigen sprachlichen Elemente des Zentralservers (300) aufweist;
- zumindest einen Server (201) der Server (200) auszuwählen, wobei dem ausgewählten Server (201) zumindest der ausgewählte Teil der sprachlichen Elemente des Zentralservers (300) zugeordnet ist;
- eine Ausführung zumindest eines Befehls (71) der Befehle, die auf dem ausgewählten Server (201) ausführbar sind, über eine zweite Kommunikationsverbindung zwischen dem zumindest einen ausgewählten Server (201) und dem Zentralserver (300) in Abhängigkeit des ausgewählten Teils der sprachlichen Elemente zu initiieren, wobei der Befehl (71) auf dem ausgewählten Server (201) ausführbar ist.

13. Kommunikationsnetzwerk (100) nach Anspruch 12, wobei das Kommunikationsnetzwerk (100) ausgebildet und eingerichtet ist:
- jeweilige Vektoren (2010, 2020, 2030, 2040) jeweils in Abhängigkeit der jeweiligen sprachlichen Elemente (1, 2, 3, 4) des Zentralservers (300) zu erzeugen, wobei die jeweiligen numerischen Werte, die den jeweiligen sprachlichen Elementen (1, 2, 3, 4) des Zentralservers (300) zugeordnet sind, in Form von Einträgen des jeweiligen Vektors (2010, 2020, 2030, 2040) ausgebildet sind und der jeweilige Vektor (2010, 2020, 2030, 2040) die jeweiligen sprachlichen Elemente des Zentralservers (300) in einem ersten Vektorraum repräsentiert;
- einen Vergleichsvektor (2050) in Abhängigkeit von den sprachlichen Elementen (101) der Notiz (55) zu erzeugen, wobei der Vergleichsvektor (2050) die sprachlichen Elemente (101) der Notiz (55) in dem ersten Vektorraum repräsentiert;
- ein jeweiliges Ähnlichkeitsmaß für den jeweiligen Vektor (2010, 2020, 2030, 2040) zu bestimmen, das jeweils ein Maß für eine Ähnlichkeit zwischen dem jeweiligen Vektor (2010, 2020, 2030, 2040) und dem Vergleichsvektor (2050) angibt;
- einen nächsten Vektor als denjenigen der Vektoren zu bestimmen, der dem Vergleichsvektor (2050) unter Berücksichtigung der Ähnlichkeitsmaße am ähnlichsten ist;
- den Server (201) anhand des nächsten Vektors auszuwählen, wobei die sprachlichen Elemente, in Abhängigkeit derer der nächste Vektor erzeugt ist, dem ausgewählten Server (201) zugeordnet sind.

14. Computerprogrammprodukt (96), umfassend ein Programm (94), das, wenn es von einem oder mehreren Prozessoren ausgeführt wird, den Prozessor oder die Prozessoren veranlasst, ein Verfahren nach einem der Ansprüche 1 bis 11 durchzuführen.
